(19) Europäisches Patentamt
European Patent Office
Office européen des brevets

(11) Veröffentlichungsnummer: **0 045 488**
**B1**

# (12) EUROPÄISCHE PATENTSCHRIFT

(45) Veröffentlichungstag der Patentschrift: **19.06.85**

(51) Int. Cl.[4]: **C 09 B 62/503,** D 06 M 13/26

(21) Anmeldenummer: **81105986.4**

(22) Anmeldetag: **30.07.81**

(54) **Wasserlösliche, faserreaktive Verbindungen und ihre Verwendung zur Textilveredlung sowie neue beta-Chloräthylsulfonylmethyl-benzoesäurehalogenide und deren Verwendung als faserreaktive Anker.**

(30) Priorität: **01.08.80 DE 3029383**

(43) Veröffentlichungstag der Anmeldung: **10.02.82 Patentblatt 82/6**

(45) Bekanntmachung des Hinweises auf die Patenterteilung: **19.06.85 Patentblatt 85/25**

(84) Benannte Vertragsstaaten: **CH DE FR GB IT LI**

(56) Entgegenhaltungen:
**DE - A - 1 444 611**
**FR - A - 2 019 394**

(73) Patentinhaber: **HOECHST AKTIENGESELLSCHAFT, Postfach 80 03 20, D-6230 Frankfurt am Main 80 (DE)**

(72) Erfinder: **Schläfer, Ludwig, Dr., Königsberger Strasse 40, D-6233 Kelkheim (Taunus) (DE)**
Erfinder: **Hähnle, Reinhard, Dr., Kastanienweg 7A, D-6240 Königstein/Taunus (DE)**

**EP 0 045 488 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Beschreibung

Die Erfindung liegt auf dem technischen Gebiet der Veredlung von Fasermaterialien unter Anwendung von faserreaktiven Verbindungen, insbesondere Farbstoffen; diese neuen faserreaktiven Verbindungen beruhen auf einem neuen faserreaktiven Anker, der ebenfalls Gegenstand der vorliegenden Erfindung ist.

Faserreaktive Verbindungen, vorwiegend Farbstoffe, so auch solche, die einen β-Chloräthylsulfonyl-alkyl-Rest als faserreaktiven Anker besitzen, sind in der Literatur beschrieben. Diese bekannten Verbindungen genügen nicht in allen Fällen den Anforderungen der heutigen Technik; so ist in vielen Fällen ihr Fixiergrad auf dem Fasermaterial nicht zufriedenstellend oder die mit ihnen veredelten Cellulosefasermaterialien zeigen gewisse Mängel in den Echtheiten. Insbesondere sind die aus der Britischen Patentschrift 917 104 bekannten faserreaktiven Farbstoffe mit dem erheblichen Mangel versehen, daß ihre Herstellung technisch ausgeschlossen erscheint, da die bei ihrer Synthese notwendige Chlormethylierung mit der Bildung des hochgiftigen Dichlordimethyläthers als Nebenprodukt einhergeht.

Darüber hinaus zeigen sich bei denjenigen Farbstoffen, die die faserreaktive β-Chloräthylsulfonyl-Gruppe direkt an den Benzolkern eines Benzoylamino-Restes gebunden enthalten, wie bei den in der deutschen Offenlegungsschrift 1 444 611 beschriebenen Farbstoffen, Nachteile beispielsweise bei der Anwendung in üblichen Druckverfahren. Einerseits ist auch bei diesen bekannten Farbstoffen der Fixiergrad nicht ausreichend gut, so daß sie eine geringe Farbstärke aufweisen, zum anderen zeigen sich bei Einwirkung von Heißdampf über einen längeren Zeitraum zu deren Fixierung auf der Faser Farbtiefenverluste, die offenbar durch Ablösung des Farbstoffmoleküls von der Faser bewirkt werden.

Mit der vorliegenden Erfindung werden neue Verbindungen, insbesondere Farbstoffe, zur Verfügung gestellt, die eine neue faserreaktive Gruppe besitzen und die sich nach üblichen Methoden der Anwendung von faserreaktiven Verbindungen auf solchen Fasermaterialien mit hoher Farbstärke und konstanter Farbausbeute und Nuance applizieren und ausreichend naßecht fixieren lassen. Die technische Synthese dieser neuen Verbindungen ist leicht und ökologisch problemlos durchführbar.

Die vorliegende Erfindung betrifft neue wasserlösliche Verbindungen der allgemeinen Formel (1)

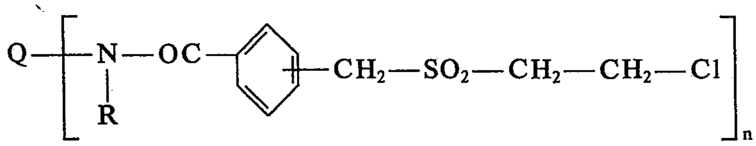

(1)

in welcher

- Q der Rest einer wasserlöslichen organischen Verbindung ist, die faserveredelnde Eigenschaften besitzt, wie vorzugsweise der Rest eines wasserlöslichen Farbstoffmoleküls oder beispielsweise der Rest einer wasserlöslichen Verbindung, die Fasermaterial optisch aufzuhellen oder mottensicher zu machen oder ihm wasserabweisende Eigenschaften oder einen weichen Griff oder eine erhöhte Anfärbbarkeit oder eine gute Knitterfestigkeit oder gute Flammfestigkeit zu verleihen vermag, wobei Q wasserlöslichmachende Gruppen, vorzugsweise 1 bis 8 wasserlöslichmachende Gruppen, wie Carbonsäuregruppen und insbesondere Sulfonsäuregruppen, enthält,
- R ein Wasserstoffatom oder eine Alkylgruppe, insbesondere niedere Alkylgruppe, ist und
- n für die Zahl 1 oder 2, vorzugsweise 1, steht.

Die obengenannten neuen Verbindungen der allgemeinen Formel (1) liegen in Form ihrer freien Säure, bevorzugt jedoch in Form ihrer Salze, insbesondere neutralen Salze, wie beispielsweise ihrer Alkalimetall- oder Erdalkalimetallsalze, so beispielsweise der Natrium-, Kalium- oder Calciumsalze, vor und finden bevorzugt in Form dieser Salze ihre Verwendung zur Applikation auf und zur Veredlung von Fasermaterialien.

Die Angaben »niedere« bedeutet hier wie im folgenden, daß der in der Gruppe enthaltene Alkyl- oder Alkylenrest oder Alkenylrest bevorzugt aus 1 bis 4 C-Atomen besteht.

Die vorliegende Erfindung betrifft vorzugsweise Verbindungen der allgemeinen Formel (1), in welcher Q ein wasserlöslicher organischer Farbstoffrest ist, der vorzugsweise 1 bis 8 wasserlöslich-machende Gruppen enthält. Die Farbstoffe können den verschiedensten organischen Verbindungsklassen angehören; so kann Q für den Rest eines organischen Farbstoffes aus der Anthrachinon-, Formazan-, Cyanin-, Phthalocyanin, Benzoxanthen-, Benzothioxanthen-, Xanthen, Triphenylmethan-, Azin-, Phenazin-, Oxazin-, Phenoxazin-, Thiazin-, Chinolin-, Indolphenazin-, Azomethin, Styryl-, Nitro- und Naphthalimid-Reihe stehen, wobei die hierzu geeigneten Farbstoffchromophore noch Schwermetalle, wie beispielsweise Kupfer-, Nickel-, Kobalt- und Chrom-Ionen, komplex gebunden enthalten können; bevorzugt steht der Rest Q jedoch für den Rest eines Mono-, Dis- oder Polyazofarbstoffes, wie eines Trisazo- oder Tetrakisazofarbstoffes, und deren Schwermetallkomplexe, wobei dieser Farbstoffrest Q jeweils vorzugsweise 1 bis 8 wasserlöslichmachende Gruppen enthält.

Die neuen Verbindungen der allgemeinen Formel (1) werden in erfindungsgemäßer Weise hergestellt,

indem man eine organische Verbindung der allgemeinen Formel (2)

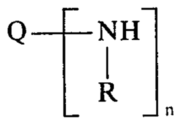

(2)

in welcher Q, R und n die obengenannten Bedeutungen haben, mit einer Verbindung der allgemeinen Formel (3)

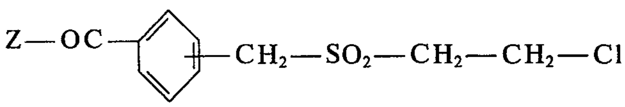

(3)

in welcher Z für ein Halogenatom, vorzugsweise ein Chloratom, steht, umsetzt, oder indem man organische Vorprodukte für die Synthese des Molekülrestes der Formel Q in üblicher und hierfür geeigneter Weise miteinander umsetzt, wobei diese Vorprodukte so ausgewählt sind, daß mindestens eines davon eine oder mehrere wasserlöslichmachende Gruppen und mindestens eine Gruppe der Formel (4)

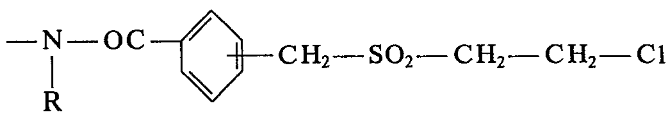

(4)

mit R der obengenannten Bedeutung enthält und daß man dabei wiederum diese Vorprodukte so auswählt, daß eine Verbindung der Formel (1) erhalten wird, in welcher n für die Zahl 1 oder 2 steht und der Rest Q 1 bis 8 wasserlöslichmachende Gruppen enthält.

Vorprodukte, die erfindungsgemäß zur Herstellung der Verbindungen der allgemeinen Formel (1) eingesetzt werden können, sind beispielsweise für die Herstellung von Azofarbstoffen entsprechende Diazokomponenten und Kupplungskomponenten, von denen eine mindestens eine wasserlöslichmachende Gruppe bzw. eine faserreaktive Gruppe der Formel (4) enthält.

Die vorliegende Erfindung betrifft weiterhin die neuen Verbindungen der Formel (3) mit der obengenannten Bedeutung sowie deren Verwendung als faserreaktive Anker in Verbindungen mit faserveredelnden Eigenschaften, insbesondere für die Herstellung von faserreaktiven organischen Farbstoffen.

Die neuen Verbindungen der Formel (3) können in erfindungsgemäßer Weise hergestellt werden, indem man eine Verbindung der allgemeinen Formel (5)

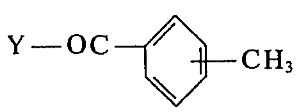

(5)

in welcher Y für die Hydroxygruppe, eine niedere Alkoxygruppe oder ein Halogenatom, vorzugsweise Chloratom, steht, bei einer Temperatur zwischen 80 und 130°C, vorzugsweise zwischen 100 und 110°C, gegebenenfalls in einem für die Seitenkettenchlorierung üblichen und geeigneten organischen Lösemittel, wie einem aromatischen Halogenkohlenwasserstoff, beispielsweise Chlorbenzol und Dichlorbenzol, in eine Verbindung der allgemeinen Formel (6)

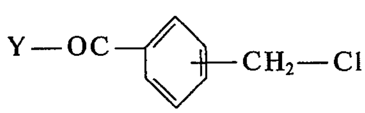

(6)

mit Y der obengenannten Bedeutung überführt, diese in wäßriger Lösung, vorzugsweise bei einer Temperatur zwischen 50 und 70°C und einem pH-Wert zwischen 7 und 9, mit 2-Mercapto-äthanol zur Thioätherverbindung der allgemeinen Formel (7a)

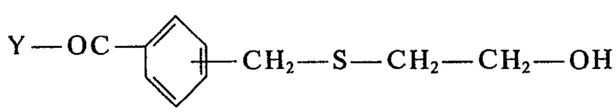

(7a)

in welcher Y die Hydroxygruppe oder eine niedere Alkoxygruppe bedeutet, umsetzt, diese sodann — im Falle jedoch, daß Y für eine niedere Alkoxygruppe steht, nach vorheriger alkalischer Verseifung bei einem pH-Wert von 9 bis 12 zur Verbindung mit Y gleich Hydroxy — mit einem Oxidationsmittel, beispielsweise 20—40%igem wäßrigem Wasserstoffsuperoxid, in die β-Hydroxyäthylsulfonylmethyl-Verbindung der allgemeinen Formel (7b)

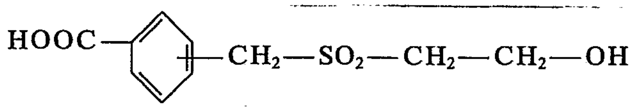

(7b)

überführt und diese, gegebenenfalls nach Zwischenisolierung, beispielsweise durch Ausfällung mit einer wäßrigen Mineralsäure, wie Salzsäure, anschließend mit einem hierfür üblichen und geeigneten Chlorierungsmittel, wie z. B. Thionylchlorid, in einem hierfür üblichen und geeigneten organischen Lösemittel zur β-Chloräthylsulfonyl-Verbindung der allgemeinen Formel (3) umsetzt.

Die Reaktion der Seitenkettenchlorierung zur Verbindung der allgemeinen Formel (6) kann analog bekannten Verfahrensweisen erfolgen, wie sie beispielsweise in Houben-Weyl, Methoden der organischen Chemie, 4. Auflage, Band V/3, Seite 735, beschrieben sind. Die Umsetzung der Verbindung der Formel (6) mit Mercapto-äthanol zur Thioätherverbindung der Formel (7a) läßt sich ebenso analog bekannten Verfahrensweisen, wie sie beispielsweise in Houben-Weyl, 4. Auflage, Band IX, Seite 105, beschrieben sind, durchführen. Ebenso analog bekannten Verfahrensweisen kann man bei der Oxidation des Schwefels in der Thioätherverbindung der Formel (7a) zur Sulfonylgruppe gemäß der Verbindung der Formel (7b) verfahren; bevorzugt ist als solches Oxidationsmittel Wasserstoffperoxid geeignet, und die Oxidation kann analog den Verfahrensweisen in Houben-Weyl, 4. Auflage, Band IX, Seite 227, erfolgen. Auch die Überführung der β-Hydroxyäthylsulfonylgruppe in die β-Chloräthylsulfonylgruppe mit gleichzeitiger Umwandlung der Carboxylgruppe in den Carbonsäurechlorid-Rest wird in üblicher und bekannter Weise durchgeführt; solche Umsetzungen sind beispielsweise aus Houben-Weyl, 4. Auflage, Band V/3, Seiten 862, 899 und 905, bekannt. Als Chlorierungsmittel dient hierzu bevorzugt Thionylchlorid.

In den erfindungsgemäßen Verbindungen der Formeln (1) und (3) steht die β-Chloräthylsulfonylmethyl-Gruppe in 2-, bevorzugt in 3- oder 4-Stellung zur Carbonsäureamid- bzw. Carbonsäurehalogenidgruppe.

Erfindungsgemäße Verbindungen der Formeln (3) sind somit die Verbindungen der Formeln (3a), (3b) und (3c)

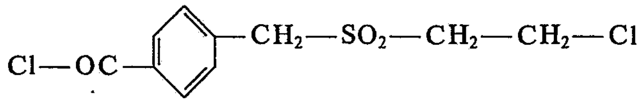

(3a)

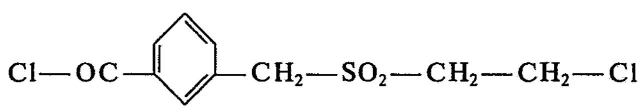

(3b)

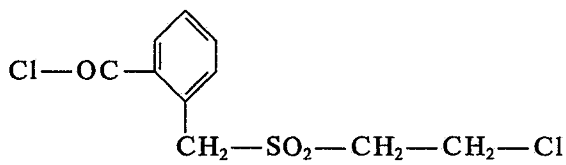

(3c)

hiervon bevorzugt die der Formeln (3a) und (3b).

Die Vorprodukte für den Molekülrest der Formel Q, die eine oder mehrere faserreaktive Gruppen der Formel (4) enthalten, lassen sich in ähnlicher Weise, wie die Verbindungen der allgemeinen Formel (1) herstellen, indem man von Verbindungen der allgemeinen Formel (8)

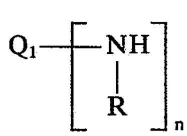

(8)

ausgeht, in welcher R und n die obengenannten Bedeutungen haben und $Q_1$ für den Rest des entsprechenden Vorproduktes mit gegebenenfalls einer oder mehreren wasserlöslichmachenden Gruppen steht (so beispielsweise, falls Q der Rest eines Monoazofarbstoffes ist, $Q_1$ für den Rest einer Diazo- oder Kupplungskomponente steht), und diese Aminoverbindung der Formel (8) mit einer Verbindung der Formel (3) umsetzt. Geht man von Verbindungen der Formel (8) aus, in welcher $Q_1$ eine primäre Aminogruppe enthält, beispielsweise von einer Diaminobenzol-sulfonsäure, die als Diazokomponente oder auch als Kupplungskomponente geeignet ist, so erfolgt die Umsetzung mit dem Carbonsäurehalogenid der Formel (3) nur in einer Stufe zur Monoaminoacylamino-Verbindung.

Erfindungsgemäße Vorprodukte der allgemeinen Formel (9)

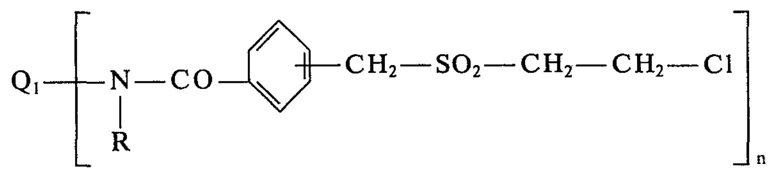

(9)

mit $Q_1$, R, und n der obengenannten Bedeutung,
die sich insbesondere als Diazokomponenten oder Kupplungskomponenten für die Herstellung von Azofarbstoffen eignen, sind insbesondere solche Verbindungen, in welchen $Q_1$ für einen Benzol- oder Naphthalinrest steht, der durch eine primäre Aminogruppe substituiert ist und gegebenenfalls durch 1, 2 oder 3 Sulfonsäuregruppen und/oder 1, 2 oder 3 weitere Substituenten substituiert ist, die der Gruppe niederes Alkyl, niederes Alkoxy, Carboxy, Hydroxy, Acetylamino, Benzoylamino, Phenylamino, durch Substituenten aus der Gruppe niederes Alkyl, niederes Alkoxy, Sulfo, Carboxy, Acetylamino, Benzoylamino und Halogen, wie Chlor, substituiertes Phenylamino, Carbonsäureamid, durch niederes Alkyl und/oder Phenyl mono- oder disubstituiertes Carbonsäureamid (wobei der Phenylrest noch durch Substituenten aus der Gruppe niederes Alkyl, niederes Alkoxy, Sulfo, Carboxy, Chlor und Amino substituiert sein kann), Sulfonsäureamid, durch niederes Alkyl und/oder Phenyl mono- oder disubstituiertes Sulfonsäureamid (wobei der Phenylrest noch durch Substituenten aus der Gruppe niederes Alkyl, niederes Alkoxy, Sulfo, Carboxy, Chlor und Amino substituiert sein kann), Cyan, Nitro, Halogen, wie Chlor, Fluor und Brom, und Trifluormethyl angehören.

Bevorzugt sind Verbindungen der allgemeinen Formel (9) als Diazokomponenten, in welcher $Q_1$ eine primäre Aminogruppe besitzt und einen Benzolkern darstellt, der durch 1 oder 2 Substituenten substituiert sein kann, die der Gruppe niederes Alkyl, niederes Alkoxy, Chlor, Brom, Sulfo, Carboxy, Acetylamino, Benzoylamino, durch Substituenten aus der Gruppe Methoxy, Methyl, Chlor und Sulfo substituiertes Benzoylamino, Phenylamino, durch Substituenten aus der Gruppe Methoxy, Methyl und Sulfo substituiertes Phenylamino, Hydroxy, Nitro, Carbonsäureamid, Sulfonsäureamid, Monoalkylcarbonsäureamid, Dialkylcarbonsäureamid, Monoalkylsulfonsäureamid, Dialkylsulfonsäureamid, N-Phenylcarbonsäureamid, N-Phenylsulfonsäureamid, N-Alkyl-N-phenyl-carbonsäureamid, N-Alkyl-N-phenylsulfonsäureamid (wobei die Alkylreste in den Amiden jeweils niedere Alkylreste sind und die Phenylreste noch durch Substituenten aus der Gruppe Sulfo, niederes Alkyl, niederes Alkoxy, Chlor und Amino substituiert sein können) und niederes Dialkylcarbonsäureamid, in welcher der eine Alkylrest durch einen Phenylrest substituiert ist, der wiederum Substituenten aus der Gruppe Sulfo, niederes Alkyl, niederes Alkoxy, Chlor und Amino substituiert sein kann, angehören, und R die obengenannte Bedeutung hat und n für die Zahl 1 steht.

Verbindungen der allgemeinen Formel (9), die als Diazokomponenten geeignet sind, sind weiterhin solche, in welchen $Q_1$ für den Naphthalinkern steht, der durch eine Aminogruppe substituiert ist und durch 1 oder 2 Sulfonsäuregruppen und durch 1 oder 2 weitere Substituenten substituiert sein kann, die der Gruppe Hydroxy, niederes Alkyl, niederes Alkoxy, Nitro, Chlor und Carboxy angehören, und R die obengenannte Bedeutung hat und n für die Zahl 1 oder 2, bevorzugt 1 steht.

Verbindungen der allgemeinen Formel (9) die als Kupplungskomponenten für die Herstellung von Azofarbstoffen geeignet sind, sind beispielsweise solche, in denen $Q_1$ für den Rest des Naphthols steht, der durch 1, 2 oder 3 Sulfogruppen und durch eine weitere Aminogruppe, Phenylamino oder niedere Alkylaminogruppe substituiert sein kann, des weiteren solche, in denen $Q_1$ für den Benzolkern steht, der durch eine Hydroxygruppe und/oder eine Aminogruppe oder eine Phenylamino- oder niedere Alkylaminogruppe substituiert ist und durch eine niedere Alkyl- oder niedere Alkoxygruppe oder ein Chloratom substituiert sein kann. Verbindungen der allgemeinen Formel (9), die als Kupplungskomponenten für die Herstellung von Azofarbstoffen geeignet sind, sind weiterhin beispielsweise solche, in welchen $Q_1$ für den Naphthalinkern steht, der durch eine Aminogruppe substituiert ist und durch 1, 2 oder 3 Sulfogruppen substituiert sein kann, des weiteren der Rest des Pyrazol-5-ons oder Pyrazol-3-ons oder des 5-Amino-pyrazols oder 3-Aminopyrazols, wobei diese Pyrazolreste, so die des Pyrazol-5-ons oder des 5-Aminopyrazols jeweils in 3-Stellung, durch niederes Alkyl, Phenyl, Chlorphenyl, Methylphenyl, Carboxy oder niederes Carbalkoxy und jeweils in 1-Stellung durch einen Phenyl- oder Naphthylrest substituiert sind, wobei diese Phenyl- und Naphthylreste die faserreaktive(n) Gruppe(n) gebunden enthalten und weiterhin durch 1, 2 oder 3 Substituenten aus der Gruppe niederes Alkyl, niederes Alkoxy, Chlor, Brom, Trifluormethyl, Sulfo, Carboxy, Acetylamino, Benzoylamino, Amino und Cyan substituiert sein können. Weiterhin ist beispielsweise $Q_1$ der Rest des Acetoacetyl-anilid- oder -naphthylamids, in welchen die aromatischen Kerne die faserreaktive(n) Gruppe(n) der Formel (4) gebunden enthalten und diese aromatischen Kerne noch durch 1, 2 oder 3 Substituenten substituiert sein können, die der Gruppe niederes Alkyl, niederes Alkoxy, Chlor, Brom, Sulfo, Carboxy, Acetylamino, Benzoylamino, Nitro und Cyan angehören, ferner alle weiteren organischen Verbindungen, die mit aromatischen Diazoniumverbindungen zu Azoverbindungen kuppeln, wie z. B. Malonsäure und ihre Derivate, wie Malonsäurealkylester und Malodinitril, und Barbitursäure und ihre Derivate.

Verbindungen der allgemeinen Formel (9), die bevorzugt als Kupplungskomponenten eingesetzt werden können, sind beispielsweise Verbindungen der allgemeinen Formeln (9a), (9b), (9c), (9d), (9e), (9f), (9g), (9h) oder (9j)

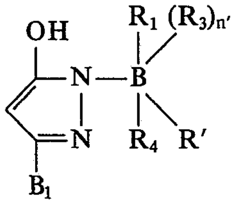

(9a)

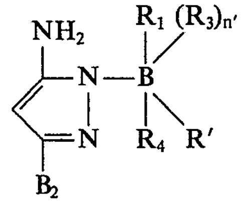

(9b)

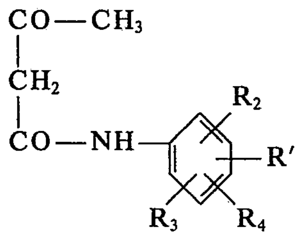

(9c)

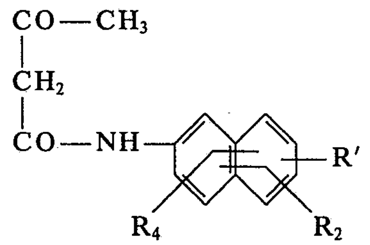

(9d)

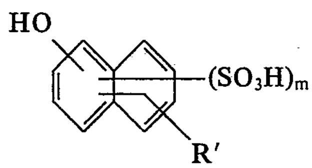

(9e)

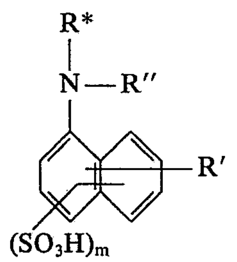

(9f)

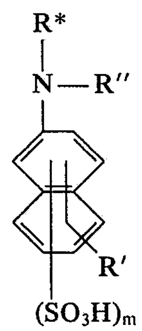

(9g)

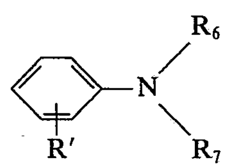

(9h)

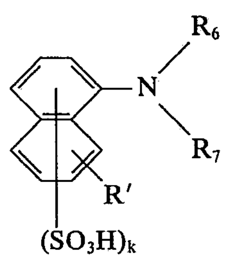

(9j)

In diesen Formeln bedeuten:

R' ist der faserreaktive Acylamidrest der allgemeinen Formel (4);

$R_1$ ist ein Wasserstoffatom, eine niedere Alkylgruppe, wie insbesondere eine Methyl- oder Äthylgruppe, eine niedere Alkoxygruppe, wie insbesondere eine Methoxy- oder Äthoxygruppe, ein Chlor- oder Bromatom, eine niedere Alkanoylaminogruppe, wie eine Acetylaminogruppe, oder eine Sulfonsäuregruppe;

$R_2$ ist ein Wasserstoffatom, eine niedere Alkylgruppe, wie insbesondere eine Methyl- oder Äthylgruppe, eine niedere Alkoxygruppe, wie insbesondere eine Methoxy- oder Äthoxygruppe, ein

Chlor- oder Bromatom oder eine Sulfonsäuregruppe;

$R_3$ ist ein Wasserstoffatom, eine niedere Alkylgruppe, wie insbesondere die Methyl- oder Äthylgruppe, eine niedere Alkoxygruppe, wie insbesondere die Methoxy- oder Äthoxygruppe, ein Chlor- oder Bromatom;

$R_4$ ist ein Wasserstoffatom, eine niedere Alkylgruppe, wie insbesondere die Methyl- oder Äthylgruppe, eine niedere Alkoxygruppe, wie insbesondere die Methoxy- oder Äthoxygruppe, oder die Sulfonsäuregruppe,
wobei $R_1$, $R_2$, $R_3$ und $R_4$ gleich oder verschieden voneinander sein können;

n' ist die Zahl 1 oder 2;

B ist ein Benzol- oder Naphthalinkern;

$B_1$ ist eine niedere Alkylgruppe, bevorzugt Methylgruppe, eine Carboxygruppe, eine Carbomethoxy- oder Carbäthoxygruppe oder der Phenylrest;

$B_2$ ist eine niedere Alkylgruppe, bevorzugt die Methylgruppe, eine Carbomethoxy- oder Carbäthoxygruppe, eine Carbonamidgruppe oder ein Phenylrest, der durch 1 oder 2 Substituenten aus der Gruppe niederes Alkyl, niederes Alkoxy, Chlor, Brom und Sulfo substituiert sein kann,
wobei $R_1$, $R_3$, $R_4$ und $B_1$ bzw. $B_2$ gleich oder verschieden voneinander sein können;

R* ist ein Wasserstoffatom oder ein niederer Alkylrest;

R" ist ein Wasserstoffatom, ein niederer Alkylrest oder ein Phenylrest, der durch 1 oder 2 Substituenten aus der Gruppe niederes Alkyl, niederes Alkoxy, Chlor, Brom und Sulfo substituiert sein kann,
wobei R* und R" gleich oder verschieden voneinander sein können;

k ist die Zahl Null oder 1;

m steht für die Zahl Null, 1 oder 2;

$R_6$ ist ein Wasserstoffatom oder eine niedere Alkylgruppe, die durch eine Hydroxy-, Cyan-, Carboxy-, Sulfo-, Sulfato-, Carbomethoxy-, Carbäthoxy- oder Acetoxygruppe substituiert sein kann;

$R_7$ ist ein Wasserstoffatom oder eine niedere Alkylgruppe, die durch eine Hydroxy-, Cyan-, Carboxy-, Sulfo-, Sulfato-, Carbomethoxy, Carbäthoxy- oder Acetoxygruppe oder einen Phenylrest substituiert sein kann, oder ist ein Phenylrest, der durch niederes Alkyl, niederes Alkoxy, Chlor und/oder Sulfo substituiert sein kann,
wobei $R_1$, $R_6$ und $R_7$ gleich oder verschieden voneinander sein können.

Bevorzugte Verbindungen der allgemeinen Formel (9), die als Diazokomponenten zur Herstellung von faserreaktiven Azofarbstoffen Verwendung finden können, sind beispielsweise die Verbindungen der Formel (9k), (9m), (9n) und (9p)

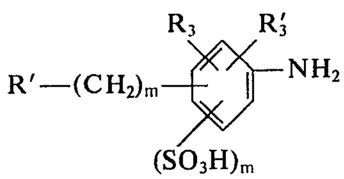

(9k)

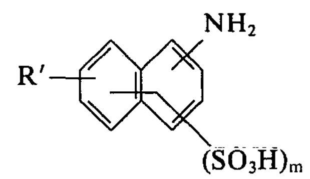

(9m)

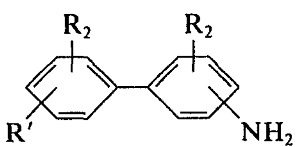

(9n)

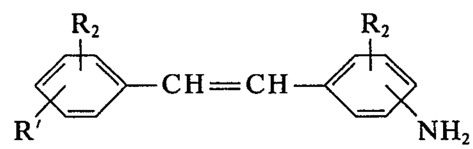

(9p)

In diesen Formeln besitzen die Formelreste

R', $R_2$, $R_3$ und m die obengenannten Bedeutungen, wobei die Indices m gleich oder verschieden voneinander sein können, und

$R'_3$ ist ein Wasserstoffatom, eine niedere Alkylgruppe, wie insbesondere die Methyl- oder Äthylgruppe, eine niedere Alkoxygruppe, wie insbesondere die Methoxy- oder Äthoxygruppe, ein Chlor- oder Bromatom oder eine Hydroxygruppe,
wobei $R_3$ und $R'_3$ gleich oder verschieden voneinander sein können.

Verbindungen der allgemeinen Formeln (9) sind beispielsweise:

1,3-Diaminobenzol, 1,3-Diaminobenzol-4-sulfonsäure, 1,4-Diaminobenzol, 1,4-Diaminobenzol-2-sulfonsäure, 1,4-Diaminobenzol-2,5-disulfonsäure,

1,4-Diamino-2-methyl-benzol, 1,4-Diamino-2-methoxy-benzol, 1,3-Diamino-4-methyl-benzol, 1,4-Diaminobenzol-2,6-disulfonsäure, 1-Amino-8-naphthol-3,6-disulfonsäure, 1-Amino-8-naphthol-4,6-disulfonsäure, 2-Amino-8-naphthol-6-sulfonsäure, 2-Amino-8-naphthol-4,6-disulfonsäure, 2-Amino-5-naphthol-7-sulfonsäure, 1-Amino-5-naphthol-7-sulfonsäure, 1-Amino-8-naphthol-4-sulfonsäure oder -5-sulfonsäure oder -6-sulfonsäure, 2-Aminophenol-4- oder -5-sulfonsäure, 3-Aminophenol-6-sulfonsäure, 1,6-Diamino-2-naphthol-4-sulfonsäure, 1,6-Diamino-naphthalin-4-sulfonsäure, 2,6-Diamino-4,8-disulfonaphthalin, 2,6-Diamino-1-naphthol-4,8-disulfonsäure, 1,3-Diaminobenzol-5-sulfonsäure, 1,3-Diamino-5-methylbenzol, 2,6-Diamino-phenol-4-sulfonsäure, 1-(3'- oder -4'-Aminophenyl)-3-methyl-5-pyrazolon, 1-(3'- oder -4'-Aminophenyl)-pyrazolon(5)-3-carbonsäure oder deren niedere Alkylester, wie Methyl- oder Äthylester, 1-(4'-Amino-2'-sulfo-phenyl)-pyrazolon(5)-3-carbonsäure oder deren Methyl- oder Äthylester, 1-(5'-Amino-2'-sulfophenyl)-pyrazolon(5)-3-carbonsäure oder deren Methyl- oder Äthylester, 1-(2'-Methyl-5'-amino-3'-sulfo-phenyl)-pyrazolon(5)-3-carbonsäure oder deren Methyl- oder Äthylester, 4-Acetoacetylamino-anilin-2-sulfonsäure, 4-($\omega$-N-Methylamino-methyl)-anilin-2-sulfonsäure oder 3-($\omega$-N-Methylamino-methyl)-anilin-6-sulfonsäure,

in denen allen entsprechend Formel (9) jeweils die eine primäre oder sekundäre Aminogruppe oder eine dieser beiden Aminogruppen durch den faserreaktiven Acylrest der Verbindung der allgemeinen Formel (3) substituiert ist.

Diese Diazokomponenten und Kupplungskomponenten der Formel (9) können zur Herstellung der erfindungsgemäßen Farbstoffe (1) in üblicher Weise mit aromatischen Aminen, beispielsweise solchen, die zur Herstellung von Azofarbstoffen in der Literatur allseits bekannt sind, und Kupplungskomponenten, beispielsweise solchen, die in der Literatur allgemein zur Herstellung von Azofarbstoffen bekannt sind, umgesetzt werden. Hierbei kann man nach den üblichen Verfahrensweisen zu Monoazofarbstoffen, Disazofarbstoffen oder Polyazofarbstoffen, beispielsweise Trisazofarbstoffen oder Tetrakisazofarbstoffen, gelangen. Die Azofarbstoffe können nachträglich durch übliche Methoden der Metallisierung (s. Houben-Weyl, »Methoden der organischen Chemie«, 4. Ausgabe [1965], Band 10/3, Seiten 452 ff; Angewandte Chemie 70, 232–238 [1958]; Angewandte Chemie 64, 397 [1952]) in die entsprechenden Schwermetallkomplexfarbstoffe, wie die Kupfer-, Kobalt- oder Chromkomplexfarbstoffe, übergeführt werden.

Von den erfindungsgemäßen Verbindungen der Formel (1) sind insbesondere bevorzugt Monoazoverbindungen und Disazoverbindungen, die aus den obengenannten und/oder später genannten Diazo- und Kupplungskomponenten der allgemeinen Formeln (9) oder (9) und (10) aufgebaut sind.

Aromatische Amine ohne faserreaktiven Rest der Formel (4), die als Diazokomponenten eingesetzt werden können, sind beispielsweise die Amine der Formeln (10a), (10b), (10c) und (10d) und die Diamine der Formel (10e):

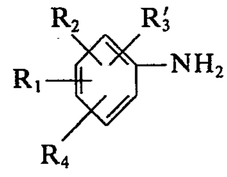

(10a)

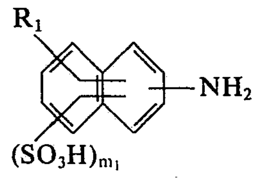

(10b)

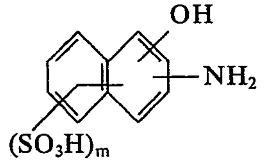

(10c)

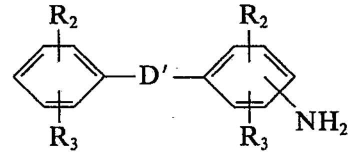

(10d)

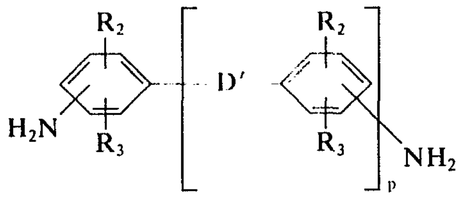

(10e)

worin $R_1$, $R_2$, $R_3$, $R_4$ und m die obengenannten Bedeutungen haben und D' eine direkte Bindung ist oder für die Gruppe

$$—NHCO— \quad —CO—NH— \quad —CO— \quad —SO_2— \quad —CH{=}CH—$$

$$—N{=}N— \quad —O— \quad \text{oder} \quad —CH_2—$$

steht und $m_1$ die Zahl Null, 1, 2 oder 3 und p die Zahl Null oder 1 bedeuten.

Kupplungskomponenten ohne faserreaktiven Rest der Formel (4), die zur Herstellung der erfindungsgemäßen Farbstoffe eingesetzt werden können, sind beispielsweise die Verbindungen der Formeln (10f), (10g), (10h), (10i), (10j), ($10k_1$), ($10k_2$), (10m), (10n), (10p), (10q), ($10r_1$), ($10r_2$), ($10r_3$) und (10s)

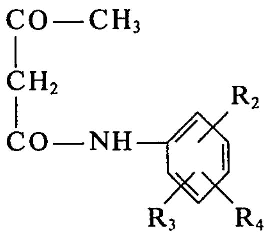

(10f)

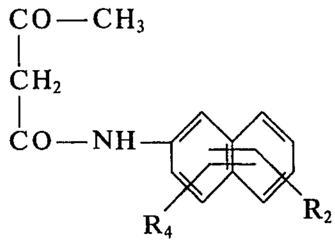

(10g)

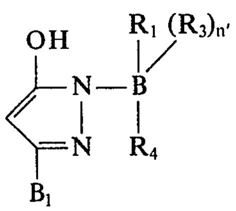

(10h)

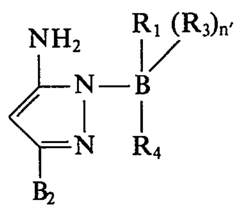

(10i)

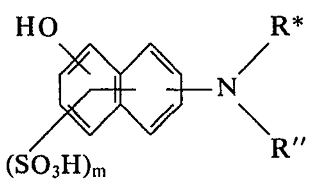

(10j)

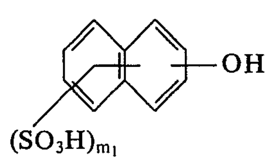

($10k_1$)

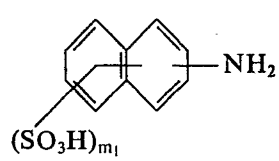

($10k_2$)

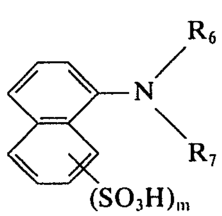

(10m)

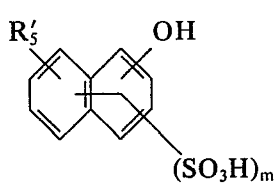

(10n)

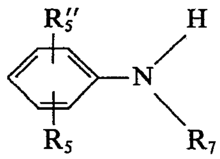

(10p)

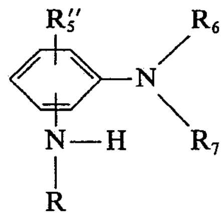

(10q)

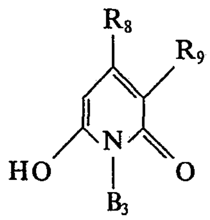

$(10r_1)$

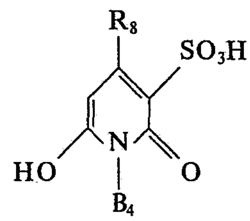

$(10r_2)$

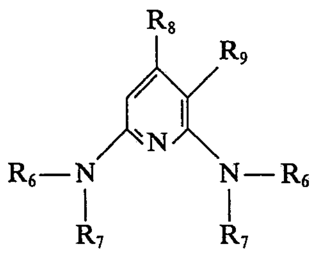

$(10r_3)$

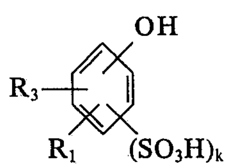

(10s)

in welchen
$R$, $R_1$, $R_2$, $R_3$, $R_4$, $R_6$, $R_7$, $R''$, $R^*$, k, m, $m_1$, n', B, $B_1$ und $B_2$ die obengenannten Bedeutungen haben,

$R_5$ ein Wasserstoffatom, eine niedere Alkylgruppe, wie eine Methyl- oder Äthylgruppe, eine niedere Alkoxygruppe, wie eine Methoxy- oder Äthoxygruppe, ein Chlor- oder Bromatom ist,

$R_5''$ ein Wasserstoffatom, eine niedere Alkylgruppe, wie Methyl- oder Äthylgruppe, eine niedere Alkoxygruppe, wie Methoxy- oder Äthoxygruppe, ein Chlor- oder Bromatom, eine niedere Alkanoylaminogruppe, wie Acetylaminogruppe, oder eine Amino-, Ureido-, niedere Alkylsulfonylamino-, niedere Alkylamino- oder niedere Dialkylaminogruppe darstellt,

$R_8$ ein Wasserstoffatom oder eine niedere Alkylgruppe, die Methyl- oder Äthylgruppe, oder eine durch niederes Alkoxy oder Cyan substituierte niedere Alkylgruppe ist,

$R_9$ ein Wasserstoffatom, eine niedere Alkylgruppe, wie Methylgruppe, eine niedere Sulfoalkylgruppe, wie Sulfomethylengruppe, die Cyan- oder die Carbonamidgruppe bedeutet,

$B_3$ ein Wasserstoffatom oder eine niedere Alkylgruppe, wie eine Methyl- oder Äthylgruppe, die durch Phenyl oder Sulfophenyl substituiert sein kann, bedeutet,

$B_4$ ein Wasserstoffatom, eine niedere Alkylgruppe, eine durch niederes Alkoxy, wie Methoxy, oder durch eine Acetylamino-, Benzoylamino- oder eine Cyangruppe substituierte niedere Alkylgruppe, eine niedere Alkenylgruppe, eine Cyclohexylgruppe, die Phenylgruppe oder ein durch Substituenten aus der Gruppe Carboxy, Sulfo, Benzoylamino, Acetylamino oder Chlor substituierter Phenylrest oder eine Aminogruppe ist, die durch Phenyl, niederes Alkyl, Acetyl, Benzoyl, Hydroxy oder Methoxy substituiert ist, und

$R_5'$ für die Phenylureido-, eine niedere Alkanoylamino- oder niedere Alkenoylamino-, wie Acetylamino-, Propionylamino-, Acryloylaminogruppe, oder eine Benzoylaminogruppe, die durch Chlor, Methyl, Methoxy, Nitro, Sulfo und/oder Carboxy substituiert sein kann, steht.

Verbindungen ohne faserreaktiven Rest der allgemeinen Formel (4), die zur Herstellung von erfindungsgemäßen Farbstoffen der allgemeinen Formel (1) sowohl als Diazo- als auch als Kupplungskomponenten eingesetzt werden können, so beispielsweise für die Herstellung von Dis- und Polyazofarbstoffen, sind beispielsweise Verbindungen der allgemeinen Formeln $(10t_1)$, $(10t_2)$, (10u), (10v), (10w), (10x), (10y) und (10z)

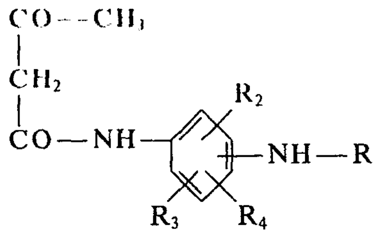 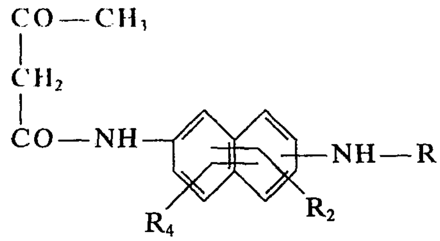

(10t$_1$) (10t$_2$)

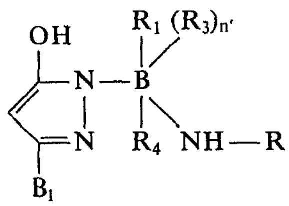 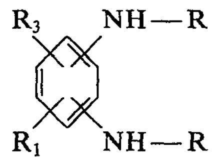

(10u) (10v)

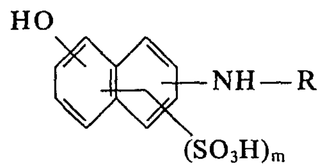 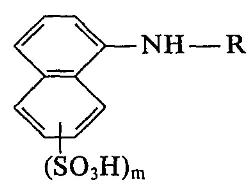

(10w) (10x)

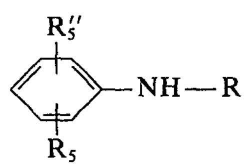 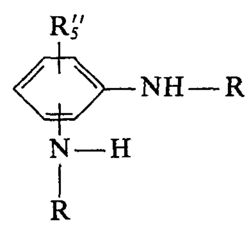

(10y) (10z)

in welchen B, $B_1$, $B_2$, R, $R_1$, $R_2$, $R_3$, $R_4$, $R_5$, $R_5''$, m und n' die obenangegebene Bedeutung haben und ein R zwingend für ein Wasserstoffatom steht, falls die Verbindung als Diazokomponente verwendet wird. Ihre Verwendung als Kupplungskomponenten ermöglicht darüberhinaus, die erhaltene Azoverbindung an der freien Aminogruppe der Kupplungskomponente mit dem faserreaktiven Säurehalogenid der allgemeinen Formel (3) umzusetzen.

Aromatische Amine ohne faserreaktive Gruppe der allgemeinen Formel (4), die zur Herstellung der erfindungsgemäßen Farbstoffe als Diazokomponenten eingesetzt werden können und beispielsweise den allgemeinen Formeln (10a), (10b), (10c) und (10d) entsprechen, sind beispielsweise:

Anilin, 2-Methoxy-anilin, 2-Äthoxy-anilin, 2-Methyl-anilin, 4-Nitro-2-amino-anisol, 4-Chlor-2-amino-anisol, 4-Methyl-anilin, 4-Methoxy-anilin, 2-Nitro-4-aminoanisol, 2-Methoxy-5-methyl-anilin, 4-Nitro-anilin, 2-Chlor-4-nitroanilin, 2,6-Dichlor-4-nitroanilin, 2-Nitro-4-methyl-anilin, 2,5-Dimethoxyanilin, 2,5-Dimethyl-anilin, 2,4-Dimethyl-anilin, 4-Butyl-anilin, 2-Cyano-4-nitroanilin, 2,5-Diäthoxy-anilin, 4-Cyano-anilin, 2-Chloranilin, 3-Chloranilin, 4-Chloranilin, 2,5-Dichloranilin, 4-Chlor-2-nitroanilin, 4-Chlor-2-methyl-anilin, 3-Chlor-2-methyl-anilin, 4-Chlor-2-aminotoluol, 4-(p'-Tolylsulfonyl)-anilin, 2-Äthoxy-1-naphthylamin, 1-Naphthylamin, 2-Naphthylamin, 4-Benzoylamino-2,5-diäthoxyanilin, 3-Amino-4-methyl-benzonitril, 4-Methylsulfonyl-anilin, 2-Trifluormethyl-anilin, 1-Trifluormethyl-3-chlor-anilin, 2-Aminobenthiazol, 2-(2'-Aminophenyl)-benzotriazol, 1-Aminoanthrachinon-3-sulfonsäure, 2,4-Dichlor-anilin-5-carbonsäure, 2-Aminobenzoesäure, 4-Amino-benzoesäure, 3-Chlor-anilin-6-carbonsäure, Anilin-2- oder -3- oder -4-sulfonsäure,

2,5-Disulfo-anilin, 2,4-Disulfo-anilin, 2-Amino-toluol-4-sulfonsäure,
2-Amino-anisol-4-sulfonsäure, 2-Amino-anisol-5-sulfonsäure,
2-Äthoxy-anilin-5-sulfonsäure, 2-Äthoxy-anilin-4-sulfonsäure,
4-Sulfo-2-amino-benzoesäure, 2,5-Dimethoxy-anilin-4-sulfonsäure,
2,4-Dimethoxyanilin-5-sulfonsäure, 2-Methoxy-5-methyl-anilin-4-sulfonsäure,
4-Amino-anisol-3-sulfonsäure, 4-Amino-toluol-3-sulfonsäure,
2-Amino-toluol-5-sulfonsäure, 2-Chlor-anilin-4-sulfonsäure,
2-Chlor-anilin-5-sulfonsäure, 2-Brom-anilin-4-sulfonsäure,
2,6-Dichlor-anilin-4-sulfonsäure, 2,6-Dimethyl-anilin-3-sulfonsäure oder -4-sulfonsäure,
2,4,6-Trimethyl-anilin-3-sulfonsäure, 4-Acetylamino-2-sulfo-anilin,
1-Aminonaphthalin-4-sulfonsäure, 2-Naphthylamin-5-sulfonsäure
oder -6- oder -8-sulfonsäure,
2-Aminonaphthalin-3,6,8-trisulfonsäure, 2-Aminonaphthalin-6,8-disulfonsäure,
2-Aminonaphthalin-1,6-disulfonsäure, 2-Aminophenol-4-sulfonsäure,
2-Aminophenol-5-sulfonsäure, 3-Aminophenol-6-sulfonsäure,
4- oder 5-Nitro-2-aminophenol, 4-Nitro-6-sulfo-2-aminophenol,
1-Hydroxy-2-aminonaphthalin-6,8- oder -4,6-disulfonsäure,
2-Aminonaphthalin-1-sulfonsäure, 2-Aminonaphthalin-1,6- oder -4,8-disulfonsäure,
6-Nitro-2-hydroxy-4-sulfo-aminonaphthalin, 6-Nitro-2-aminonaphthalin-4,8-disulfonsäure,
4-Amino-diphenylamin, 4-Amino-4'-methoxy-diphenylamin,
4-Amino-4'-methoxy-diphenylamin-3-sulfonsäure, 4-(2'-Methylphenyl-azo)-2-methylanilin,
4-Aminoazobenzol, 4'-Nitrophenylazo-1-amino-naphthalin,
4'-Amino-3'-methyl-3-nitro-benzophenon, 4-Amino-2-methyl-benzophenon,
3-Amino-2,4-dimethyl-benzophenon, 2-Amino-4'-methoxy-benzophenon,
4-Amino-benzophenon, 4-(4'-Aminophenylazo)-benzolsulfonsäure,
4-(4'-Amino-3'-methoxyphenylazo)-benzolsulfonsäure,
2-Äthoxy-1-naphthyl-amin-6-sulfonsäure.

Aromatische Diamine ohne faserreaktive Gruppe der allgemeinen Formel (4), die als Tetrazokomponenten zur Herstellung der erfindungsgemäßen Farbstoffe verwendet werden können und die beispielsweise der allgemeinen Formel (10e) entsprechen, sind beispielsweise:

1,3-Diaminobenzol, 1,3-Diaminobenzol-4-sulfonsäure, 1,4-Diaminobenzol,
1,4-Diaminobenzol-2-sulfonsäure, 1,4-Diamino-2-methyl-benzol,
1,4-Diamino-2-methoxy-benzol, 1,3-Diamino-4-methyl-benzol,
1,3-Diaminobenzol-5-sulfonsäure, 1,3-Diamino-5-methyl-benzol,
1,6-Diamino-naphthalin-4-sulfonsäure, 2,6-Diamino-4,8-disulfo-naphthalin,
3,3'-Diamino-diphenylsulfon, 4,4'-Diamino-diphenylsulfon,
3,3'-Diamino-diphenylsulfon-disulfonsäure, 4,4'-Diamino-stilben-2,2'-disulfonsäure,
2,7'-Diamino-diphenylsulfon, 2,7'-Diamino-diphenylsulfon-4,5-disulfonsäure,
4,4'-Diamino-benzophenon, 4,4'-Diamino-3,3'-dinitro-benzophenon,
3,3'-Diamino-4,4'-dichlor-benzophenon, 4,4'- oder 3,3'-Diamino-diphenyl,
4,4'-Diamino-3,3'-dichlor-diphenyl,
4,4'-Diamino-3,3'-dimethoxy- oder -3,3'-dimethyl- oder -2,2'-dimethyl-
oder -2,2'-dichlor- oder -3,3'-diäthoxy-diphenyl,
4,4'-Diamino-3,3'-dimethyl-6,6'-dinitro-diphenyl,
4,4'-Diamino-2,2'- oder 3,3'-disulfo-diphenyl,
4,4'-Diamino-3,3'-dimethyl- oder -3,3'-dimethoxy-
oder -2,2'-dimethoxy-6,6'-disulfo-diphenyl,
4,4'-Diamino-2,2',5,5'-tetrachlor-diphenyl, 4,4'-Diamino-3,3'-dinitro-diphenyl,
4,4'-Diamino-2,2'-dichlor-5,5'-dimethoxy-diphenyl,
4,4'-Diamino-2,2'- oder -3,3'-dicarbonsäure,
4,4'-Diamino-3,3'-dimethyl-diphenyl-5,5'-disulfonsäure, 4,4'-Diamino-2-nitro-diphenyl,
4,4'-Diamino-3-äthoxy- oder -3-sulfo-diphenyl,
4,4'-Diamino-3,3'-dimethyl-5-sulfo-diphenyl, 4,4'-Diamino-diphenylmethan,
4,4'-Diamino-3,3'-dimethyl-diphenylmethan,
4,4'-Diamino-2,2',3,3'-tetramethyl-diphenylmethan, 4,4'-Diamino-diphenyläthan,
4,4'-Diamino-stilben, 4,4'-Diamino-diphenylmethan-3,3'-dicarbonsäure,
1,2-Di-(4'-amino-phenoxy)-äthan.

Aromatische Monoamine und Diamine ohne faserreaktive Gruppe der allgemeinen Formel (4), die sowohl als Diazokomponenten als auch als Kupplungskomponenten bei der Herstellung von erfindungsgemäßen Farbstoffen, so bspw. von Dis- und Polyazofarbstoffen, verwendet werden können und bspw. den allgemeinen Formeln ($10t_1$), ($10t_2$), (10u), (10v), (10w), (10x), (10y) und (10z) entsprechen, sind beispielsweise:

1,3-Diaminobenzol, 1,4-Diaminobenzol, 1,4-Diamino-2-methyl-benzol, 1,4-Diamino-2-methoxy-benzol, 1,3-Diamino-4-methyl- oder -methoxy-benzol, 1-Aminonaphthalin, 1-Aminonaphthalin-6- oder -7-sulfonsäure, 3-Acetylamino-anilin, 3-Methylanilin, 3-Chlor-anilin, 2-Amino-8-naphthol-6-sulfonsäure, 2-Amino-8-naphthol-4,6-disulfonsäure, 2-Amino-5-naphthol-7-sulfonsäure, 3-Amino-5-naphthol-7-sulfonsäure, 1-Amino-5-naphthol-7-sulfonsäure, 1-N-Acetoacetylamino-4-aminobenzol, 1-N-Acetoacetylamino-4-N-methyl-aminobenzol, 1-N-Acetoacetylamino-3-methyl-4-aminobenzol, 1-N-Acetoacetylamino-3-methoxy-4-aminobenzol, 1-(3'-Amino-phenyl)-3-methyl-pyrazolon(5), 1-(4'-Aminophenyl)-3-methyl-pyrazolon(5), 1-(3'- oder -4'-Aminophenyl)-3-carbäthoxy-pyrazolon(5), 1-(3'-Sulfo-4'-aminophenyl)-3-carbäthoxy-pyrazolon(5), 1-(3'-Amino-4'-sulfo-phenyl)-3-carbäthoxy-pyrazolon(5), 1-(2',4',6'-Trimethyl-3'-amino-5'-sulfo-phenyl)-3-carbäthoxy-pyrazolon(5), 1-(4'-Amino-phenyl)-3-methyl-pyrazolon(5), 1-(3'-Amino-6'-methyl-phenyl)-3-carboxy-pyrazolon(5).

Kupplungskomponenten ohne faserreaktive Gruppe der allgemeinen Formel (4), die zur Herstellung der erfindungsgemäßen Farbstoffe verwendet werden können und beispielsweise den allgemeinen Formeln (10f) bis (10k) entsprechen, sind beispielsweise:

1,3-Diaminobenzol, 1,4-Diaminobenzol, 1,4-Diamino-2-methylbenzol, 1,4-Diamino-2-methoxybenzol, 1,3-Diamino-4-methyl- oder -methoxybenzol, N,N-Dimethylanilin, N,N-Diäthylanilin, N-Methyl-N-(β-acetoxyäthyl)-anilin, N,N-Di-(β-cyanoäthyl)-anilin, Phenol, Kresol, Resorcin, 2-Äthoxy-phenol, 4-Methylphenol, 3-Sulfophenol, 1-Naphthol, 2-Naphthol, 4-Sulfonaphthol, 5-Sulfonaphthol, 3,6-Disulfo-Naphthol(8), 4,6-Disulfo-naphthol(8), 1-Aminonaphthalin, 2-Aminonaphthalin, 2-Methylamino-naphthalin, 2-Aminonaphthalin-6- oder -7-sulfonsäure, 2-Aminonaphthalin-3,6,8-trisulfonsäure, 2-Amino-naphthol(8)-6-sulfonsäure, 2-Amino-8-naphthol-4,6-disulfonsäure, 1-Amino-8-naphthol-3,6- oder -4,6-sulfonsäure, 1-Amino-8-naphthol-2,4-disulfonsäure, 1-Acetylamino-8-naphthol-3,6- oder -4,6-disulfonsäure, 1-Benzoylamino-8-naphthol-3,6- oder -4,6-disulfonsäure, 2-Naphthol-5,7-disulfonsäure, 1-Naphthol-3,6,8-trisulfonsäure, 2-Acetylamino-5-naphthol-7-sulfonsäure, 2-Benzoylamino-8-naphthol-6-sulfonsäure, 2-(p'-Tosylamino)-5-naphthol-7-sulfonsäure, 2-Acetylamino-8-naphthol-3,6-disulfonsäure, 2-Acetylamino-5-naphthol-1,7-disulfonsäure, 2-Benzoylamino-8-naphthol-6-sulfonsäure, 2-Phenylsulfonylamino-5-naphthol-7-sulfonsäure, 2-(N-Methyl-N-acetyl)-amino-8-naphthol-6-sulfonsäure, N,N-Dimethyl-2-methoxy-5-methyl-anilin, N-Methyl-N-(β-cyanoäthyl)-anilin, N,N-Dimethyl-2,5-dimethoxy-anilin, N,N-Bis-(β-hydroxy-äthyl)-2-methoxy-5-chlor-anilin, N-(β-Cyanoäthyl)-2,5-dimethoxyanilin, N-(β-Cyanoäthyl)-2-chlor-anilin, Acetoacetylnaphthylamid, Acetoacetyl-2-naphthylamid-5-sulfonsäure, N-Acetoacetylanilin-3- oder -4-sulfonsäure, N-Acetoacetyl-2-methoxy-5-sulfo-anilin, N-Acetoacetyl-4-methoxy-3-sulfo-anilin, N-Acetoacetyl-2-methoxy-5-methyl-4-sulfo-anilin, N-Acetoacetyl-2,5-dimethoxy-4-sulfo-anilin, 1-(4'-Sulfophenyl)-3-methyl-pyrazolon(5), 1-(3'-sulfophenyl)-3-carboxy-pyrazolon(5), 1-(2'-Methoxy-4'-sulfophenyl)-3-carboxy-pyrazolon(5), 1-(3'-Sulfophenyl)-3-methyl-5-amino-pyrazol, 1-(4'-Sulfo-phenyl)-3-methyl-5-amino-pyrazol, 1-(2'-Methoxy-5'-sulfo-phenyl)-3-methyl-5-aminopyrazol, 1-(2'-Methoxy-5'-methyl-4'-sulfophenyl)-3-methyl-5-aminopyrazol, Acetoacetylamino-benzol, Acetoacetylamino-2-methyl-benzol, Acetoacetylamino-2-methoxy-benzol, (N-Acetoacetyl-N-methyl)-anilin, N-Acetoacetyl-N-äthyl)-anilin, 1-N-Acetoacetylamino-4-aminobenzol, 1-N-Acetoacetylamino-4-N-methyl-aminobenzol, 1-N-Acetoacetylamino-3-methyl-4-aminobenzol, 1-N-Acetoacetylamino-3-methoxy-4-aminobenzol, 1-(3'-Amino-phenyl)-3-methyl-pyrazolon(5), 1-(4'-Aminophenyl)-3-methyl-pyrazolon(5), 1-(3'- oder -4'-Aminophenyl)-3-carbäthoxy-pyrazolon(5), 1-(3'-Sulfo-4'-aminophenyl)-3-carbäthoxy-pyrazolon(5),

1-(3'-Amino-4'-sulfo-phenyl)-3-carbäthoxy-pyrazolon(5), 1-(2',4',6'-Trimethyl-3'-amino-5'-sulfo-phenyl)-3-carbäthoxy-pyrazolon(5), 1-(4'-Amino-phenyl)-3-methyl-pyrazolon-5, 1-(3'-N-methylamino-phenyl)-3-carbomethoxy-pyrazolon-5, 1-(4'-N-Methylamino-phenyl)-3-methyl-5-amino-pyrazol, 1-(3'-Amino-6'-methyl-phenyl)-3-carboxy-pyrazolon-5, 1-Amino-3-N-methylamino-benzol, 1-Amino-3-N-äthylamino-benzol, 2-N-Methylamino-8-naphthol-6-sulfonsäure, 3-Methyl-pyrazolon(5), 3-Carboxy- oder 3-Carbamoyl-pyrazolon(5), 1-Phenyl-3-methyl- oder -3-carboxy-pyrazolon(5), 1-(4'-Nitrophenyl)-3-methyl-pyrazolon(5), 1-(3'-Acetylaminophenyl)-3-carboxy-pyrazolon(5), 1-(3'-Carboxyphenyl)-3-methyl-pyrazolon(5), 2-Methylindol, 2,3-Hydroxynaphthoesäure, 8-Hydroxychinolin, 2-Hydroxychinolin, 2,5-Bis-(N,N-diäthylamino)-pyridin, 2-Hydroxy-4-methyl-5-cyano-pyridon, Anilin-N-methan-sulfonsäure, o-Toluidin, m-Toluidin, 2,6-Dimethylanilin, 2,5-Dimethylanilin, o-Äthylanilin, m-Äthylanilin, o-tert.-Butyl-anilin, m-Chloranilin, o-Anisidin, m-Anisidin, o-Phenetidin, m-Phenetidin, N-Methyl-anilin, N-Äthyl-anilin, N-β-Hydroxyäthyl-anilin, N-β-Acetoxyäthyl-anilin, N-Butylanilin, 4-β-Cyanoäthyl-anilin, N-β-Cyano-äthyl-m-toluidin, N-Äthyl-m-toluidin, 2-Amino-hydrochinon-dimethyl- oder -diäthyläther, Kresidin, 3-Acetylamino-anilin, 3-Ureido-anilin, 3-Methylsulfonylamino-anilin, 2-Methoxy-5-acetylamino-anilin, 1-Amino-naphthalin-6-sulfonsäure, 1-Aminonaphthalin-7-sulfonsäure, 2-Methoxy-1-aminonaphthalin-6-sulfonsäure, 2-Äthoxy-1-aminonaphthalin-6-sulfonsäure, 2-Amino-5-naphthol-7-sulfonsäure, 2-Methylamino-8-naphthol-6-sulfonsäure.

Von den erfindungsgemäßen Verbindungen der allgemeinen Formel (1) können als bevorzugt beispielsweise die Verbindungen der folgenden Formeln (11) bis (25) und deren Salze, bevorzugt Alkalimetallsalze, wie Natrium- und Kaliumsalze, genannt werden:
Die Farbstoffe der allgemeinen Formel (11)

$$R'-D-N=N-K \qquad (11)$$

in welcher R'–D– einen $NH_2$-freien Rest der Formeln (9k) bis (9p) bedeutet und K den Rest einer Verbindung der Formeln (10f) bis (10s) ist

oder in welcher

D als Rest einer Diazokomponente den Benzolkern bedeutet, der durch 1, 2 oder 3 Substituenten substituiert sein kann, die der Gruppe niederes Alkyl, wie Methyl und Äthyl, niederes Alkoxy, wie Methoxy und Äthoxy, Hydroxy, Carboxy, Acetylamino, Benzoylamino, Phenylamino, Sulfobenzoylamino, Sulfophenylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, oder

D ein Naphthalinkern ist, der durch 1 oder 2 Sulfonsäuregruppen und/oder eine Hydroxy-, Carboxy-, Methyl-, Methoxy-, Äthoxy- oder Nitrogruppe oder ein Chloratom substituiert sein kann, oder

D den Benzthiazol-2-yl-Rest bedeutet, der im Benzolkern durch eine Methyl-, Methoxy- oder Sulfonsäuregruppe substituiert sein kann, und

K als Rest einer Kupplungskomponente den 1- oder 2-Naphtholrest darstellt, der durch 1, 2 oder 3 Sulfonsäuregruppen und/oder eine Amino-, Methylamino-, Phenylamino-, Acetylamino-, Benzoylamino- oder N-Methyl-N-acetylamino-Gruppe substituiert sein kann, oder

K als Rest einer Kupplungskomponente den 1- oder 2-Aminonaphthalin-Rest bedeutet, der durch 1, 2 oder 3 Sulfonsäuregruppen und/oder eine Hydroxy- oder Acetylaminogruppe substituiert sein kann, oder

K als Rest einer Kupplungskomponente den 3- oder 5-Aminopyrazol- oder 3- oder 5-Pyrazolon-Rest bedeutet, die in 5- bzw. 3-Stellung durch Methyl, Carboxy, Carbamoyl, niederes Carbalkoxy, wie Carbomethoxy und Carbäthoxy, oder Phenyl substituiert sind und in 1-Stellung den Phenylkern oder Naphthylkern gebunden enthalten, wobei der Phenylrest durch 1 oder 2 Sulfonsäuregruppen und/oder 1 oder 2 Substituenten aus der Gruppe niederes Alkyl, niederes Alkoxy, Chlor, Brom, Nitro, Acetylamino und Carboxy und der Naphthylkern durch 1, 2 oder 3 Sulfogruppen und/oder einen Substituenten aus der Gruppe niederes Alkyl, niederes Alkoxy, Nitro, Acetylamino und Carboxy substituiert sein können, oder

K als Rest einer Kupplungskomponente für den Acetoacetylanilid- oder -naphthylamid-Rest steht, wobei der Phenylrest durch 1 oder 2 Substituenten substituiert sein kann, die der Gruppe niederes Alkyl, wie Methyl und Äthyl, niederes Alkoxy, wie Methoxy und Äthoxy, Carboxy, Acetylamino,

Benzoylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, oder

K als Rest einer Kupplungskomponente für den Anilinrest steht, der im Benzolkern durch 1 oder 2 Substituenten aus der Gruppe niederes Alkyl, niederes Alkoxy und Chlor oder durch eine Amino-, Methylamino-, Äthylamino-, Dimethylamino-, Diäthylamino-, Ureido- oder Acetylaminogruppe substituiert sein kann und der am Stickstoffatom des Anilins durch niederes Alkyl mono- oder disubstituiert sein kann, wobei diese niederen Alkylgruppen durch eine niedere Alkoxy-, niedere Alkanoyloxy-, Hydroxy-, Sulfato-, Sulfo-, Carboxy-, Cyan- oder Phenylgruppe substituiert sein können, oder dessen Stickstoffatom außer durch einen dieser Alkylreste durch Phenyl als zweiten Substituenten substituiert ist, wobei die Azogruppe an K ortho-ständig zu der die Kupplung dirigierenden Hydroxygruppe bzw. ortho- oder para-ständig zu der die Kupplung dirigierenden Aminogruppe steht, und

R' für den Rest der allgemeinen Formel (4) steht, wobei dieser faserreaktive Rest R' an einem der aromatischen Kerne von D oder an einem von dessen niederen Alkylsubstituenten gebunden ist;

die Farbstoffe der allgemeinen Formel (12)

$$D—N=N—K—R' \qquad (12)$$

in welcher D einen $NH_2$-freien Rest der Formeln (10a) bis (10d) bedeutet und —K—R' der Rest einer Verbindung der Formeln (9a) bis (9j) ist,

oder in welcher

D als Rest einer Diazokomponente den Benzolkern bedeutet, der durch 1, 2 oder 3 Substituenten substituiert sein kann, die der Gruppe niederes Alkyl, wie Methyl und Äthyl, niederes Alkoxy, wie Methoxy und Äthoxy, Hydroxy, Carboxy, Acetylamino, Benzoylamino, Phenylamino, Sulfobenzoylamino, Sulfophenylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, oder

D ein Naphthalinkern ist, der durch 1, 2 oder 3 Sulfonsäuregruppen und/oder eine Hydroxy-, Carboxy-, Methyl-, Methoxy-, Äthoxy-, Nitro- oder Acetylaminogruppe oder ein Chloratom substituiert sein kann, oder

D den Benzthiazol-2-yl-Rest bedeutet, der im Benzolkern durch eine Nitro-, Methyl-, Methoxy- oder Sulfonsäuregruppe substituiert sein kann, und

K den Rest des 1- oder 2-Naphthols darstellt, der durch 1, 2 oder 3 Sulfonsäuregruppen substituiert sein kann, oder

K den Rest des 1- oder 2-Amino-naphthalins oder des Naphthylens bedeutet, der durch 1, 2 oder 3 Sulfonsäuregruppen und/oder eine Hydroxygruppe substituiert sein kann, oder

K den Rest des 5-Aminopyrazol-4-yls oder 5-Pyrazolon-4-yls bedeutet, die in 3-Stellung durch Methyl, Carboxy, Carbamoyl, niederes Carbalkoxy, wie Carbomethoxy und Carbäthoxy, oder Phenyl substituiert sind und in 1-Stellung den Phenylkern oder Naphthylkern gebunden enthalten, wobei der Phenylrest durch 1 oder 2 Sulfonsäuregruppen und/oder 1 oder 2 Substituenten aus der Gruppe niederes Alkyl, niederes Alkoxy, Chlor, Brom, Nitro, Acetylamino und Carboxy und der Naphthylkern durch 1, 2 oder 3 Sulfogruppen und/oder einen Substituenten aus der Gruppe niederes Alkyl, niederes Alkoxy, Nitro, Acetylamino und Carboxy substituiert sein können, oder

K als Rest einer Kupplungskomponente für den Acetoacetylanilid- oder -naphthylamid-Rest steht, wobei der Phenylrest durch 1 oder 2 Substituenten substituiert sein kann, die der Gruppe niederes Alkyl, wie Methyl und Äthyl, niederes Alkoxy, wie Methoxy und Äthoxy, Carboxy, Acetylamino, Benzoylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, oder

K für den p-Phenylenrest steht, der durch 1 oder 2 Substituenten aus der Gruppe niederes Alkyl, niederes Alkoxy und Chlor oder durch eine Dimethylamino-, Diäthylamino-, Ureido- oder Acetylaminogruppe substituiert sein kann, und

R' für den Rest der allgemeinen Formel (4) steht, wobei dieser faserreaktive Rest R' an einem der aromatischen Kerne von K oder an einem von dessen niederen Alkylsubstituenten gebunden ist;

die Farbstoffe der allgemeinen Formel (13)

$$R'—D—N=N—E—N=N—K \qquad (13)$$

in welcher

D, R′ bzw.
R′–D– sowie K die für die allgemeine Formel (11) angegebenen Bedeutungen haben und
E als Mittelkomponente, die beim Aufbau der Farbstoffe zuerst als Kupplungskomponente, dann als Diazokomponente diente, den entsprechenden bivalenten Rest der Formeln ($10t_1$) bis (10z) darstellt, insbesondere bspw. den Phenylenrest bedeutet, der durch einen Substituenten aus der Gruppe niederes Alkyl, niederes Alkoxy, Chlor, Acetylamino, Amino, Methylamino, Äthylamino, Dimethylamino, Diäthylamino und Ureido substituiert sein kann, oder den Naphthalinkern bedeutet, der durch eine Amino- oder Hydroxygruppe, die ortho- oder paraständig zur ersten Azogruppe stehen, substituiert ist und der durch eine niedere Alkyl-, Nitro- oder Acetylaminogruppe und/oder durch 1 oder 2 Sulfonsäuregruppen substituiert sein kann, oder den Rest der Formel

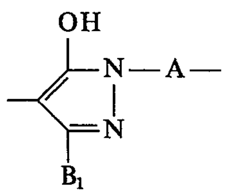

in welcher

$B_1$ für die Methyl- oder Carboxygruppe steht und
A den Benzol- oder Naphthalinkern

bedeutet, der noch durch 1 oder 2 Substituenten aus der Gruppe Sulfo, Carboxy, niederes Alkyl, niederes Alkoxy und Chlor substituiert sein kann;

die Farbstoffe der allgemeinen Formel (14)

$$D{-}N{=}N{-}E{-}N{=}N{-}K{-}R' \qquad (14)$$

in welcher

D, K und R′ bzw.
–K–R′ die für die allgemeine Formel (12) angegebenen Bedeutungen haben und
E die für die allgemeine Formel (13) angegebene Bedeutung besitzt;

die Farbstoffe der allgemeinen Formel (15)

$$(R')_{m'}{-}D{-}N{=}N{-}K_1{-}N{=}N{-}D{-}(R')_{m''} \qquad (15)$$

in welcher

R′ für den faserreaktiven Rest der allgemeinen Formel (4) steht,
m′ und m″ gleich oder verschieden voneinander sind und jedes für die Zahl 0 oder 1 steht, wobei die Summe (m′ + m″) die Zahl 1 oder 2 ist,
D die für die allgemeinen Formeln (11) oder (12) angegebenen Bedeutungen haben, je nachdem, ob D einen faserreaktiven Rest R′ gebunden enthält, und
$K_1$ als Rest einer bifunktionellen Kupplungskomponente für den Amino-hydroxy-naphthylen-Rest steht, der durch eine oder zwei Sulfogruppen substituiert sein kann, oder den Diamino-phenylen-Rest darstellt, der noch durch eine Methyl- oder Sulfogruppe substituiert sein kann;

die Farbstoffe der allgemeinen Formel (16)

$$(R')_{m'}{-}K{-}N{=}N{-}D_1{-}N{=}N{-}K{-}(R')_{m''} \qquad (16)$$

in welcher

R′ den faserreaktiven Rest der allgemeinen Formel (4) bedeutet,
m′ und m″ die für die allgemeine Formel (15) angegebenen Bedeutungen haben und
K die für die allgemeine Formel (11) oder (12) angegebene Bedeutung hat, je nach dem, ob K einen faserreaktiven Rest R′ gebunden enthält, und
$D_1$ für den Phenylenrest, der durch eine Sulfo- oder Methylgruppe substituiert sein kann, oder für den Rest der Formel

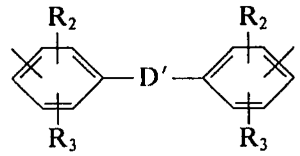

in welcher $R_2$, $R_3$ und D' die zuvor angegebenen Bedeutungen haben;

die Farbstoffe der allgemeinen Formel (17)

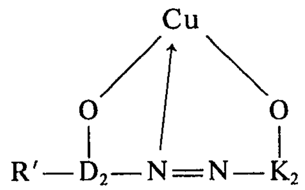

(17)

und deren entsprechenden 1 : 2-Chromkomplex- und 1 : 2-Kobaltkomplex-Derivate;

in der Formel (17) bedeuten:

$D_2$ den Benzolkern, der durch 1 oder 2 Substituenten substituiert sein kann, die der Gruppe niederes Alkyl, wie Methyl und Äthyl, niederes Alkoxy, wie Methoxy und Äthoxy, Carboxy, Phenylamino, Sulfobenzoylamino, Sulfophenylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, oder den Naphthalinkern, der durch 1, 2 oder 3 Sulfonsäuregruppen und/oder eine Carboxy-, Methyl-, Methoxy-, Äthoxy-, Nitro- oder Acetylaminogruppe oder ein Chloratom substituiert sein kann, wobei in $D_2$ das komplexbildende Sauerstoffatom ortho-ständig zur Azogruppe gebunden ist, und

$K_2$ den Naphthylenrest, der durch 1, 2 oder 3 Sulfonsäuregruppen und/oder eine Amino-, Methylamino-, Phenylamino-, Acetylamino-, Benzoylamino- oder N-Methyl-N-acetylamino-Gruppe substituiert sein kann, oder

$K_2$ den Rest des Pyrazol-4,5-ylens, der in 3-Stellung durch Methyl, Carboxy, Carbamoyl, niederes Carbalkoxy, wie Carbomethoxy und Carbäthoxy, oder Phenyl substituiert sind und in 1-Stellung den Phenylkern oder Naphthylkern gebunden enthalten, wobei der Phenylrest durch 1 oder 2 Sulfonsäuregruppen und/oder 1 oder 2 Substituenten aus der Gruppe niederes Alkyl, niederes Alkoxy, Chlor, Brom, Nitro, Acetylamino und Carboxy und der Naphthylkern durch 1, 2 oder 3 Sulfogruppen und/oder einen Substituenten aus der Gruppe niederes Alkyl, niederes Alkoxy, Nitro, Acetylamino und Carboxy substituiert sein können, oder

$K_2$ als Rest einer Kupplungskomponente den des Acetoacetylanilids oder -naphthylamids, wobei der Phenylrest durch 1 oder 2 Substituenten substituiert sein kann, die der Gruppe niederes Alkyl, wie Methyl und Äthyl, niederes Alkoxy, wie Methoxy und Äthoxy, Carboxy, Acetylamino, Benzoylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, wobei in $K_2$ das komplexbildende Sauerstoffatom ortho-Ständig zur Azogruppe gebunden ist, und

R' den Rest der allgemeinen Formel (4) bedeutet, wobei dieser faserreaktive Rest R' an einem der aromatischen Kerne von $D_2$ oder an einem von dessen niederen Alkylsubstituenten gebunden ist;

die Farbstoffe der allgemeinen Formel (18)

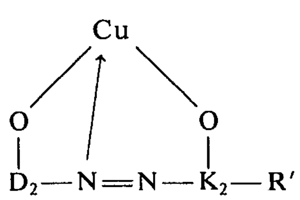

(18)

und deren entsprechenden 1 : 2-Chromkomplex- und 1 : 2-Kobaltkomplex-Derivate;

in der Formel (18) bedeuten:

$D_2$ den Benzolkern, der durch 1, 2 oder 3 Substituenten substituiert sein kann, die der Gruppe niederes Alkyl, wie Methyl und Äthyl, niederes Alkoxy, wie Methoxy und Äthoxy, Carboxy, Acetylamino, Benzoylamino, Phenylamino, Sulfobenzoylamino, Sulfophenylamino, Carbamoyl, durch niederes

Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, oder

$D_2$ den Naphthalinkern, der durch 1, 2 oder 3 Sulfonsäuregruppen und/oder eine Carboxy-, Methyl-, Methoxy, Äthoxy-, Nitro- oder Acetylaminogruppe oder ein Chloratom substituiert sein kann, wobei jeweils in $D_2$ das komplexbildende Sauerstoffatom ortho-ständig zur Azogruppe gebunden ist, und

$K_2$ den Naphthylenrest, der durch 1 oder 2 Sulfonsäuregruppen substituiert sein kann, oder

$K_2$ den Rest des Pyrazol-4,5-ylens, der in 3-Stellung durch Methyl, Carboxy, Carbamoyl, niederes Carbalkoxy, wie Carbomethoxy und Carbäthoxy, oder Phenyl substituiert sind und in 1-Stellung den Phenylkern oder Naphthylkern gebunden enthalten, wobei der Phenylrest durch 1 oder 2 Sulfonsäuregruppen und/oder 1 oder 2 Substituenten aus der Gruppe niederes Alkyl, niederes Alkoxy, Chlor, Brom, Nitro, Acetylamino und Carboxy und der Naphthylkern durch 1, 2 oder 3 Sulfogruppen und/oder einen Substituenten aus der Gruppe niederes Alkyl, niederes Alkoxy, Nitro, Acetylamino und Carboxy substituiert sein können, oder

$K_2$ als Rest einer Kupplungskomponente für den Acetoacetylanilid- oder -naphthylamid-Rest steht, wobei der Phenylrest durch 1 oder 2 Substituenten substituiert sein kann, die der Gruppe niederes Alkyl, wie Methyl und Äthyl, niederes Alkoxy, wie Methoxy und Äthoyy, Carboxy, Acetylamino, Benzoylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören,
wobei in $K_2$ das komplexbildende Sauerstoffatom ortho-ständig zur Azogruppe gebunden ist, und

R' den Rest der allgemeinen Formel (4) bedeutet, wobei dieser faserreaktive Rest R' an einem der aromatischen Kerne von $K_2$ oder an einem von dessen niederen Alkylsubstituenten gebunden ist;

die Farbstoffe der allgemeinen Formel (19)

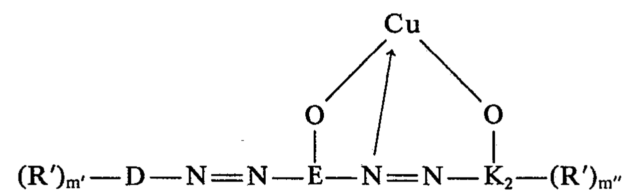

(19)

und deren entsprechenden 1:2-Chromkomplex- und 1:2-Kobaltkomplex-Derivate;

in der Formel (19) haben

R', m', m'',
D und $K_2$ die für die allgemeinen Formeln (11), (15) und (17) bzw. (18) angegebenen Bedeutungen und

E stellt als Mittelkomponente, die beim Aufbau der Farbstoffe zuerst als Kupplungskomponente, dann als Diazokomponente diente, den Benzolkern dar, der durch einen Substituenten aus der Gruppe niederes Alkyl, niederes Alkoxy, Chlor, Acetylamino, Dimethylamino, Diäthylamino und Ureido substituiert sein kann, oder den Naphthalinkern dar, der durch niederes Alkyl, Nitro, Acetylamino oder Sulfo substituiert sein kann,

oder den Rest der Formel

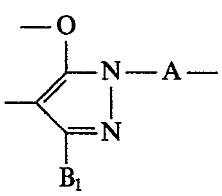

in welcher A und $B_1$ die für Formel (13) angegebenen Bedeutungen haben,
wobei in $K_2$ das komplexbildende Sauerstoffatom ortho-ständig zur Azogruppe gebunden ist;

die Farbstoffe der allgemeinen Formel (20)

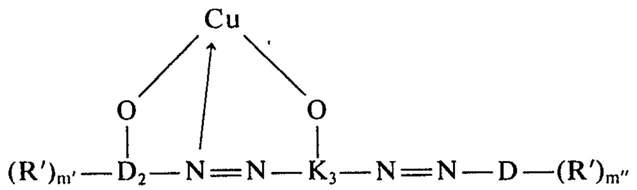

(20)

und deren entsprechenden 1 : 2-Chromkomplex- und 1 : 2-Kobaltkomplex-Derivate;

in dieser Formel (20) haben

R′, m′, m″,
D und $D_2$ die für die Formeln (15) und (17) bzw. (18) angegebenen Bedeutungen, wobei in $D_2$ das komplexbildende Sauerstoffatom ortho-ständig zur Azogruppe gebunden ist, und

$K_3$ steht als Rest der bifunktionellen Kupplungskomponente Aminonaphthol für den Naphthylenrest, der eine oder zwei Sulfogruppen gebunden enthalten kann;

die Farbstoffe der allgemeinen Formel (21)

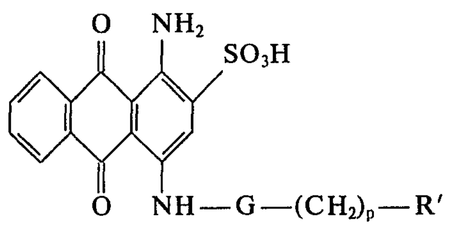

(21)

in welcher

G für den Phenylen- oder Naphthylen- oder den bivalenten Rest des Diphenylsulfons, des Stilbens, des Diphenylamins, des Diphenylmethans oder des Azobenzols steht, wobei jeder der aromatischen Kerne von G noch durch 1 oder 2 Substituenten aus der Gruppe Sulfo, niederes Alkyl, niederes Alkoxy, Chlor und Carboxy substituiert sein können, und

R′ und p die weiter obengenannten Bedeutungen haben;

die Farbstoffe der allgemeinen Formel (22)

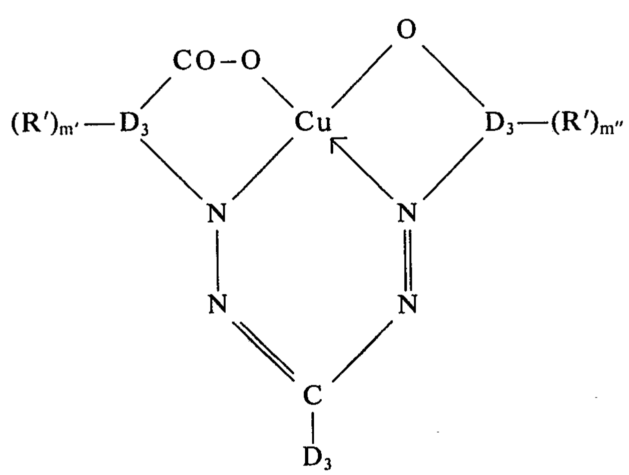

(22)

in welcher

$D_3$ jeweils gleich oder verschieden voneinander sind und jedes den Benzolkern bedeutet, der durch 1 oder 2 Substituenten aus der Gruppe Sulfo, Carboxy, Nitro, niederes Alkyl, niederes Alkoxy und Chlor substituiert sein kann, oder den Naphthalinkern bedeutet, der durch 1, 2 oder 3 Substituenten aus der Gruppe Sulfo, Carboxy, Nitro, Acetylamino und Chlor substituiert sein kann, und

R′, m′
und m″ die für die Formeln (11) und (12) bzw. (15) angegebenen Bedeutungen haben;

die Farbstoffe der allgemeinen Formel (23)

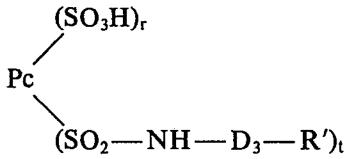

(23)

in welcher

$D_3$ die obengenannte Bedeutung hat,
Pc einen metallfreien oder metallhaltigen, vorzugsweise den Kupfer-, Kobalt- oder Nickelphthalocyaninrest bedeutet,
R' den faserreaktiven Rest der allgemeinen Formel (4) darstellt,
r eine Zahl zwischen 1 und 3 und
t eine Zahl zwischen 1 und 4 bedeuten,
wobei die Summe von (r + t) höchstens 4 ist und wobei im Falle, daß t für die Zahl 4 steht, der Rest $D_3$ zwingend mindestens eine Sulfogruppe enthält;

die Farbstoffe der allgemeinen Formel (24)

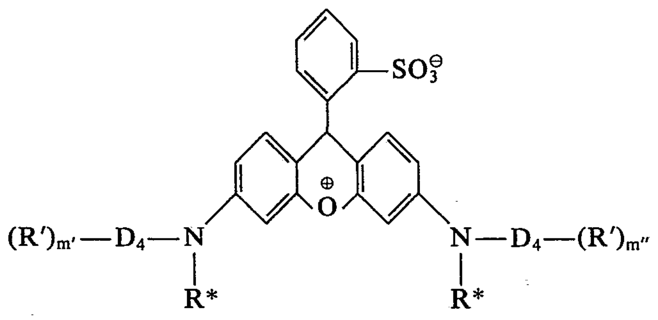

(24)

in welcher

$D_4$ gleich oder verschieden voneinander sein können und jedes einen niederen Alkylenrest bedeutet, der durch eine niedere Alkoxy-, niedere Alkanoyloxy-, Cyan-, Sulfo-, Carboxy- oder Hydroxygruppe substituiert sein kann, oder die obengenannte Bedeutung von $D_3$ besitzt und
R*, R', m' und m'' die obengenannten Bedeutungen haben;

die Farbstoffe der allgemeinen Formel (25)

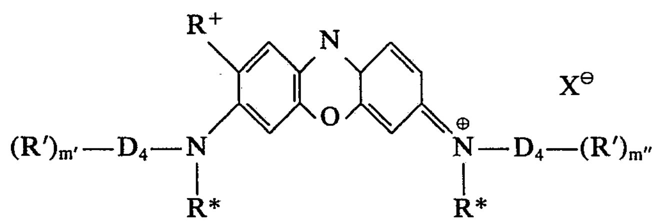

(25)

in welcher

$D_4$, R*, R', m' und m'' die obengenannten Bedeutungen haben und
$R^+$ für ein Wasserstoffatom, für eine niedere Alkylgruppe, wie Methylgruppe, oder für eine niedere Alkoxygruppe, wie Methoxygruppe, steht und
$X^{\ominus}$ ein farbloses Anion bedeutet.

Von den erfindungsgemäßen Verbindungen der allgemeinen Formel (1) sind weiterhin bevorzugt die Farbstoffe der allgemeinen Formel (11), in welcher der Formelrest R'—D— für einen faserreaktiven Rest der allgemeinen Formel (26a), (26b), (26c), (26d), (26e) oder (26f)

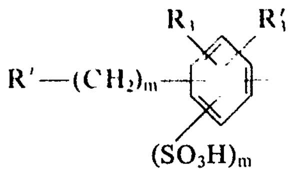

(26a)

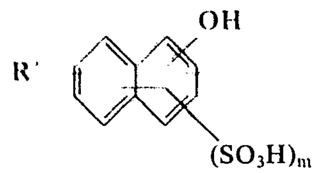

(26b)

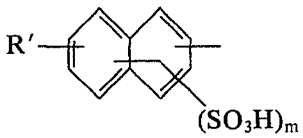

(26c)

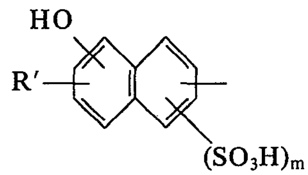

(26d)

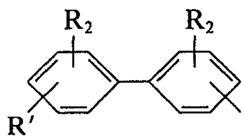

(26e)

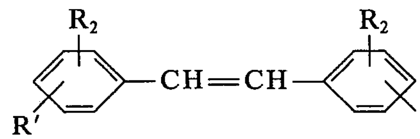

(26f)

mit $R_2$, $R_3$, $R'_3$, m und R' die weiter oben angegebenen steht und der Formelrest —K einen Rest der allgemeinen Formel (27a), (27b), (27c), (27d), (27e), (27f), (27g), (27h), (27i), (27j), (27k), (27m), (27n), (27p) oder (27q)

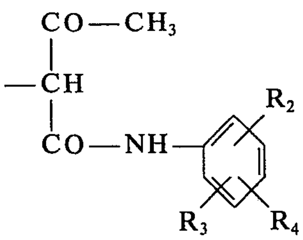

(27a)

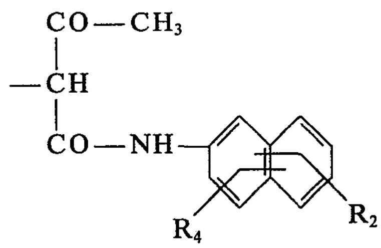

(27b)

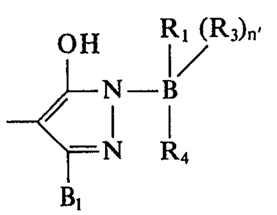

(27c)

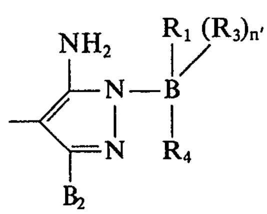

(27d)

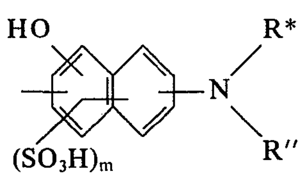

(27e)

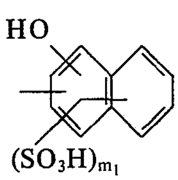

(27f)

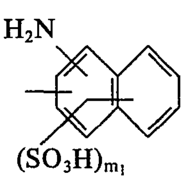

(27g)

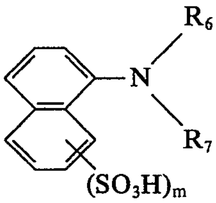

(27h)

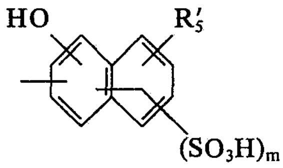

(27i)

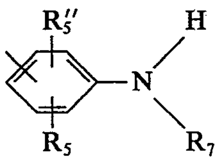

(27j)

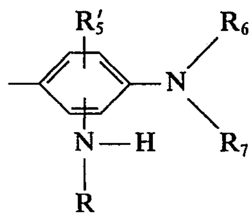

(27k)

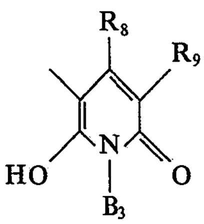

(27m)

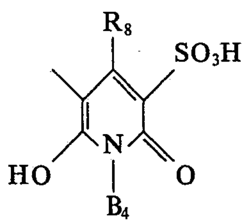

(27n)

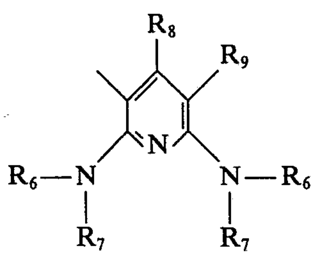

(27p)

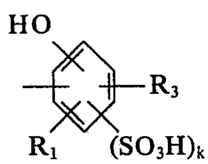

(27q)

mit R, $R_1$, $R_2$, $R_3$, $R_4$, $R_5$, $R_6$, $R_7$, $R_8$, $R_9$, $R_5'$, $R_5''$, R*, R'', k, m, $m_1$, n', B, $B_1$, $B_2$, $B_3$ und $B_4$ der obengenannten Bedeutungen darstellt,

des weiteren die Farbstoffe der allgemeinen Formel (12), in welcher D einen Rest der allgemeinen Formel (27r), (27s), (27t) oder (27u)

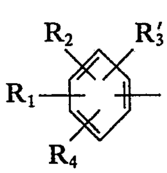

(27r)

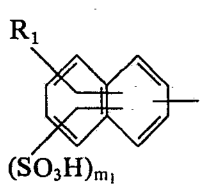

(27s)

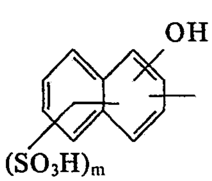

(27t)

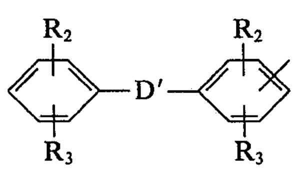

(27u)

mit $R_1$, $R_2$, $R_3$, $R_4$, D', m und $m_1$ der oben genannten Bedeutung darstellt und der faserreaktive Formelrest –K–R' einen Rest der allgemeinen Formel (26g), (26h), (26i), (26j), (26k), (26m), (26n), (26p) oder (26r)

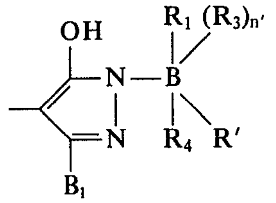

(26g)

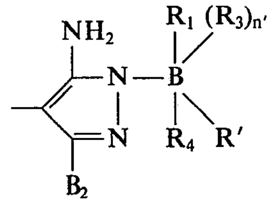

(26h)

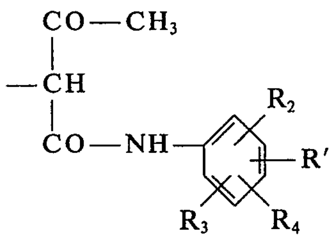

(26i)

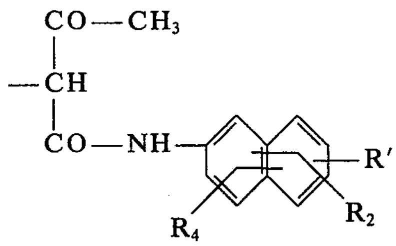

(26j)

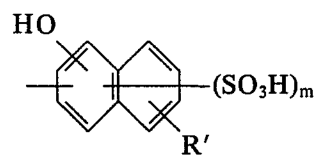

(26k)

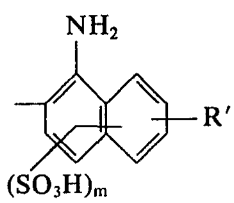

(26m)

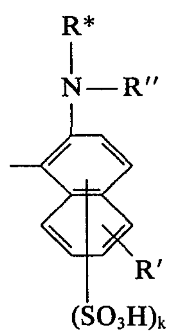

(26n)

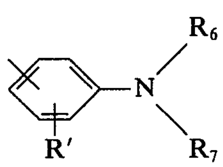

(26p)

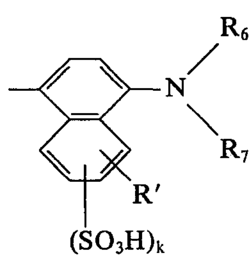

(26r)

bedeutet, in welchen R', $R_1$, $R_2$, $R_3$, $R_4$, $R_5$, $R_6$, $R_7$, k, m, n', B, $B_1$, $B_2$, R'' und R* die anfangs angegebenen Bedeutungen haben,

des weiteren die Farbstoffe der allgemeinen Formel (13), in welcher der Formelrest R'–D– einen der Reste der obigen allgemeinen Formeln (26a), (26b), (26c), (26d), (26e) oder (26f) und der Formelrest –K einen der Reste der obengenannten Formeln (27a), (27b), (27c), (27d), (27e), (27f), (27g), (27h), (27i), (27j), (27k), (27m), (27n), (27p) oder (27q) bedeuten und der Formelrest E für einen Rest der allgemeinen Formel (28a), (28b) oder (28c)

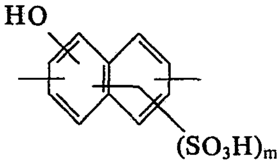

(28a)

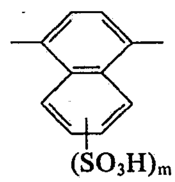

(28b)

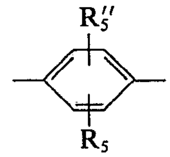

(28c)

steht, in welchen $R_5$, $R_5''$ und m die oben angegebenen Bedeutungen haben,

des weiteren die Farbstoffe der allgemeinen Formel (14), in welcher der Formelrest D einen Rest der obigen Formeln (27r), (27s), (27t) oder (27u), der Formelrest –K–R' einen Rest der obigen Formeln (26g), (26h), (26i), (26j), (26k), (26m), (26n), (26p) oder (26r) und der Formelrest E für einen Rest der obigen Formeln (28a), (28b) oder (28c) bedeuten,

des weiteren die Farbstoffe der allgemeinen Formel (15) und der allgemeinen Formel (16), in welchen m' und m'' die obengenannten Bedeutungen haben und die Formelreste D, falls m' oder m'' für die Zahl Null steht, und die Formelreste R'–D–, falls m' oder m'' für die Zahl 1 steht, die eben genannten Bedeutungen der obigen Formeln (27r), (27s), (27t) oder (27u) bzw. (26a) bis (26f) haben, die Formelreste K, falls m' oder m'' für die Zahl Null steht, und die Formelreste R'–K– bzw. –K–R', falls m' oder m'' für die Zahl 1 steht, die eben genannten Bedeutungen der obigen Formelreste (27a) bis (27q) bzw. der Formelreste (26g) bis (26r) besitzen, $K_1$ den Naphthylenrest bedeutet, der durch eine Aminogruppe in dem einen aromatischen Kern und durch eine Hydroxygruppe in dem zweiten aromatischen Kern substituiert ist und der noch durch eine oder zwei Sulfogruppen substituiert sein kann, und $D_1$ die anfangs für die allgemeine Formel (16) angegebene Bedeutung hat,

des weiteren die Farbstoffe der allgemeinen Formel (17), in welcher der Formelrest

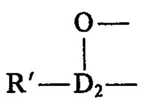

ein Formelrest der allgemeinen Formel (29a) oder (29b)

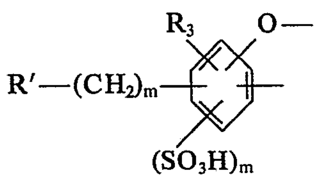

(29a)

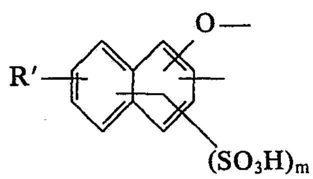

(29b)

mit R', m und $R_3$ der obengenannten Bedeutungen ist, und in welcher der Formelrest

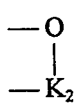

einen Rest der allgemeinen Formel (29c), (29d), (29e), (29f) oder (29g)

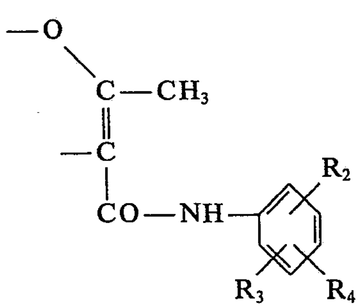

(29c)

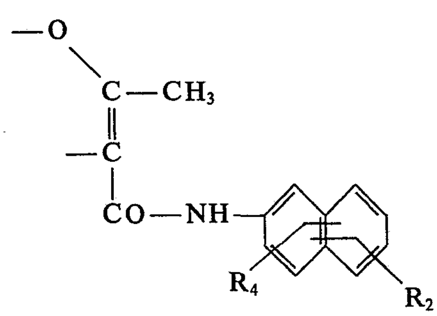

(29d)

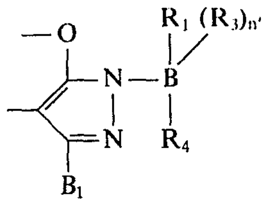

(29e)

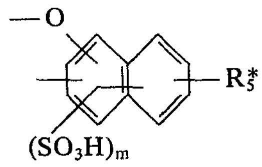

(29f)

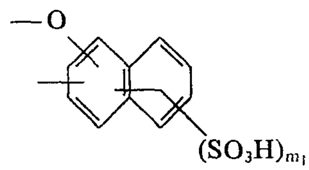

(29g)

darstellt, in welchen $R_1$, $R_2$, $R_3$, $R_4$, B, $B_1$, m und $m_1$ die anfangs angegebenen Bedeutungen haben, wobei jeweils die komplexbildenden Sauerstoffatome ortho-ständig zu den Azogruppen gebunden sind, und $R_5^*$ für ein Wasserstoffatom steht oder die obige Bedeutung von $R_5'$ hat;

des weiteren die Farbstoffe der allgemeinen Formel (18), in welcher der Formelrest

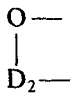

einen Rest der allgemeinen Formel (29h) oder (29i)

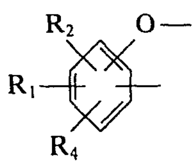

(29h)

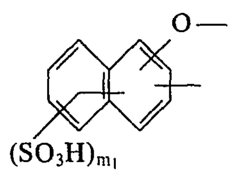

(29i)

in welcher $R_1$, $R_2$, $R_4$ und $m_1$ die obengenannten Bedeutungen haben, und in welcher der Formelrest

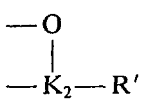

einen Rest der allgemeinen Formel (29j), (29k), (29m) oder (29n)

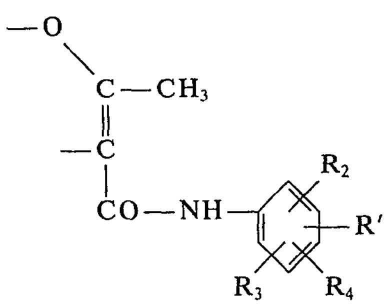

(29j)

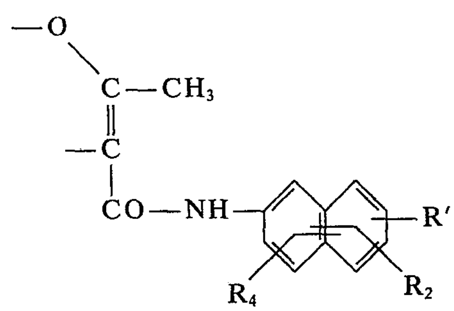

(29k)

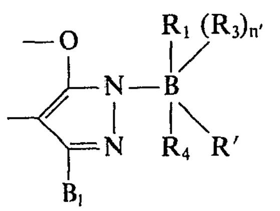

(29m)

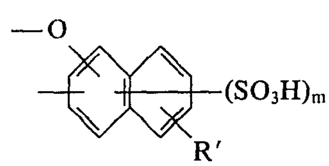

(29n)

darstellt, in denen R', $R_1$, $R_2$, $R_3$, $R_4$, B, $B_1$, m und n' die anfangs angegebenen Bedeutungen haben, wobei jeweils die komplexbildenden Sauerstoffatome ortho-ständig zu den Azogruppen gebunden sind,

des weiteren die Farbstoffe der allgemeinen Formeln (19) und (20), in welchen m' und m" die obengenannten Bedeutungen haben und die Formelreste D, falls m' oder m" für die Zahl Null steht, bzw. der Formelrest R'–D– bzw. –D–R', falls m' oder m" die Zahl 1 bedeutet, die obenangegebenen Reste der Formeln (27q) bis (27s) bzw. (26a) bis (26f) haben, die Formelreste

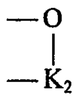

oder

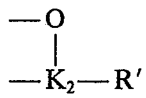

eine der oben angegebenen Reste der allgemeinen Formeln (29c) bis (29g) bzw. (29j) bis (29n) bedeuten und die Formelreste

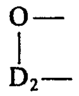

oder

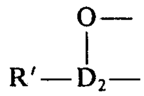

einen der Reste der oben angegebenen Formeln (29h) oder (29i) bzw. (29a) oder (29b) bedeuten und der Formelrest

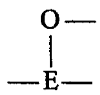

den nachstehenden Formelrest

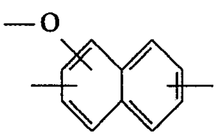

wobei dieser Naphthylenkern noch durch 1 oder 2 Sulfogruppen substituiert sein kann, und der Formelrest

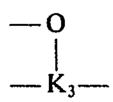

einen Rest der nachstehenden Formel

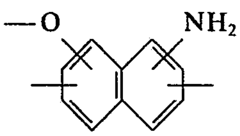

bedeutet, wobei der Naphthylenkern noch durch 1 oder 2 Sulfogruppen substituiert sein kann.

Organische Verbindungen der allgemeinen Formel (2), mit denen man durch Umsetzung eines faserreaktiven Säurehalogenids der allgemeinen Formel (3) zu den erfindungsgemäßen Verbindungen der allgemeinen Formel (1) gelangt, sind bevorzugt die Mono- und Diamino-Verbindungen der allgemeinen Formeln (30) bis (44):

$$R—NH—D—N{=}N—K \qquad (30)$$

$$D—N{=}N—K—NH—R \qquad (31)$$

$$R—NH—D—N{=}N—E—N{=}N—K \qquad (32)$$

$$D—N{=}N—E—N{=}N—K—NH—R \qquad (33)$$

$$(R—NH)_{m'}—D—N{=}N—K_1—N{=}N—D—(NH—R)_{m''} \qquad (34)$$

$$(R—NH)_{m'}—K—N{=}N—D_1—N{=}N—K—(NH—R)_{m''} \qquad (35)$$

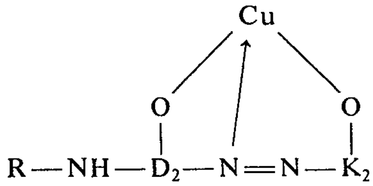

(36)

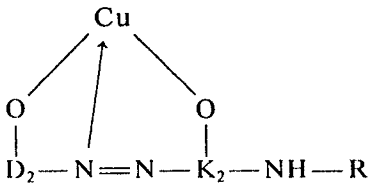

(37)

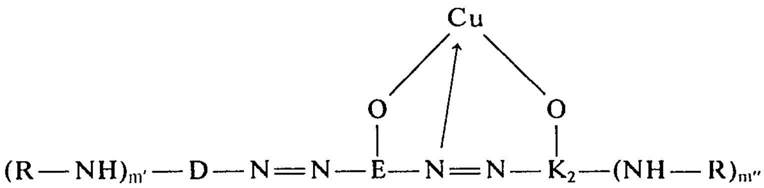

(38)

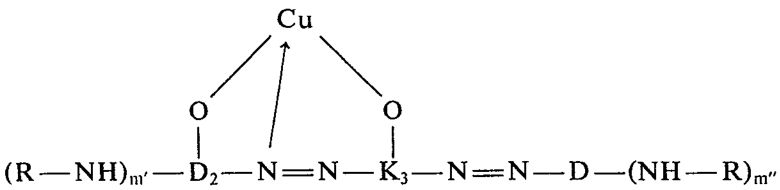

(39)

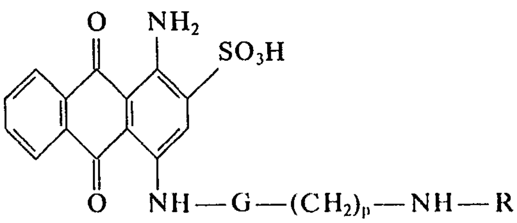

(40)

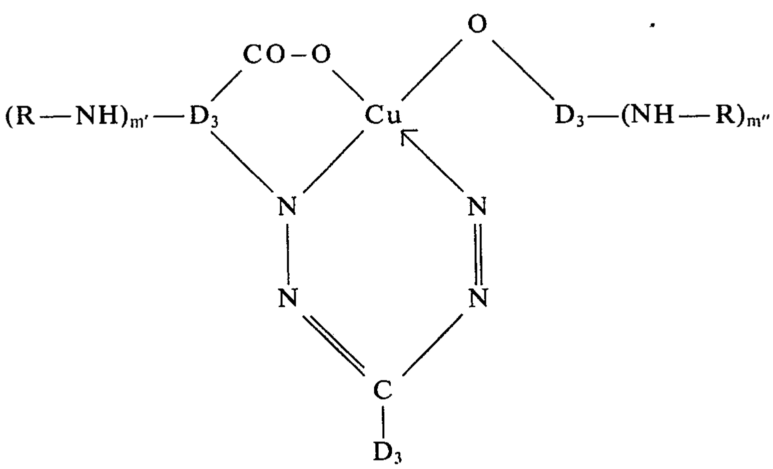

(41)

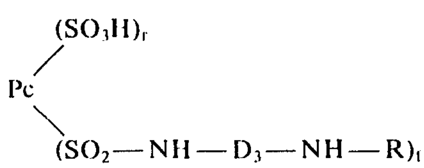

(42)

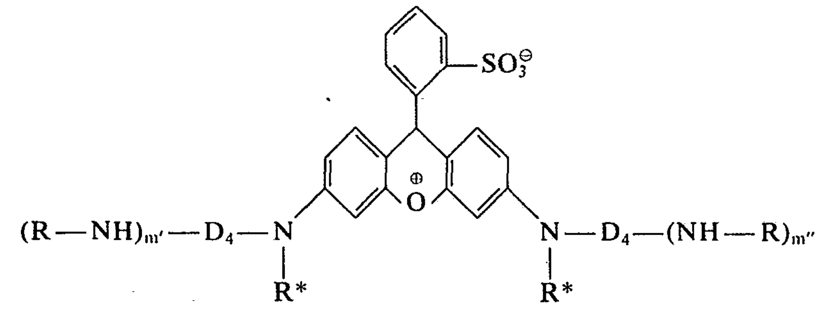

(43)

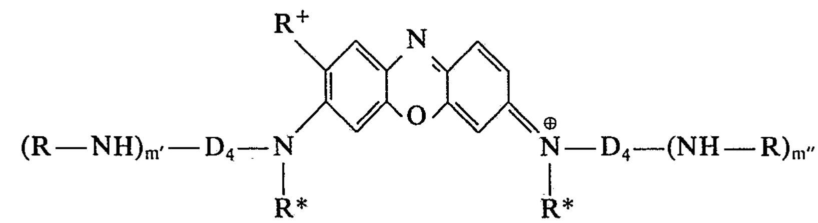

(44)

in welchen R, D, E, K, $D_1$, $D_2$, $K_1$, $K_2$, $K_3$, m', m'', G, p, $D_3$, Pc, r, t, $D_4$, $R^+$, R* und $X^{\ominus}$ die oben angegebenen Bedeutungen für die allgemeinen Formeln (11) bis (25) besitzen.

Von den erfindungsgemäßen Einzelverbindungen der allgemeinen Formel (1) können die in den nachstehenden Beispielen 9, 11, 60, 66, 112 und 155, insbesondere in den Beispielen 6, 7, 8 und 209 beschriebenen Verbindungen hervorgehoben werden.

Die erfindungsgemäßen Verbindungen der allgemeinen Formel (1) lassen sich aus ihren Syntheselösungen nach allgemein bekannten Methoden für wasserlösliche Verbindungen isolieren, so beispielsweise durch Ausfällen aus dem Reaktionsmedium mittels eines Elektrolyten, wie beispielsweise Natriumchlorid oder Kaliumchlorid, oder aber durch Eindampfen der Reaktionslösung selbst, beispielsweise durch Sprühtrocknung. Falls die letztgenannte Art der Isolierung der Verbindung der allgemeinen Formel (1) gewählt wird, empfiehlt es sich vielfach, vor dem Eindampfen eventuell in den Lösungen vorhandene Sulfatmengen durch Fällung als Calciumsulfat und Abtrennung durch Filtration zu entfernen.

In manchen Fällen kann die wäßrige Lösung der Verbindung der allgemeinen Formel (1), gegebenenfalls nach Zusatz einer Puffersubstanz, auch direkt als Flüssigpräparation der Anwendung zur Faserveredlung, wie z. B. zum Färben, falls Q für einen Farbstoffrest steht, zugeführt werden.

Die erfindungsgemäßen Verbindungen der allgemeinen Formel (1) sind geeignet, Leder oder Materialien aus natürlichen, regenerierten oder synthetischen stickstoffhaltigen Fasern oder aus natürlichen, regenerierten oder synthetischen hydroxygruppenhaltigen Fasern gemäß den Eigenschaften des Restes Q zu veredeln. Der faserreaktive Anker in den Verbindungen der allgemeinen Formel (1) besitzt die Eigenschaft, mit NH- und OH-Gruppen — mit den Hydroxygruppen vorzugsweise im alkalischen Bereich — unter Abspaltung des Chloratoms aus dem β-Chloräthylsulfonyl-methyl-Rest eine kovalente Bindung einzugehen und somit eine echte Bindung mit der Faser zu erzeugen.

Die vorliegende Erfindung betrifft somit ebenfalls die Verwendung der erfindungsgemäßen Verbindungen der allgemeinen Formel (1) zur Faserveredlung von Materialien aus natürlichen, regenerierten oder synthetischen stickstoffhaltigen Fasern oder von natürlichen, regenerierten oder synthetischen hydroxygruppenhaltigen Fasern oder von Leder bzw. ein Verfahren zur Faserveredlung von solchen Materialien (Substraten), bei welchem man eine Verbindung der allgemeinen Formel (1), vorzugsweise aus wäßriger Lösung, auf das Substrat appliziert und sie, gegebenenfalls unter der Einwirkung eines Alkalis und von Wärme, auf dem Substrat fixiert.

Stickstoffhaltige Fasermaterialien sind z. B. Fasern aus synthetischen Polyurethanen oder Polyamiden, wie Polyamid-6.6, Polyamid-6, Polyamid-11 und Polyamid-4, natürliche Fasermaterialien aus Polyamiden sind Seide und Wolle und andere Tierhaare.

Hydroxygruppenhaltige Fasermaterialien sind insbesondere Cellulosefasermaterialien, vorzugsweise Baumwolle und andere Pflanzenfasern, wie Leinen, Hanf, Jute, des weiteren die entsprechenden Fasern aus regenerierter Cellulose, wie beispielsweise Viskose oder Kupferseide.

Die erfindungsgemäßen Verbindungen lassen sich auf den genannten Substraten nach den für faserreaktive Verbindungen, beispielsweise nach den für faserreaktive Farbstoffe, allgemein bekannten Anwendungstechniken applizieren. So geht man allgemein in der Weise vor, daß man die Verbindungen der allgemeinen Formel (1) in wäßriger Lösung, gegebenenfalls in Anwesenheit eines üblichen Verdikkungsmittels und/oder gegebenenfalls anderer Hilfsmittel, die beispielsweise das Aufziehvermögen, das Egalisiervermögen und Migriervermögen verbessern können, auf das Substrat aufbringt, wobei die wäßrige Lösung der Verbindung der allgemeinen Formel (1) schwach sauer, neutral oder alkalisch eingestellt sein kann.

Auf natürlichen, regenerierten oder synthetischen Polyamidfasern oder Polyurethanfasern oder auf

Leder werden die Verbindungen der allgemeinen Formel (1) in üblicher Weise aus einer wäßrig sauren bis wäßrig neutralen Lösung (pH-Bereich etwa zwischen 3 und 6,5), vorzugsweise gemäß den Methoden des Ausziehverfahrens, auf die Faser aufgebracht und dort in der Wärme, insbesondere bei einer Temperatur zwischen 60 und 130°C, fixiert.

So kann man beispielsweise dem die Verbindung der allgemeinen Formel (1) enthaltenden Bad Essigsäure oder Essigsäure und Ammoniumacetat als Puffer zufügen, um den gewünschten pH-Wert zu erhalten. Zwecks Erreichung einer brauchbaren Egalität der Färbungen empfiehlt sich ein Zusatz an üblichen Egalisiermitteln, beispielsweise auf Basis eines Umsetzungsproduktes von Cyanurchlorid mit der dreifach molaren Menge einer Aminobenzolsulfonsäure und/oder einer Aminonaphthalinsulfonsäure und/oder auf Basis eines Umsetzungsproduktes von Stearylamin mit Äthylenoxid. Die Applikation und Fixierung der erfindungsgemäßen Verbindung auf dem Substrat kann gemäß dem Ausziehverfahren sowohl bei Siedetemperatur als auch bei einer höheren Temperatur, wie beispielsweise bei 105 bis 120°C, unter Druck ausgeführt werden, wobei man die Färbung zweckmäßig unter langsamer Temperatursteigerung auf 60°C, nach einiger Zeit unter langsamer Temperatursteigerung auf höhere Temperatur, beginnt.

Bei der Veredelung von hydroxygruppenhaltigen Fasermaterialien wird die Verbindung der allgemeinen Formel (1) in der Regel aus schwach saurer bis alkalischer Lösung auf die Faser aufgebracht und auf ihr in Gegenwart eines alkalischen Mittels, das erforderlichenfalls nachträglich der wäßrigen Lösung zugesetzt oder auf die Faser aufgebracht wird, fixiert.

Man erhält auf diese Weise veredelte Fasermaterialien, die für die Verbindungen der allgemeinen Formel (1) gute Naßechtheitseigenschaften besitzen.

Im Einzelnen kann man beispielsweise gemäß üblichen Methoden zur Aufbringung von faserveredelnden faserreaktiven Verbindungen und deren Fixierung auf der Faser, die insbesondere für faserreaktive Farbstoffe zahlreich in der Literatur beschrieben sind, beispielsweise folgendermaßen vorgehen:

Zur Faserveredelung von hydroxygruppenhaltigen Fasermaterialien, wie beispielsweise Cellulose, wird das Material mit einer Lösung der Verbindung der allgemeinen Formel (1) geklotzt und eventuell nach Zwischentrocknen des geklotzten Materials mit einer alkalischen Lösung überklotzt oder durch ein alkalisches Bad geführt; diese alkalischen Lösungen können Raumtemperatur oder höhere Temperatur besitzen, beispielsweise eine Temperatur zwischen 15 und 80°C.

Alkalisch reagierende Stoffe, die in diesen Fixierlösungen verwendet werden können, sind beispielsweise Natriumhydroxid, Natriumcarbonat, Natriumhydrogencarbonat, Kaliumhydroxid, Kaliumcarbonat, Trinatriumphosphat oder Natrium- oder Kaliumsilikat oder Wasserglas. Die so alkalisch behandelte Ware wird anschließend entweder bei einer Temperatur zwischen 20 und 50°C abgelegt (beispielsweise abgetafelt oder auf eine Docke gewickelt) und dort mehrere Stunden lang zur Fixierung der Verbindung der allgemeinen Formel (1) verweilen lassen, oder anschließend zur Fixierung der erfindungsgemäßen Verbindung der Einwirkung von feuchter oder trockener Hitze (so beispielsweise mittels Heißdampf, Heißluft oder Infrarotstrahlung) ausgesetzt. Im Falle der thermischen Fixierung können als Alkalien auch Verbindungen eingesetzt werden, die erst in der Wärme ihre alkalische Wirkung erzielen, wie beispielsweise Natriumacetat, Natriumformiat und Natriumtrichloracetat.

Die alkalischen Mittel können aber auch bereits der wäßrigen Farbstofflösung zugegeben werden. In diesem Falle behandelt man das Fasermaterial in der wäßrig-alkalischen Lösung der Verbindung der Formel (1), vorteilhaft unter Zusatz eines Elektrolyts, wie Natriumchlorid oder Natriumsulfat, bei höheren Temperaturen, wie beispielsweise bei einer Temperatur zwischen 30 und 110°C, wobei man vorteilhaft unter langsamer Temperatursteigerung des Ausziehbades auf 60°C mit der Behandlung der Faser beginnt und die Fixierung anschließend bei Temperaturen bis zu 110°C weiterführt und beendet. Ebenfalls ist es möglich, die Faser, wie z. B. die Cellulosefaser, mit einer Lösung einer alkalisch reagierenden Verbindung vorzubehandeln, sodann, gegebenenfalls nach Zwischentrocknung, mit der wäßrigen Lösung der Verbindung der Formel (1) zu imprägnieren und anschließend bei Raumtemperatur, vorzugsweise aber unter Wärmebehandlung, die faserreaktive Verbindung darauf zu fixieren.

Bringt man die Verbindungen der allgemeinen Formel (1) in Form von Druckpasten auf das Fasermaterial, so verwendet man üblicherweise Verdickungsmittel, wie Natriumalginat, Johannisbrotkernmehläther, Celluloseäther, Traganth oder Gummi Arabicum, gegebenenfalls unter Zusatz eines üblichen Druckhilfsmittels und der obengenannten alkalisch reagierenden Verbindungen. Diese Drucke werden dann bei einer Temperatur zwischen 70 und 230°C, vorzugsweise zwischen 100 und 150°C, mit Heißluft behandelt (thermofixiert) oder gedämpft. So können die erfindungsgemäßen Verbindungen nach den üblichen Druckverfahren einphasig in Anwesenheit von Natriumbicarbonat oder eines anderen der obengenannten alkalischen Mittel mittels der Druckpaste auf die Cellulosefaser aufgebracht und anschließend die Verbindung der allgemeinen Formel (1) durch Dämpfen bei 101 bis 103°C fixiert werden, oder aber nach einem zweiphasigen Verfahren zuerst mit neutraler oder schwach saurer Druckpaste auf die Faser gebracht werden, worauf sie dann entweder durch Hindurchführen des bedruckten Materials durch ein heißes elektrolythaltiges alkalisches Bad oder aber durch Überklotzen mit einer alkalischen elektrolythaltigen Flotte und anschließendem Verweilenlassen oder einer Hitzebehandlung auf der Faser fixiert werden. Verwendet man ein elektrolythaltiges alkalisches Bad, durch das das mit der erfindungsgemäßen Verbindung imprägnierte Material zur Fixierung hindurchgeführt wird, so wen-

det man eine Temperatur von 60 bis 105°C für das Bad an, so daß eine anschließende Behandlung durch Heißluft oder Dampf entfallen kann. Behandelt man das mit der erfindungsgemäßen Verbindung imprägnierte Material mit einem starken wäßrigen Alkali, wie z. B. Natrium- oder Kaliumhydroxyd und/ oder Natrium- oder Kaliumsilikat oder Trinatriumphosphat, so genügt zur Fixierung der erfindungsgemäßen Verbindungen ein längeres Verweilenlassen der feuchten, alkalisch imprägnierten Ware, vorzugsweise der Drucke, bei Raumtemperatur.

Die so erhaltenen faserveredelten Materialien werden anschließend in üblicher Weise nachbehandelt, gespült und getrocknet. Die auf diese Weise mit den erfindungsgemäßen Verbindungen faserveredelten Materialien zeigen vorzügliche Naßechtheiten, die insbesondere bei der Anwendung von erfindungsgemäßen Verbindungen, in denen der faserveredelnd wirkende organische Rest Q der Rest eines Farbstoffmoleküls ist, besonders vorteilhaft in Erscheinung treten; von den guten Naßechtheiten der faserveredelnden Substraten sind insbesondere beispielsweise die Sodakochechtheit, die Waschechtheiten bei 60 und 95°C, die Peroxidwaschechtheit, wie beispielsweise bei 95°C, die alkalische und saure Schweißechtheit, die Wasserechtheit (schwer), die Chlorbadewasserechtheit, die Säure- und Alkaliechtheit und die saure Überfärbeechtheit zu nennen. Weiterhin besitzen die mit der Verbindung der allgemeinen Formel (1) faserveredelten Materialien eine gute Lösungsmittelechtheit, eine gute Reibechtheit und eine gute Abgasechtheit. Die Lichtechtheit in trockenem und feuchtem Zustand des Substrates, insbesondere der von mit erfindungsgemäßen Farbstoffen veredelten Fasermaterialien, ist ebenfalls gut. Bei Anwendung von erfindungsgemäßen Farbstoffen zeigen die Drucke darüberhinaus eine hohe Konturenschärfe und eine sehr hohe Reinheit des Weißfonds. Die Färbungen und Drucke sind außerdem gegen kurzzeitige Einwirkung trockener Hitze, wie bspw. gegen eine Trockenhitzebehandlung bei 220°C während 30 Sekunden, unempfindlich; es erfolgt hierbei weder ein irreversibler Farbtonumschlag noch eine Zerstörung des Farbstoffes durch Thermocracking. Die erfindungsgemäßen Verbindungen der allgemeinen Formel (1) besitzen allgemein ein sehr gutes Aufziehvermögen und zeigen einen hohen Fixiergrad. Die erfindungsgemäßen Verbindungen fixieren auf den unterschiedlichen Fasermaterialien eines Baumwolle/Zellwolle-Mischgewebes in gleicher Intensität; so zeigen sie auf diesen Fasermaterialien gleiche Nuance und Farbstärke. Nachbehandlungen der gefärbten oder bedruckten Fasermaterialien, wie z. B. durch eine Knitterfestausrüstung (»Wash-and-Wear«-Ausrüstung), beeinflussen die Nuance der Färbungen nicht.

Die nachfolgenden Beispiele dienen zur Erläuterung der Erfindung. Die dort angegebenen Teile sind Gewichtsteile, die Angaben in Prozent beziehen sich auf Gewichtsprozent, sofern nichts anderes vermerkt. Volumenteile verhalten sich zu Gewichtsteilen wie Liter zu Kilogramm.

## Beispiel 1

272 Teile 4-Methyl-benzoesäure werden bei 100°C in 750 Teilen Chlorbenzol gelöst und bei dieser Temperatur unter Einleiten von elementarem Chlor unter UV-Licht chloriert; der Chlorierungsprozeß wird beendet, wenn sich 71 Teile Chlorwasserstoffsäure gebildet haben. Das Reaktionsgemisch wird sodann unter Rühren auf etwa 0°C gekühlt, der ausgefallene Niederschlag wird abgesaugt und durch mehrfaches Waschen mit leichtsiedendem Petroläther von Chlorbenzol befreit und getrocknet. Man erhält 307 Teile 4-(Chlormethyl)-benzoesäure mit einem Schmelzpunkt von 196 bis 200°C.

Diese wird in alkalisch wäßriger Lösung bei einem pH-Wert zwischen 8 und 10 und bei einer Temperatur von 60°C zunächst mit 163 Volumenteilen 2-Mercapto-äthanol umgesetzt. Sodann wird diese Lösung auf einen pH-Wert zwischen 4 und 7 gestellt und die Oxidationsreaktion in diesem pH-Bereich mittels Zugabe von 635 Volumenteilen 30%igem wäßrigem Wasserstoffperoxid bei einer Temperatur von 60°C bis zur Siedetemperatur der wäßrigen Reaktionslösung und vorteilhaft in Gegenwart katalytischer Mengen an Wolframsäure durchgeführt. Die so hergestellte 4-($\beta$-Hydroxyäthylsulfonyl)-methylbenzoesäure wird durch Ansäuern des Reaktionsansatzes, beispielsweise mittels konzentrierter Salzsäure, ausgefällt und isoliert.

Es werden 480 Teile eines etwa 80%igen Produktes erhalten, das einen Schmelzpunkt von 205 bis 210°C aufweist. Es kann durch Umfällen aus neutraler, wäßriger Lösung oder durch Umkristallisation aus Wasser oder Wasser/Äthanol gereinigt werden; es werden auf diese Weise 360 Teile eines etwa 98%igen Produktes erhalten, das einen Schmelzpunkt von 215 bis 218°C besitzt.

Dieses Produkt wird in einem Gemisch aus 750 Volumenteilen Thionylchlorid und 3 Volumenteilen Triäthylamin oder Dimethylformamid suspendiert und unter Rühren einige Zeit erwärmt. Die Umsetzung erfolgt vorteilhaft bei einer Temperatur zwischen 45 und 80°C. Sobald die Salzsäureentwicklung abgeklungen ist, entfernt man das überschüssige Thionylchlorid durch Destillation. Aus dem Destillationsrückstand erhält man 423 Teile des rohen Säurechlorids 4-($\beta$-Chloräthylsulfonyl-methyl)-benzoylchlorid mit einem Schmelzpunkt von 124°C. Dieses Säurechlorid besitzt noch etwa 3—7% Verunreinigungen. Wegen der starken Reaktionsbereitschaft der Benzoylchloridgruppe und der damit verbundenen Hydrolyseempfindlichkeit läßt sich diese erfindungsgemäße Benzoylchloridverbindung nicht weiter reinigen. Analysen bestätigen jedoch ihre chemische Struktur. Aus Toluol oder Chlorbenzol umkristallisiert schmilzt es bei 132 bis 135°C.

| | | | |
|---|---|---|---|
| Analyse: | C | gef. 43,6%, | ber. 43,2%, |
| | S | gef. 11,0%, | ber. 11,4%, |
| | Cl | gef. 25,6%, | ber. 25,3%. |

Dieses neue Säurechlorid kann in der oben erhältlichen rohen Produktform als Acylierungsmittel primärer oder sekundärer Aminogruppen von faserveredelnden Verbindungen oder deren Vorprodukte eingesetzt werden, um in dieses aminogruppenhaltige Molekül den faserreaktiven 4-(β-Chloräthylsulfonyl)-methyl-benzoyl-Rest einzuführen.

Beispiel 2

Man führt die gleiche Umsetzung gemäß den in Beispiel 1 beschriebenen Verfahrensweisen mit 272 Teilen 3-Methyl-benzoesäure zur Synthese des Säurechlorides 3-(β-Chloräthylsulfonyl)-methylbenzoylchlorid durch. Man erhält als Zwischenprodukt 300 Teile 3-(β-Hydroxyäthylsulfonyl)-methylbenzoesäure mit einem Schmelzpunkt von 160 bis 165°C; das daraus mittels Thionylchlorid erhältliche 3-(β-Chloräthylsulfonyl)-methyl-benzoylchlorid zeigt in roher Form einen Schmelzpunkt von 50–60°C. Aus Toluol oder Chlorbenzol umkristallisiert schmilzt es bei 67 bis 70°C.

| | | | |
|---|---|---|---|
| Analyse: | C | gef. 43,7%, | ber. 43,2%, |
| | S | gef. 10,7%, | ber. 11,4%, |
| | Cl | gef. 25,8%, | ber. 25,3%. |

Auch dieses Säurechlorid kann als Acylierungsmittel in Analogie zu den Angaben für dessen isomere Verbindung im Beispiel 1 dienen.

Beispiel 3

1500 Teile p-Tolylsäuremethylester werden unter UV-Belichtung bei einer Temperatur zwischen 95 und 100°C durch Einleiten von 329 Teilen Chlor chloriert. Danach wird der Ansatz durch Hindurchleiten von Stickstoff von Chlorwasserstoff- und Chlorgas befreit. Das rohe Chlorierungsgemisch wird sodann unter reduziertem Druck teildestilliert. In einem Vorlauf erhält man bis zu einer Übergangstemperatur von 140 bis 144°C/12 bis 27 mbar 1000 Teile Vorlauf, der in der Hauptsache aus Ausgangsprodukt besteht, das bei weiteren Chlorierungsansätzen mit reinem p-Tolylsäuremethylester vermischt wieder eingesetzt werden kann.

Als Destillationsrückstand verbleiben 646 Teile, die zu 80% aus 4-Chlormethyl-benzoesäuremethylester bestehen. Diesen Destillationsrückstand gießt man in ein Gemisch aus 1570 Teilen Wasser, 315 Teilen Mercaptoäthanol und 900 Teilen einer 33%igen wäßrigen Natronlauge. Man erhitzt dieses Reaktionsgemisch zum Sieden und hält es hierbei 30 Minuten lang bei einem pH-Wert von über 9. Anschließend setzt man der Lösung 14 Teile Wolframsäure sowie 5000 Teile Eis hinzu. Unter weiterem Rühren läßt man innerhalb von 15 Minuten 980 Teile wäßriges, 35%iges Wasserstoffsuperoxid einlaufen; hierbei steigt die Temperatur auf 30 bis 40°C an. Es wird unter Rühren zum Sieden erwärmt und weitergerührt, bis alles Wasserstoffsuperoxid verschwunden ist, was nach etwa 30 Minuten der Fall ist. Man läßt das Reaktionsgemisch etwas Abkühlen und setzt sodann 385 Teile einer 31%igen, wäßrigen Salzsäure hinzu. Man kühlt das Reaktionsgemisch auf Raumtemperatur und saugt das ausgefallene Reaktionsprodukt ab, das bei 110°C unter reduziertem Druck getrocknet wird.

Man erhält 825 Teile eines farblosen Pulvers, das zu 80% aus 4-(β-Hydroxyäthylsulfonylmethyl)-benzoesäure besteht und einen Schmelzpunkt von 205 bis 210°C zeigt. Das Produkt wird, wie im Beispiel 1 beschrieben, in das 4-(β-Chloräthylsulfonylmethyl)-benzoesäurechlorid übergeführt; es kann aber auch gemäß der Verfahrensweise des nachfolgenden Beispieles 4 umgesetzt werden.

Beispiel 3a

Man verfährt in der im Beispiel 3 angegebenen Verfahrensweise, ersetzt jedoch den p-Tolylsäuremethylester durch 1500 Teile m-Tolylsäuremethylester. Man erhält 735 Teile 3-(β-Hydroxyäthylsulfonylmethyl)-benzoesäure mit einem Reingehalt von 85% und einem Schmelzpunkt von 165°C. Dieses Produkt kann ebenfalls gemäß der Verfahrensweise des Beispieles 1 oder des Beispieles 4 in 3-(β-Chloräthylsulfonylmethyl)-benzoesäurechlorid übergeführt werden. Es besitzt in reiner Form (aus Toluol oder Chlorbenzol umkristallisiert) einen Schmelzpunkt von 67 bis 70°C.

### Beispiel 4

537 Teile 4-(β-Hydroxyäthylsulfonylmethyl)-benzoesäure werden in ein Gemisch aus 1000 Teilen Chlorbenzol und 5 Teilen Triäthylamin eingetragen; 670 Teile Thionylchlorid werden zugegeben, und das Reaktionsgemisch wird 2 Stunden lang bei etwa 80 bis 90°C gerührt. Überschüssiges Thionylchlorid wird sodann unter reduziertem Druck entfernt. Das verbleibende Reaktionsgemisch besteht aus 562 Teilen 4-(β-Chloräthylsulfonylmethyl)-benzoylchlorid. Es ist bei 60 bis 70°C flüssig und kann in der angefallenen Form zur Acylierung von Aminogruppen eingesetzt werden.

In reiner Form hat es einen Schmelzpunkt von 132 bis 135°C.

### Beispiel 5a

Es wird eine neutrale Lösung von 75,2 Teilen 1,3-Diaminobenzol-4-sulfonsäure in 800 Teilen Wasser hergestellt, die mit 70 Teilen kristallinem Natriumacetat versetzt und auf 0 bis 5°C abgekühlt wird. Unter gutem Rühren läßt man in diese Lösung bei 0 bis 5°C innerhalb einer Stunde eine Lösung von 124 Teilen 4-(β-Chloräthylsulfonyl-methyl)-benzoylchlorid (beispielsweise hergestellt nach obigem Beispiel 1) in 500 Volumenteilen Methylenchlorid zulaufen. Die anfallende Suspension wird mit Natriumcarbonat oder Natriumacetat anschließend auf einen pH-Wert von 5 bis 6 gestellt und noch 5 bis 6 Stunden bei 8 bis 10°C weitergerührt, danach abgesaugt und der Filterkuchen bei 70 bis 80°C unter reduziertem Druck getrocknet. Man erhält 180 Teile eines elektrolythaltigen (NaCl)-Pulvers, das die Verbindung der Formel

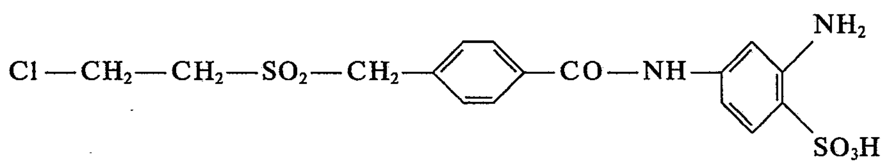

als Natriumsalz mit einem Gehalt von 72% enthält. Bei der Weiterverarbeitung dieses Acylierungsproduktes zu beispielsweise Farbstoffen ist in einer Regel eine Isolierung dieser Zwischenverbindung nicht notwendig, wodurch auch Ausbeuteverluste vermieden werden.

### Beispiel 5b

Man verfährt in der im Beispiel 4 angegebenen Verfahrensweise, setzt jedoch anstelle von 1,3-Diaminobenzol-4-sulfonsäure die gleiche Menge an der isomeren 1,4-Diaminobenzol-2-sulfonsäure ein. Man erhält in gleicher Ausbeute die Verbindung der Formel (in Form der freien Säure geschrieben)

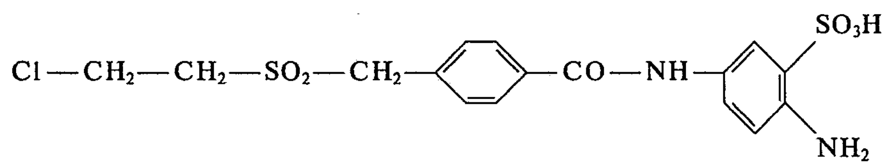

die als faserreaktive Diazokomponente zur Herstellung von faserreaktiven Azoverbindungen (Farbstoffen) technisch eingesetzt werden kann.

### Beispiel 5c

Man verfährt in der im Beispiel 4 angegebenen Verfahrensweise, setzt jedoch anstelle der 1,3-Diaminobenzol-4-sulfonsäure entweder 107 Teile 1,4-Diaminobenzol-2,6-disulfonsäure oder 80,8 Teile 2,4-Diamino-toluol-5-sulfonsäure oder 80,8 Teile 2,5-Diamino-toluol-4-sulfonsäure oder 80,8 Teile 2,4-Diamino-toluol-6-sulfonsäure als aromatisches Amin in die Acylierungsreaktion ein. Man erhält auf diese Weise in etwa gleich guter Ausbeute die aromatischen Aminoverbindungen entsprechend der allgemeinen Formel

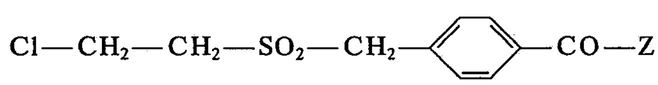

in welcher Z hier ein Rest der Formel (a), (b), (c) bzw. (d) bedeutet:

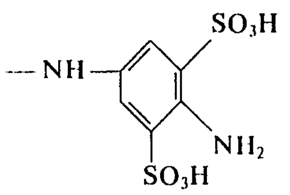

(a)

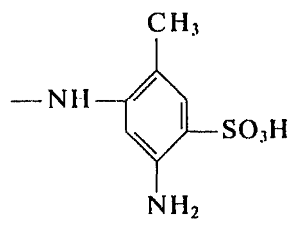

(b)

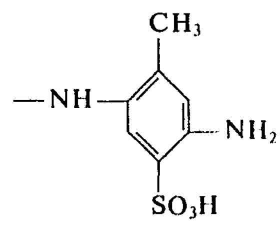

(c)

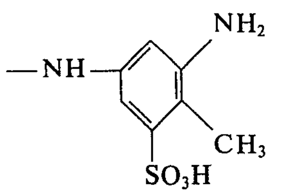

(d)

Diese können als Diazokomponenten zur Herstellung von faserreaktiven Azoverbindungen (Farbstoffen) dienen. Bei der Weiterverarbeitung dieser Acylierungsprodukte ist in aller Regel ihre vorherige Isolierung nicht notwendig; hierdurch werden Ausbeuteverluste vermieden.

Beispiel 5d

Es wird gemäß Beispiel 4 eine neutrale, Natriumacetat enthaltende wäßrige Lösung von 75,2 Teilen 1,3-Diaminobenzol-4-sulfonsäure hergestellt. Bei einer Temperatur von 20 bis 50°C läßt man unter gutem Rühren innerhalb einer Stunde eine Lösung von 124 Teilen 3-(β-Chloräthylsulfonyl-methylen)-benzoylchlorid in 100 Teilen Diglykoldimethyläther einlaufen. Die sich bildende Suspension stellt man anschließend mit Natriumcarbonat oder Natriumacetat auf einen pH-Wert von 5 bis 6 und rührt noch 5 bis 6 Stunden lang nach. Das Produkt wird abgesaugt und getrocknet. Man erhält ein elektrolythaltiges Pulver, das das Natriumsalz der 3-[3'-(β-Chloräthylsulfonyl-methyl)-benzoylamino]-anilin-4-sulfonsäure enthält. Die Ausbeute beträgt etwa 82% d. Th.

Beispiel 5e

Eine neutrale Lösung von 75,2 Teilen 1,3-Diamino-benzol-4-sulfonsäure in 800 Teilen Wasser wird mit 70 Teilen kristallisiertem Natriumacetat versetzt und abgekühlt. Unter gutem Rühren setzt man nun innerhalb einer Stunde eine 60 bis 70°C warme Lösung von 124 Teilen 4-(β-Chloräthylsulfonylmethyl)-benzoylchlorid in Chlorbenzol hinzu. Man rührt bei Raumtemperatur und einem pH-Wert von 5 bis 6 mehrere Stunden lang nach. Die Vollständigkeit der Umsetzung prüft man durch Titration der Aminogruppen. Bei einem Umsatz von 95% und mehr kann das rohe Reaktionsgemisch, das das Acylierungsprodukt der Formel von Beispiel 5a enthält, in Folgeumsetzungen, wie sie beispielsweise in den nachfolgenden Beispielen beschrieben werden, weiterverarbeitet werden.

Beispiel 6

43,3 Teile der Acylaminoverbindung von Beispiel 5a werden in 600 Teilen Wasser suspendiert; man gibt 20 Volumenteile einer wäßrigen 5n-Natriumnitritlösung hinzu. Bei einer Temperatur von 5 bis 10°C läßt man 35 Teile einer wäßrigen konzentrierten Salzsäure unter Rühren einlaufen und vervollständigt die Diazotierung unter 2stündigem Rühren. Überschüssiges Nitrit wird mit Amidosulfonsäure zerstört. Sodann gibt man als Kupplungskomponente 28,4 Teile 1-(4'-Sulfo)-phenyl-5-pyrazolon-3-carbonsäure hinzu und stellt den pH-Wert mit Natriumcarbonat auf 4 bis 5. Nach beendigter Kupplung wird die Lösung geklärt, und die gebildete wasserlösliche Azoverbindung wird aus dem Filtrat in üblicher Weise, beispielsweise durch Eindampfen, Sprühtrocknen oder Aussalzen, isoliert. Man erhält ein elektrolythaltiges braunes Pulver, das das Alkalimetallsalz der Verbindung der Formel

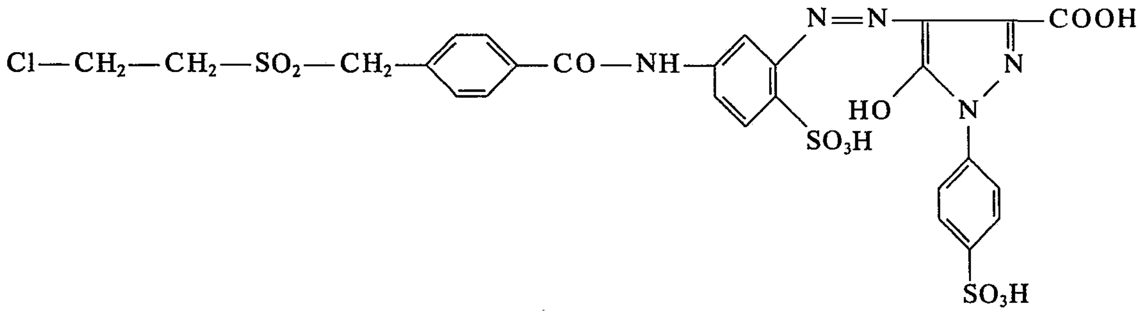

enthält. Diese löst sich in Wasser mit gelber Farbe und ist sehr gut als Farbstoff geeignet. Sie liefert nach den für faserreaktiven Farbstoffe üblichen Färbe- und Druckverfahren auf Polyamidfasermaterialien, Wolle und Seide, insbesondere aber auf Cellulosefasern brillante gelbe Färbungen. Sie besitzt eine hohe Fixiergeschwindigkeit und hohe Farbausbeute und ein hohes Ziehvermögen bei dem Ausziehverfahren.

Die mit ihr erhaltenen Färbungen und Drucke zeigen gute bis sehr gute Echtheiten, wie z. B. sehr gute Waschechtheiten bei 60 und 95°C, eine gute Wasserechtheit (schwer), Sodakochechtheit, Peroxidwaschechtheit, saure und alkalische Schweißechtheit, Chlorbadewasserechtheit, saure Überfärbeechtheit, Reibechtheit, Abgasechtheit und eine sehr gute Lichtechtheit auf feuchtem und trockenem Gewebe. Die Drucke zeichnen sich durch ihre hohe Konturenschärfe und Reinheit des Weißfonds aus. Nicht fixierte Anteile der erfindungsgemäß als Farbstoff eingesetzten Azoverbindung lassen sich leicht auswaschen. Färbungen und Drucke auf Baumwolle und Zellwolle zeigen gleiche Nuance und Farbtiefe bei der Anwendung nach den üblichen Druck- und Färbeverfahren. Nachbehandlungen der gefärbten Textilien, z. B. eine Knitterfestausrüstung (»Wash- and Wear«-Ausrüstung), verändern die Nuance der Färbung nicht.

## Beispiel 7

Es wird eine neutrale Lösung von 31,9 Teilen 1-Amino-8-hydroxynaphthalin-3,6-disulfonsäure in 300 Teilen Wasser hergestellt, die mit 30 Teilen kristallinem Natriumacetat versetzt und auf 5 bis 10°C abgekühlt wird. Unter Rühren gibt man innerhalb von 1 bis 2 Stunden 31 Teile 4-(β-Chloräthylsulfonyl)-methyl-benzoylchlorid in feingemahlener Form zu und rührt danach noch mehrere Stunden. Sodann läßt man eine Diazoniumsalzlösung aus 14,1 Teilen 2-Sulfo-anilin hinzulaufen und führt die Kupplungsreaktion bei einem pH-Wert von 6 bis 7 durch. Die Kupplungslösung wird anschließend geklärt und die hergestellte Azoverbindung aus dem Filtrat auf übliche Weise, beispielsweise durch Eindampfen, Sprühtrocknen oder Aussalzen, isoliert.

Es wird ein elektrolythaltiges dunkelrotes Pulver erhalten, das das Alkalimetallsalz der Verbindung der Formel

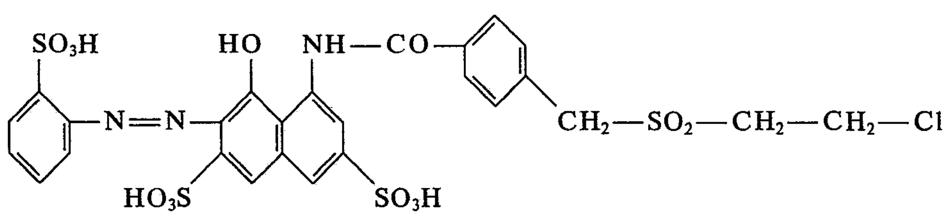

enthält. Diese Verbindung ist sehr gut als Farbstoff nach den üblichen Färbe- und Druckverfahren für faserreaktive Farbstoffe zum Färben von Polyamidfasermaterialien, Wolle und Seide, insbesondere aber für Cellulosefasermaterialien sehr gut geeignet. Sie liefert Färbungen und Drucke von brillanter roter Nuance mit den im Beispiel 6 angegebenen guten Echtheiten und färberischen Eigenschaften.

## Beispiel 8

237 Teile 6-Nitro-1-diazo-2-naphthol-4-sulfonsäure, 256 Teile 1-Amino-8-naphthol-2,4-disulfonsäure und 224 Teile Calciumhydroxid werden in 1200 Teilen Wasser und 1600 Teilen Eis 10 Stunden lang gerührt. Sodann erwärmt man das Reaktionsgemisch auf 60°C und gibt 156 Teile Natriumsulfid hinzu und rührt eine Stunde lang. Überschüssiges Sulfid wird mit 20 Teilen 30%igem Wasserstoffperoxid zerstört. Man gibt sodann 1200 Volumenteile 26%ige wäßrige Schwefelsäure hinzu, filtriert das ausgefallene Calciumsulfat ab und isoliert die so hergestellte Aminoazoverbindung aus dem Filtrat durch Aussalzen und Filtration.

Der feuchte Filterkuchen wird in 2400 Teilen Wasser mittels etwa 240 Teilen kristallisiertem Natriumacetat und 50 Volumenteilen einer wäßrigen 33%igen Natronlauge zu einer neutralen Lösung gelöst. Bei 0 bis 5 °C gibt man innerhalb von ein bis zwei Stunden sodann 260 Teile 4-(β-Chloräthylsulfonylmethylen)-benzoylchlorid in pulverisierter Form oder aber als 50 bis 60°C heiße Lösung in 200 Volumenteilen Diglykoldimethyläther oder Methylglykolacetat, Dioxan, Chlorbenzol oder Chloroform hinzu und rührt das Reaktionsgemisch mehrere Stunden lang.

Diese so erhaltene acylierte Azoverbindung wird anschließend in die Kupferkomplexverbindung übergeführt. Hierzu versetzt man die Lösung mit 88 Teilen basischem Kupfercarbonat, rührt das Reaktionsgemisch eine Stunde lang bei 60 bis 70°C und klärt es anschließend durch Filtration. Die Kupferkomplexazoverbindung wird durch Sprühtrocknung isoliert. Man erhält etwa 800 Teile eines schwarzen, elektrolythaltigen Pulvers, das das Alkalimetallsalz der Verbindung der Formel

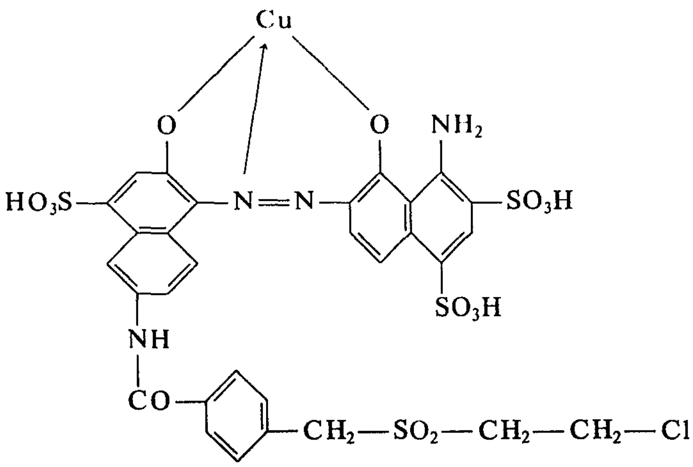

in einem etwa 67%igen Anteil enthält. Diese Kupferkomplexverbindung ist sehr gut als Farbstoff in allen für faserreaktive Farbstoffe üblichen Färbeverfahren geeignet und liefert auf Polyamid- und Cellulosefasern starke, reinblaue Färbungen und Drucke mit den im Beispiel 6 beschriebenen vorteilhaften Echtheitseigenschaften. Er fixiert insbesondere bereits in der Kälte (15–30°C) in Gegenwart von Alkalien auf Cellulosefasermaterialien nach den Methoden der Auszieh-, Klotz- und Druckverfahren und liefert hierbei kräftige, egale Färbungen.

Beispiel 9

Man diazotiert 25,3 Teile Anilin-2,5-disulfonsäure und kuppelt es im sauren Bereich mit 15,1 Teilen 3-Aminophenylharnstoff in üblicher Weise. Nach beendeter Kupplung stellt man den pH-Wert auf 7, setzt 30 Teile kristallines Natriumacetat hinzu und kühlt die Lösung auf 5 bis 10°C ab. Innerhalb von einer Stunde gibt man dann 33,7 Teile pulverisiertes 4-(β-Chloräthylsulfonyl)-methyl-benzoylchlorid hinzu und rührt das Reaktionsgemisch mehrere Stunden lang. Es wird geklärt, und die gebildete Azoverbindung mit Natriumchlorid ausgesalzen. Es werden nach Filtration und Trocknung 110 Teile eines elektrolythaltigen Pulvers erhalten, das das Natriumsalz der Verbindung der Formel

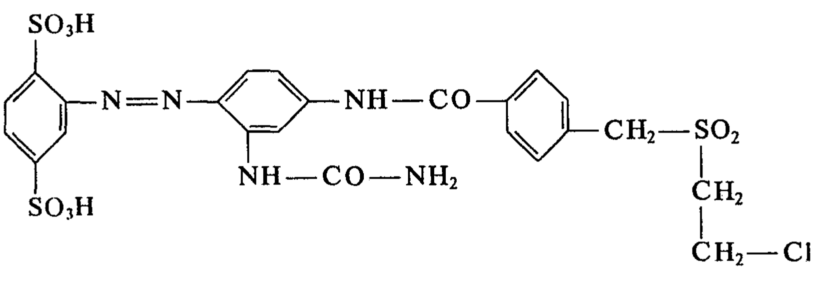

in einem Anteil von 44% enthält. Diese Verbindung liefert nach den in der Technik üblichen Färbeverfahren für faserreaktive Farbstoffe auf natürlichen und synthetischen Polyamidfasermaterialien, insbesondere aber auf Cellulosefasermaterialien, goldgelbe Färbungen und Drucke mit den im Beispiel 6 beschriebenen guten färberischen Eigenschaften und Echtheiten.

Beispiel 10

Auf übliche Weise wird aus 30,3 Teilen 2-Naphthylamin-1,5-disulfonsäure als Diazokomponente und

30,3 Teilen 1-Amino-8-naphthol-3,6-disulfonsäure in kongosaurem wäßrigem Medium die entsprechende Azoverbindung hergestellt. Nach beendeter Kupplung gibt man zu dieser Kupplungslösung als zweite Diazokomponente die Acylaminoverbindung von Beispiel 4 als Diazoniumsalz in Form einer wäßrigen Lösung, die durch Diazotierung von 20 Teilen dieser Acylaminoverbindung mittels einer wäßrigen 5 n-Natriumnitritlösung hergestellt worden war. Diese zweite Kupplungsreaktion führt man nun bei einem pH-Wert von 5 unter Zusatz von Natriumcarbonat durch. Anschließend wird das Reaktionsgemisch auf 60 bis 70°C erwärmt und geklärt. Die hergestellte faserreaktive Disazoverbindung wird durch Eindampfen, Sprühtrocknen oder Aussalzen isoliert. Es wird ein schwarzes elektrolythaltiges Pulver erhalten, das das Alkalimetallsalz der Verbindung der Formel

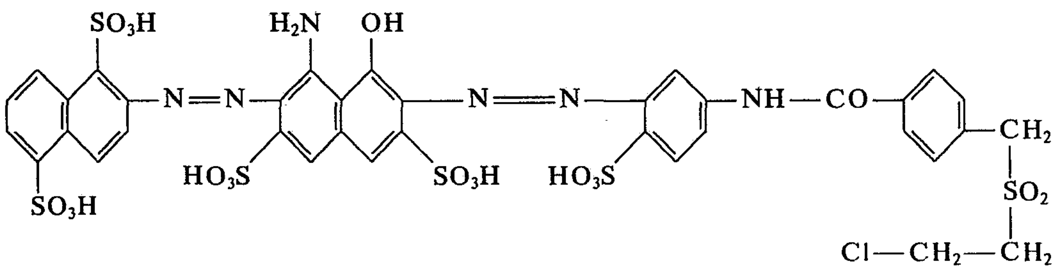

enthält. Diese Disazoverbindung eignet sich sehr gut nach den in der Technik üblichen Färbeweisen für faserreaktive Farbstoffe zum Färben von Polyamid- und Cellulosefasermaterialien und liefert auf ihnen grünstichig marineblaue bis schwarze Färbungen und Drucke mit den im Beispiel 6 genannten guten Eigenschaften.

Beispiele 11 bis 242

Man verfährt in erfindungsgemäßer Weise zur Herstellung der erfindungsgemäßen Azoverbindungen entsprechend der allgemeinen Formel (1) und deren Schwermetallkomplexderivaten, beispielsweise analog den in den vorherigen Ausführungsbeispielen 6 bis 10 beschriebenen Verfahrensweisen, und setzt hierzu als Diazo- und Kupplungskomponenten – erforderlichenfalls mit nachfolgender Acylierung des Aminofarbstoffes durch eine erfindungsgemäße Verbindung entsprechend der allgemeinen Formel (3) und/oder gegebenenfalls nachfolgender Überführung in die Schwermetallkomplexverbindung mittels eines Schwermetallsalzes – die in den nachfolgenden Tabellenbeispielen angegebenen Ausgangsverbindungen ein. Man erhält die entsprechenden erfindungsgemäßen Mono- oder Disazoverbindungen oder deren Schwermetallkomplexderivate, die ebenfalls gute anwendungstechnische Eigenschaften und Echtheiten aufweisen und Polyamidfasermaterialien oder Cellulosefasermaterialien mit den angegebenen Tönen färben.

| Beispiel | Diazokomponente | Kupplungskomponente | Farbton |
|---|---|---|---|
| 11 | 3-[4'-(β-Chloräthylsulfonylmethyl)-benzoylamino]-6-sulfo-anilin | 1-Acetylamino-8-naphthol-3,6-disulfonsäure | blaustichig-rot |
| 12 | desgl. | 1-Acetylamino-8-naphthol-4-sulfonsäure | desgl. |
| 13 | desgl. | 1-Acetylamino-8-naphthol-4,6-disulfonsäure | desgl. |
| 14 | desgl. | 1-Acetylamino-8-naphthol-6-sulfonsäure | desgl. |
| 15 | desgl. | 1-Benzoylamino-8-naphthol-4,6-disulfonsäure | desgl. |
| 16 | desgl. | 1-Benzoylamino-8-naphthol-3,6-disulfonsäure | desgl. |
| 17 | desgl. | 1-Tosylamino-8-naphthol-3,6-disulfonsäure | desgl. |

Fortsetzung

| Beispiel | Diazokomponente | Kupplungskomponente | Farbton |
|---|---|---|---|
| 18 | 3-[4'-(β-Chloräthylsulfonylmethyl)-benzoylamino]-6-sulfo-anilin | 1-Propionylamino-8-naphthol-3,6-disulfonsäure | blaustichig-rot |
| 19 | desgl. | 1-Phenylureido-8-naphthol-3,6-disulfonsäure | desgl. |
| 20 | desgl. | 1-Phenylureido-8-naphthol-4,6-disulfonsäure | desgl. |
| 21 | desgl. | 2-Acetylamino-8-naphthol-6-sulfonsäure | rotstichig-orange |
| 22 | desgl. | 2-Acetylamino-8-naphthol-3,6-disulfonsäure | rot |
| 23 | desgl. | 2-Nicotinylamino-8-naphthol-6-sulfonsäure | rotstichig-orange |
| 24 | desgl. | 2-Acetylamino-5-naphthol-7-sulfonsäure | orange |
| 25 | desgl. | 2-Acetylamino-5-naphthol-1,7-disulfonsäure | orange |
| 26 | desgl. | 2-Nicotinylamino-5-naphthol-7-sulfonsäure | orange |
| 27 | desgl. | 2-Propionylamino-8-naphthol-6-sulfonsäure | rotstichig-orange |
| 28 | desgl. | 2-Propionylamino-5-naphthol-7-sulfonsäure | orange |
| 29 | desgl. | 2-N-Methylacetylamino-8-naphthol-6-sulfonsäure | rotstichig-orange |
| 30 | desgl. | 2-N-Methylacetylamino-5-naphthol-7-sulfonsäure | orange |
| 31 | desgl. | 1-Naphthylamin-4-sulfonsäure | orange |
| 32 | desgl. | 1-Naphthylamin-5-sulfonsäure | orange |
| 33 | desgl. | 2-Naphthylamin-6-sulfonsäure | orange |
| 34 | desgl. | 2-Naphthylamin-3,6-disulfonsäure | orange |
| 35 | desgl. | 2-Naphthylamin-3,7-disulfonsäure | orange |
| 36 | desgl. | 1-Naphthol-3-sulfonsäure | orange |
| 37 | desgl. | 1-Naphthol-4-sulfonsäure | orange |
| 38 | desgl. | 1-Naphthol-5-sulfonsäure | rot |
| 39 | desgl. | 1-Naphthol-3,6-disulfonsäure | orange |
| 40 | desgl. | 1-Naphthol-4,8-disulfonsäure | rot |

Fortsetzung

| Beispiel | Diazokomponente | Kupplungskomponente | Farbton |
|---|---|---|---|
| 41 | 3-[4'-(β-Chloräthylsulfonylmethyl)-benzoylamino]-6-sulfo-anilin | 1-Naphthol-3,6,8-trisulfonsäure | rot |
| 42 | desgl. | 2-Naphthol-6-sulfonsäure | orange |
| 43 | desgl. | 2-Naphthol-3,6-disulfonsäure | orange |
| 44 | desgl. | 2-Naphthol-6,8-disulfonsäure | orange |
| 45 | desgl. | 1-[4'-(β-Chloräthylsulfonylmethyl)-benzoylamino]-8-naphthol-3,6-disulfonsäure | blaustichig-rot |
| 46 | desgl. | 1-(4'-Sulfophenyl)-3-methyl-5-pyrazolon | gelb |
| 47 | desgl. | 1-(4'-Sulfophenyl)-3-carbomethoxy-5-pyrazolon | gelb |
| 48 | desgl. | 1-(2'-Chlor-5'-sulfo-phenyl)-3-methyl-5-pyrazolon | gelb |
| 49 | desgl. | 1-(2',5'-Disulfophenyl)-3-methyl-5-pyrazolon | gelb |
| 50 | desgl. | 1-(4',8'-Disulfo-2'-naphthyl)-3-methyl-5-pyrazolon | gelb |
| 51 | desgl. | 1-(4'-Sulfophenyl)-3-methyl-5-aminopyrazol | gelb |
| 52 | desgl. | N-Äthyl-N-(3'-sulfobenzyl)-anilin | orange |
| 53 | desgl. | N,N-Bis-(β-hydroxyäthyl)-anilin | orange |
| 54 | desgl. | N,N-Bis-(β-sulfatoäthyl)-anilin | orange |
| 55 | desgl. | N-Äthyl-N-(β-sufatoäthyl)-anilin | orange |
| 56 | desgl. | Resorcin | orange |
| 57 | desgl. | Resorcinsulfonsäure | orange |
| 58 | desgl. | 1,4-Dimethyl-2-hydroxy-5-sulfo-6-pyridon | gelb |
| 59 | desgl. | 2-Hydroxy-4-methyl-5-sulfo-6-pyridon | gelb |
| 60 | desgl. | 2-Amino-8-naphthol-6-sulfonsäure (sauer gekuppelt) | rot |
| 61 | desgl. | 1-Amino-8-naphthol-2,4-disulfonsäure | blaustichig-rot |
| 62 | desgl. | Acetoacetanilin-3-sulfonsäure | gelb |

Fortsetzung

| Beispiel | Diazokomponente | Kupplungskomponente | Farbton |
|---|---|---|---|
| 63 | 3-[4'-(β-Chloräthylsulfonylmethyl)-benzoylamino]-6-sulfo-anilin | 8-Hydroxychinolin-5-sulfonsäure | orange |
| 64 | desgl. | Diphenylamin-4-sulfonsäure | orange |
| 65 | desgl. | 1-Phenylamino-naphthalin-8-sulfonsäure | bordo |
| 66 | 4-[4'-(β-Chloräthylsulfonylmethyl)-benzoylamino]-2-sulfo-anilin | 1-Acetylamino-8-naphthol-3,6-disulfonsäure | rotstichig-violett |
| 67 | desgl. | 1-Naphthol-3,6-disulfonsäure | rot |
| 68 | desgl. | 1-(4'-Sulfophenyl)-3-carboxy-5-pyrazolon | rotstichig-gelb |
| 69 | desgl. | 2-Acetylamino-8-naphthol-6-sulfonsäure | blaustichig-rot |
| 70 | desgl. | 2-Naphthylamin-3,6-disulfonsäure | rot |
| 71 | desgl. | 2-Amino-8-naphthol-6-sulfonsäure | blaustichig-rot |
| 72 | 4-[4'-(β-Chloräthylsulfonylmethyl)-benzoylamino]-2,6-disulfo-anilin | 2-Acetylamino-5-naphthol-7-sulfonsäure | orange |
| 73 | desgl. | 1-(4'-Sulfophenyl)-3-methyl-5-pyrazolon | rotstichig-gelb |
| 74 | desgl. | 1-Naphthol-4-sulfonsäure | rot |
| 75 | 3-[4'-(β-Chloräthylsulfonylmethyl)-benzoylamino]-4-methyl-6-sulfo-anilin | 1-Acetylamino-3,6-disulfo-8-naphthol | blaustichig-rot |
| 76 | desgl. | 3,6-Disulfo-1-naphthol | orange |
| 77 | desgl. | 1-(4'-Sulfophenyl)-3-carbo-methoxy-5-pyrazolon | rotstichig-gelb |
| 78 | desgl. | 3,6-Disulfo-2-naphthylamin | orange |
| 79 | 4-[4'-(β-Chloräthylsulfonylmethyl)-benzoylamino]-5-methyl-2-sulfo-anilin | 3,8-Disulfo-1-naphthol | rot |
| 80 | desgl. | 3,7-Disulfo-2-naphthylamin | rotstichig-orange |
| 81 | desgl. | 1-Acetylamino-3,6-disulfo-8-naphthol | rotstichig-violett |
| 82 | 3-[2'-(β-Chloräthylsulfonylmethyl)-benzoylamino]-6-sulfo-anilin | 1-Acetylamino-4,6-disulfo-8-naphthol | blaustichig-rot |
| 83 | desgl. | 3,6-Disulfo-1-naphthol | orange |

Fortsetzung

| Beispiel | Diazokomponente | Kupplungskomponente | Farbton |
|---|---|---|---|
| 84 | 3-[2'-(β-Chloräthylsulfonylmethyl)-benzoylamino]-6-sulfo-anilin | 1-(4'-Sulfophenyl)-3-carboxy-5-pyrazolon | rotstichig-gelb |
| 85 | desgl. | 2-Amino-6-sulfo-8-naphthol | rot |
| 86 | 3-[3'-(β-Chloräthylsulfonylmethyl)-benzoylamino]-6-sulfo-anilin | 1-Acetylamino-3,6-disulfo-8-naphthol | blaustichig-rot |
| 87 | desgl. | 2-Acetylamino-6-sulfo-8-naphthol | rotstichig-orange |
| 88 | desgl. | 3,6-Disulfo-2-naphthylamin | orange |
| 89 | desgl. | 1-(4'-Sulfophenyl)-3-carboxy-5-pyrazolon | rotstichig-gelb |
| 90 | desgl. | 2-Amino-6-sulfo-8-naphthol | rot |
| 91 | 4-[3'-(β-Chloräthylsulfonylmethyl)-benzoylamino]-2-sulfo-anilin | 1-Phenylureido-3,6-disulfo-8-naphthol | rotstichig-violett |
| 92 | desgl. | 3,6-Disulfo-1-naphthol | rot |
| 93 | desgl. | 3,6-Disulfo-2-naphthylamin | rotstichig-orange |
| 94 | desgl. | 1-(4'-Sulfophenyl)-3-methyl-5-pyrazolon | rotstichig-gelb |
| 95 | desgl. | 2-Amino-6-sulfo-8-naphthol | blaustichig-rot |
| 96 | Sulfanilsäure | 1-[4'-(β-Chloräthylsulfonylmethyl)-benzoylamino]-3,6-disulfo-8-naphthol | rot |
| 97 | Anthranilsäure | desgl. | rot |
| 98 | 2,4-Disulfo-anilin | desgl. | rot |
| 99 | 2,5-Disulfo-anilin | desgl. | rot |
| 100 | 3-Sulfo-anilin | desgl. | rot |
| 101 | 3-Acetylamino-6-sulfo-anilin | desgl. | blaustichig-rot |
| 102 | 4-Acetylamino-6-sulfo-anilin | desgl. | rotstichig-violett |
| 103 | 4-Acetylamino-2,6-disulfo-anilin | desgl. | desgl. |
| 104 | 2-Methoxyanilin-4-sulfonsäure | desgl. | blaustichig-rot |
| 105 | 2-Methoxyanilin-5-sulfonsäure | desgl. | desgl. |
| 106 | 2,5-Dichloranilin-4-sulfonsäure | desgl. | desgl. |

Fortsetzung

| Beispiel | Diazokomponente | Kupplungskomponente | Farbton |
|---|---|---|---|
| 107 | 2,4-Dichloranilin-5-sulfonsäure | 1-[4'-(β-Chloräthylsulfonylmethyl)-benzoylamino]-3,6-disulfo-8-naphthol | blaustichig-rot |
| 108 | 2-Methoxy-5-methyl-4-sulfo-anilin | desgl. | desgl. |
| 109 | 4-Chlor-2-sulfo-anilin | desgl. | rot |
| 110 | 4-Methyl-2-sulfo-anilin | desgl. | rot |
| 111 | 4-Sulfo-1-naphthylamin | desgl. | violett |
| 112 | 1-Sulfo-2-naphthylamin | desgl. | blaustichig-rot |
| 113 | 6-Sulfo-2-naphthylamin | desgl. | desgl. |
| 114 | 1,5-Disulfo-2-naphthylamin | desgl. | desgl. |
| 115 | 6,8-Disulfo-2-naphthylamin | desgl. | violett |
| 116 | 3,6-Disulfo-2-naphthylamin | desgl. | blaustichig-rot |
| 117 | 5,7-Disulfo-2-naphthylamin | desgl. | desgl. |
| 118 | 3,6,8-Trisulfo-2-naphthylamin | desgl. | violett |
| 119 | 2-Sulfo-4-amino-diphenylamin | desgl. | rotstichig-blau |
| 120 | 2-Sulfo-4-amino-4'-methoxy-diphenylamin | desgl. | desgl. |
| 121 | 2-Sulfo-4-amino-2'-methoxy-diphenylamin | desgl. | desgl. |
| 122 | 4-Sulfo-6-chlor-3-amino-toluol | desgl. | rot |
| 123 | 2-Chlor-anilin | desgl. | rot |
| 124 | 4-Chlor-anilin | desgl. | rot |
| 125 | 4-Methoxy-anilin | desgl. | blaustichig-rot |
| 126 | 4-Toluidin | desgl. | desgl. |
| 127 | 4-Sulfo-2-aminophenol | desgl. | violett (Kupfer-komplex) |
| 128 | 5-Sulfo-2-aminophenol | desgl. | violett (Cu-Komplex) |

Fortsetzung

| Beispiel | Diazokomponente | Kupplungskomponente | Farbton |
|---|---|---|---|
| 129 | Orthanilsäure | 1-[4'-(β-Chloräthylsulfonylmethyl)-benzoylamino]-4,6-disulfo-8-naphthol | rot |
| 130 | Sulfanilsäure | desgl. | rot |
| 131 | 2,5-Disulfo-anilin | desgl. | rot |
| 132 | 3-Acetylamino-6-sulfo-anilin | desgl. | blaustichig-rot |
| 133 | 2-Methoxy-5-sulfo-anilin | desgl. | desgl. |
| 134 | 2,5-Dimethoxy-4-sulfo-anilin | desgl. | rotstichig-violett |
| 135 | 2-Methoxy-5-methyl-4-sulfo-anilin | desgl. | blaustichig-rot |
| 136 | 2-Methoxy-5-chlor-4-sulfo-anilin | desgl. | desgl. |
| 137 | 5-Sulfo-1-naphthylamin | desgl. | violett |
| 138 | 1-Sulfo-2-naphthylamin | desgl. | blaustichig-rot |
| 139 | 1,5-Disulfo-2-naphthylamin | desgl. | desgl. |
| 140 | 6-Sulfo-2-naphthylamin | desgl. | desgl. |
| 141 | 4,8-Disulfo-2-naphthylamin | desgl. | rotstichig-violett |
| 142 | 3,6,8-Trisulfo-2-naphthylamin | desgl. | desgl. |
| 143 | 2-Sulfo-4-amino-4'-methoxy-diphenylamin | desgl. | rotstichig-blau |
| 144 | 4-Sulfo-6-chlor-3-aminotoluol | desgl. | blaustichig-rot |
| 145 | 4-[4'-(β-Chloräthylsulfonyl-methylen)-benzoylamino]-2-sulfo-anilin | desgl. | rotstichig-violett |
| 146 | 3-[4'-(β-Chloräthylsulfonylmethyl)-benzoylamino]-6-sulfo-anilin | desgl. | blaustichig-rot |
| 147 | Sulfanilsäure | 2-[4'-(β-Chloräthylsulfonylmethyl)-benzoylamino]-6-sulfo-8-naphthol | orange |
| 148 | Orthanilsäure | desgl. | orange |
| 149 | 2,4-Disulfoanilin | desgl. | orange |
| 150 | 5-Sulfo-2-methoxy-anilin | desgl. | rot |
| 151 | 4,8-Disulfo-2-naphthylamin | desgl. | rot |

Fortsetzung

| Beispiel | Diazokomponente | Kupplungskomponente | Farbton |
|---|---|---|---|
| 152 | 4-[4'-(β-Chloräthylsulfonylmethyl)-benzoylamino]-2,6-disulfo-anilin | 2-[4'-(β-Chloräthylsulfonylmethyl)-benzoylamino]-6-sulfo-8-naphthol | blaustichig-rot |
| 153 | Sulfanilsäure | 2-[4'-(β-Chloräthylsulfonylmethyl)-benzoylamino]-7-sulfo-5-naphthol | gelb |
| 154 | 4-Sulfo-2,5-dimethoxy-anilin | desgl. | rot |
| 155 | 1,5-Disulfo-2-naphthylamin | desgl. | orange |
| 156 | 4-[3'-(β-Chloräthylsulfonylmethyl)-benzoylamino]-2,6-disulfo-anilin | desgl. | rot |
| 157 | Orthanilsäure | 1-[3'-(β-Chloräthylsulfonylmethyl)-benzoylamino]-3,6-disulfo-8-naphthol | rot |
| 158 | 1,5-Disulfo-2-naphthylamin | desgl. | blaustichig-rot |
| 159 | 4-Sulfo-2,5-dimethoxy-anilin | desgl. | desgl. |
| 160 | desgl. | 1-[3'-(β-Chloräthylsulfonylmethyl)-benzoylamino]-4,6-disulfo-8-naphthol | desgl. |
| 161 | 4,8-Disulfo-2-naphthylamin | desgl. | desgl. |
| 162 | 2-Sulfo-4-amino-4'-methoxy-diphenylamin | desgl. | blau |
| 163 | 2,4-Disulfo-anilin | 2-[3'-(β-Chloräthylsulfonylmethyl)-benzoylamino]-6-sulfo-8-naphthol | orange |
| 164 | 1,5-Disulfo-2-naphthylamin | desgl. | rot |
| 165 | desgl. | 2-[3'-(β-Chloräthylsulfonylmethyl)-benzoylamino]-7-sulfo-5-naphthol | orange |
| 166 | 4-Sulfo-2-methoxy-anilin | desgl. | scharlach |
| 167 | 3-[3'-(β-Chloräthylsulfonylmethyl)-benzoylamino]-6-sulfoanilin | desgl. | rot |

Metallkomplex-Monoazoverbindungen (bspw. analog Beispiel 8) mit:

| Beispiel | Diazokomponente | Kupplungskomponente | Farbton |
|---|---|---|---|
| Kupferkomplexverbindungen: | | | |
| 168 | 6-[3'-(β-Chloräthylsulfonylmethyl)-benzoylamino]-4-sulfo-1-amino-2-naphthol | 1-Amino-2,4-disulfo-8-naphthol | reinblau |

Fortsetzung

| Beispiel | Diazokomponente | Kupplungskomponente | Farbton |
|---|---|---|---|
| 169 | 6-[4'-(β-Chloräthylsulfonylmethyl)-benzoylamino]-4-sulfo-1-amino-2-naphthol | 1-Acetylamino-4,6-disulfo-8-naphthol | marineblau |
| 170 | 6-[4'-(β-Chloräthylsulfonylmethyl)-benzoylamino]-4,8-disulfo-2-amino-1-naphthol | 1-Acetylamino-3,6-disulfo-8-naphthol | marineblau |
| 171 | 6-[4'-(β-Chloräthylsulfonylmethyl)-benzoylamino]-4-sulfo-2-amino-phenol | 1-(2',5'-Disulfophenyl)-3-methyl-5-pyrazolon | gelbbraun |
| 172 | 4-[4'-(β-Chloräthylsulfonylmethyl)-benzoylamino]-2-sulfo-anilin (bei oxidativer Kupferung) | 1-Naphthol-3,6-disulfonsäure | violett |
| 173 | desgl. | 3,6-Disulfo-2-naphthol | violett |
| 174 | 4-Sulfo-2-methoxy-anilin (bei entalkyl. Kupferung) | 1-[4'-(β-Chloräthylsulfonylmethyl)-benzoylamino]-3,6-disulfo-8-naphthol | violett |
| 175 | 5-Sulfo-2-methoxy-anilin (entalkylierend) | desgl. | violett |
| 176 | 4-Sulfo-2,5-dimethoxy-anilin (entalkylierend) | desgl. | rotstichig-blau |
| 177 | 4-Sulfo-2-methoxy-5-chlor-anilin (entalkylierend) | desgl. | desgl. |
| 178 | 6-Sulfo-2-naphthylamin (oxidierend) | desgl. | blaustichig-violett |
| 179 | 4,8-Disulfo-2-naphthylamin (oxidierend) | desgl. | rotstichig-blau |
| 180 | 4-Sulfo-6-nitro-1-amino-2-naphthol | desgl. | blau |
| 181 | 4-Sulfo-2-methoxy-5-methyl-anilin (entalkylierend) | 1-[4'-(β-Chloräthylsulfonylmethyl)-benzoylamino]-4,6-disulfo-8-naphthol | violett |
| 182 | 4-Sulfo-2-methoxy-5-chlor-anilin (entalkylierend) | desgl. | violett |
| 183 | 6-Sulfo-2-naphthylamin (oxidierend) | desgl. | violett |
| 184 | 4-Sulfo-2-aminophenol | desgl. | violett |
| 185 | 5-Sulfo-2-aminophenol | desgl. | violett |
| 186 | 4,8-Disulfo-6-nitro-2-amino-naphthalin (oxidierend) | desgl. | blau |
| 187 | 4,8-Disulfo-2-naphthylamin (oxidierend) | 2-[4'-(β-Chloräthylsulfonylmethyl)-benzoylamino]-6-sulfo-8-naphthol | violett |

Fortsetzung

| Beispiel | Diazokomponente | Kupplungskomponente | Farbton |
|---|---|---|---|
| 188 | 4-Sulfo-2,5-dimethoxy-anilin (entalkylierend) | 2-[4'-(β-Chloräthylsulfonylmethyl)-benzoylamino]-6-sulfo-8-naphthol | violett |
| 189 | 5-Sulfo-2-aminophenol | desgl. | violett |
| 190 | 4-Sulfo-2,5-dimethoxyanilin (entalkylierend) | 2-[4'-(β-Chloräthylsulfonylmethyl)-benzoylamino]-7-sulfo-5-naphthol | violett |
| 191 | 4,8-Disulfo-2-naphthylamin (oxidierend) | desgl. | violett |
| 192 | 4-Sulfo-2,5-dimethoxy-anilin (entalkylierend) | 1-[3'-(β-Chloräthylsulfonylmethyl)-benzoylamino]-3,6-disulfo-8-naphthol | blau |
| 193 | desgl. | 1-[3'-(β-Chloräthylsulfonylmethyl)-benzoylamino]-4,6-disulfo-8-naphthol | rotstichig-blau |
| 194 | 4,8-Disulfo-2-naphthylamin (oxidierend) | desgl. | violett |
| 195 | 5-Sulfo-aminophenol | 2-[3'-(β-Chloräthylsulfonylmethyl)-benzoylamino]-6-sulfo-8-naphthol | violett |
| Chromkomplexverbindungen: | | | |
| 196 | 3-[4'-(β-Chloräthylsulfonylmethyl)-benzoylamino]-6-sulfo-anilin | Salicylsäure | gelb |
| 197 | desgl. | Anthranilsäure | gelb |

Monoazoverbindungen (analog Beispiel 9) mit:

| Beispiel | Diazokomponente | Kupplungskomponente | Acylierungsmittel | Farbton |
|---|---|---|---|---|
| 198 | 3,6,8-Trisulfo-2-naphthylamin | 3-Amino-phenyl-harnstoff | 4-(β-Chloräthyl-sulfonylmethyl)-benzoylchlorid | gelbstichig-orange |
| 199 | desgl. | desgl. | 3-(β-Chloräthyl-sulfonylmethyl)-benzoylchlorid | desgl. |
| 200 | 4,8-Disulfo-2-naphthylamin | 3-Methylanilin | desgl. | rotstichig-gelb |
| 201 | 2,4-Disulfo-anilin | 2-Methoxy-5-acetyl-amino-anilin | 4-(β-Chloräthyl-sulfonylmethyl)-benzoylchlorid | gelbstichig-orange |
| 202 | 1,5-Disulfo-2-naphthylamin | 1-Aminonaphthalin-(6,7)-sulfonsäure | desgl. | orange |
| 203 | 2,4-Disulfo-anilin | 3-Aminophenyl-harnstoff | desgl. | goldgelb |

Fortsetzung

| Beispiel | Diazokomponente | Kupplungskomponente | Acylierungsmittel | Farbton |
|---|---|---|---|---|
| 204 | 6,8-Disulfo-2-naphthylamin | 3-Acetylamino-anilin | 4-(β-Chloräthyl-sulfonylmethyl)-benzoylchlorid | rotstichig-gelb |
| 205 | 4-Acetylamino-2,6-disulfo-anilin | desgl. | 3-(β-Chloräthyl-sulfonylmethyl)-benzoylchlorid | desgl. |
| 206 | 3-[4'-(β-Chloräthyl-sulfonylmethyl)-benzoylamino]-6-sulfo-anilin | 3-Amino-phenyl-harnstoff | 4-(β-Chloräthyl-sulfonylmethyl)-benzoylchlorid | desgl. |
| 207 | desgl. | 3-Acetylamino-anilin | desgl. | desgl. |
| 208 | desgl. | 2-Methoxy-5-acetyl-amino-anilin | desgl. | orange |

Disazoverbindungen mit:

| Beispiel | 1. Diazokomponente | Kupplungskomponente | 2. Diazokomponente | Farbton |
|---|---|---|---|---|
| 209 | Sulfanilsäure | 1-Amino-3,6-disulfo-8-naphthol | 3-[4'-(β-Chloräthyl-sulfonylmethyl)-benzoylamino]-6-sulfo-anilin | blaustichig-schwarz |
| 210 | 2,5-Disulfoanilin | desgl. | desgl. | desgl. |
| 211 | 2,4-Disulfoanilin | desgl. | desgl. | desgl. |
| 212 | Orthanilsäure | desgl. | desgl. | desgl. |
| 213 | 1-Sulfo-2-naphthyl-amin | desgl. | desgl. | grünstichig-schwarz |
| 214 | 3,6-Disulfo-2-naphthylamin | desgl. | desgl. | desgl. |
| 215 | 4,8-Disulfo-2-naphthylamin | desgl. | desgl. | desgl. |
| 216 | 4-Sulfo-2-naphthyl-amin | desgl. | desgl. | desgl. |
| 217 | Orthanilsäure | desgl. | 4-[4'-(β-Chloräthyl-sulfonylmethyl)-benzoylamino]-2-sulfo-anilin | desgl. |
| 218 | Sulfanilsäure | desgl. | desgl. | desgl. |
| 219 | 2,4-Disulfoanilin | desgl. | desgl. | desgl. |
| 220 | 2,5-Disulfoanilin | desgl. | desgl. | desgl. |

Fortsetzung

| Beispiel | 1. Diazokomponente | Kupplungskomponente | 2. Diazokomponente | Farbton |
|---|---|---|---|---|
| 221 | 1,5-Disulfo-2-naphthylamin | 1-Amino-3,6-disulfo-8-naphthol | 4-[4'-(β-Chloräthylsulfonylmethyl)-benzoylamino]-2-sulfo-anilin | grünstichig-schwarz |
| 222 | 4,8-Disulfo-2-naphthylamin | desgl. | desgl. | desgl. |
| 223 | 4-Sulfo-2,5-dichlor-anilin | desgl. | desgl. | desgl. |
| 224 | Orthanilsäure | desgl. | 4-[3'-(β-Chloräthylsulfonylmethyl)-benzoylamino]-2-sulfo-anilin | desgl. |
| 225 | 2,5-Disulfoanilin | desgl. | desgl. | desgl. |
| 226 | 1,5-Disulfo-2-naphthylamin | desgl. | desgl. | desgl. |
| 227 | Sulfanilsäure | desgl. | 3-[3'-(β-Chloräthylsulfonylmethyl)-benzoylamino]-6-sulfo-anilin | blaustichig-schwarz |
| 228 | 2,4-Disulfoanilin | desgl. | desgl. | desgl. |
| 229 | 1,5-Disulfo-2-naphthylamin | desgl. | desgl. | grünstichig-schwarz |
| 230 | 2,5-Disulfo-anilin | 1-Amino-4,6-disulfo-8-naphthol | desgl. | blaustichig-schwarz |
| 231 | 1,5-Disulfo-2-naphthylamin | desgl. | desgl. | schwarz |
| 232 | desgl. | desgl. | 3-[4'-(β-Chloräthylsulfonylmethyl)-benzoylamino]-6-sulfo-anilin | schwarz |
| 233 | 2,5-Disulfoanilin | desgl. | desgl. | schwarz |
| 234 | desgl. | desgl. | 4-[4'-(β-Chloräthylsulfonylmethyl)-benzoylamino]-2-sulfo-anilin | schwarz |
| 235 | 3-[4'-(β-Chloräthylsulfonylmethyl)-benzoylamino]-6-sulfo-anilin | 1-Amino-3,6-disulfo-8-naphthol | 3-[4'-(β-Chloräthylsulfonylmethyl)-benzoylamino]-6-sulfo-anilin | schwarz |
| 236 | desgl. | 1-Amino-4,6-disulfo-8-naphthol | desgl. | blaustichig-schwarz |
| 237 | desgl. | Resorcin | desgl. | orange |

Fortsetzung

| Beispiel | 1. Diazokomponente | Kupplungskomponente | 2. Diazokomponente | Farbton |
|---|---|---|---|---|
| 238 | 4-[4'-(β-Chloräthyl-sulfonylmethyl)-benzoylamino]-2-sulfo-anilin | 1-Amino-3,6-disulfo-8-naphthol | 4-[4'-(β-Chloräthyl-sulfonylmethyl)-benzoylamino]-2-sulfo-anilin | grünstichig-schwarz |
| 239 | desgl. | 1-Amino-4,6-disulfo-8-naphthol | desgl. | schwarz |
| 240 | 4-[4'-(β-Chloräthyl-sulfonylmethyl)-benzoylamino]-2,6-disulfo-anilin | desgl. | 4-[4'-(β-Chloräthyl-sulfonylmethyl)-benzoylamino]-2,6-disulfo-anilin | grünstichig-schwarz |
| 241 | 4-[4'-(β-Chloräthyl-sulfonylmethyl)-benzoylamino]-5-methyl-2-sulfo-anilin | 1-Amino-3,6-disulfo-8-naphthol | 4-[4'-(β-Chloräthyl-sulfonylmethyl)-benzoylamino]-5-methyl-2-sulfo-anilin | desgl. |
| 242 | 4-[3'-(β-Chloräthyl-sulfonylmethyl)-benzoylamino]-2-sulfo-anilin | desgl. | 4-[3'-(β-Chloräthyl-sulfonylmethyl)-benzoylamino]-2-sulfo-anilin | desgl. |

Beispiel 243

Es wird gemäß Beispiel 7 aus 31,9 Teilen 1-Amino-8-naphthol-3,6-disulfonsäure und 31 Teilen 4-(β-Chloräthylsulfonylmethyl)-benzoylchlorid die erfindungsgemäße, faserreaktive Kupplungskomponente 1-[4'-(β-Chloräthylsulfonylmethyl)-benzoylamino]-3,6-disulfo-8-naphthol hergestellt. In einem getrennten Ansatz werden 17,2 Teile Benzidin-2,2'-disulfonsäure in üblicher Verfahrensweise tetrazotiert. Zur Herstellung der Disazoverbindung werden beide Reaktionsgemische vereinigt, und die Kupplung erfolgt bei einem pH-Wert von 5–6. Nach Eindampfen des Kupplungsansatzes erhält man ein elektrolythaltiges dunkles Pulver, das 51 Teile des Alkalimetallsalzes (beispielsweise Natriumsalzes) der Verbindung der Formel

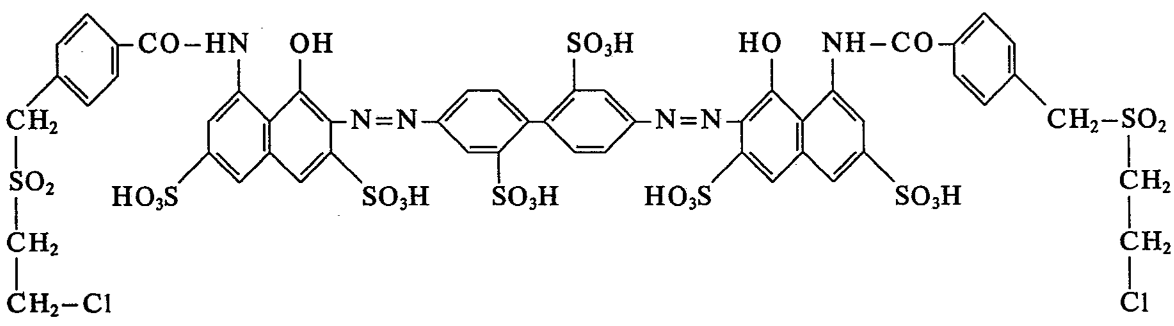

enthält. Diese Disazoverbindung eignet sich ausgezeichnet als Farbstoff zum Färben von Polyamidfasermaterialien und Cellulosefasermaterialien, auf denen sie kräftige, egale violette Färbungen und Drucke nach den für faserreaktive Farbstoffe üblichen Färbeverfahren liefert. Die Färbungen zeichnen sich durch gute Naßechtheiten aus.

Beispiele 244 bis 252

Man verfährt analog der im Beispiel 243 angegebenen Verfahrensweise zur Herstellung einer erfindungsgemäßen Disazoverbindung entsprechend der allgemeinen Formel (1) unter Verwendung von einem Mol einer tetrazotierbaren Diaminoverbindung und 2 Mol einer Kupplungskomponente gemäß den Angaben der nachfolgenden Tabellenbeispiele. Die erhaltenen Disazoverbindungen eignen sich

sehr gut nach den in der Technik üblichen Färbeverfahren für faserreaktive Farbstoffe zum Färben von Polyamid- und Cellulosefasern mit guten Echtheiten in den hier angegebenen Farbtönen.

| Beispiel | 2 Mol Kupplungskomponente | 1 Mol Tetrazokomponente | Farbton der Färbung |
|---|---|---|---|
| 244 | 1-[4'-(β-Chloräthylsulfonylmethyl)-benzoylamino]-3,6-disulfo-8-naphthol | Benzidin-3,3'-disulfonsäure | rotstichig-blau |
| 245 | desgl. | o-Tolidin | desgl. |
| 246 | desgl. | o-Dianisidin | desgl. |
| 247 | desgl. | p-Phenylendiamin | violett |
| 248 | desgl. | 1,3-Diaminobenzol-4-sulfonsäure | violett |
| 249 | desgl. | 3,3'-Diamino-diphenylsulfon | violett |
| 250 | desgl. | 4,4'-Diaminostilben-2,2'-disulfonsäure | blau |
| 251 | desgl. | 2,6-Diaminotoluol-4-sulfonsäure | violett |
| 252 | desgl. | 4,4'-Diamino-diphenylamin-2-sulfonsäure | blauschwarz |

Beispiel 253

Gemäß den Angaben des Beispieles 4 wird das 3-[4'-(β-Chloräthylsulfonylmethyl)-benzoylamino]-6-sulfo-anilin hergestellt und anschließend in üblicher Weise mit einer Natriumnitritlösung diazotiert. Zu dieser Diazoniumsalzlösung gibt man 22,3 Teile eines technischen Gemisches aus 6- und 7-Sulfo-1-naphthylamin und rührt diesen Kupplungsansatz einige Stunden lang bei einem pH-Wert von 1 bis 3. Die so gebildete orange-rote Aminoazoverbindung diazotiert man erneut und setzt anschließend als zweite Kupplungskomponente die neutrale wäßrige Lösung von 30,1 Teilen 1-Phenylamino-naphthalin-8-sulfonsäure hinzu; die Kupplung erfolgt bei einem pH-Wert von 2 bis 4. Nach Beendigung dieser zweiten Kupplungsreaktion wird das Reaktionsgemisch auf einen pH-Wert von 4 bis 5 gestellt und geklärt. Aus dem Filtrat wird die synthetisierte Disazoverbindung auf üblichem Wege, beispielsweise durch Sprühtrocknen, Eindampfen oder Aussalzen, isoliert. Es wird ein schwarzes, elektrolythaltiges Pulver erhalten, das das Alkalimetallsalz der Verbindung der Formel

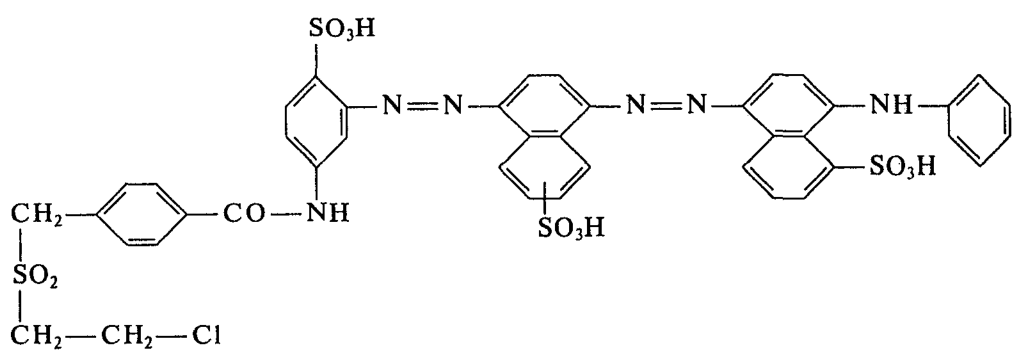

enthält. Diese Disazoverbindung eignet sich sehr gut in üblichen Applikations- und Fixierverfahren für faserreaktive Farbstoffe zum Färben von Polyamidfasermaterialien und Cellulosefasermaterialien. Sie liefert auf diesen Materialien marineblaue Färbungen und Drucke mit guten Naßechtheiten.

Beispiele 254 bis 260

Man verfährt analog der in Beispiel 253 angegebenen Verfahrensweise zur Herstellung einer erfindungsgemäßen Disazoverbindung entsprechend der allgemeinen Formel (1) und setzt hierzu die jeweils in den nachfolgenden Tabellenbeispielen angegebene Diazokomponente, diazotierbare Kupplungskomponente und Kupplungskomponente ein. Diese Disazoverbindungen eignen sich ebenfalls sehr gut als faserreaktive Farbstoffe zum Färben von Polyamid- und Cellulosefasern, mit denen farbstarke Färbungen in den angegebenen Nuancen mit guten Echtheitseigenschaften erhalten werden.

Die erfindungsgemäße Kupferkomplex-Disazoverbindung des Beispieles 260 wird aus der erfindungsgemäßen Disazoverbindung des Beispieles 259 durch entalkylierende Kupferung mittels einer kupferabgebenden Verbindung, beispielsweise Kupfer(II)-chlorid, analog den üblichen, bekannten Verfahrensweisen der entalkylierenden Kupferung synthetisiert.

| Beispiel | Diazokomponente | diazotierbare Kupplungskomponente | Kupplungskomponente | Farbton der Färbung |
|---|---|---|---|---|
| 254 | 3-[4'-(β-Chloräthyl-sulfonylmethyl)-benzoylamino]-6-sulfo-anilin | 1-Naphthylamin-7-sulfonsäure | N-Äthyl-N-(3'-sulfo-benzyl)-anilin | violett |
| 255 | desgl. | desgl. | N,N-Bis-(β-sulfato-äthyl)-anilin | violett |
| 256 | desgl. | desgl. | N-Äthyl-N-(β-sulfato-äthyl)-3-chlor-anilin | violett |
| 257 | 4-[4'-(β-Chloräthyl-sulfonylmethyl)-benzoylamino]-2,6-disulfo-anilin | 1-Naphthylamin | 1-Phenylamino-naphthalin-8-sulfonsäure | marineblau |
| 258 | 4-[4'-(β-Chloräthyl-sulfonylmethyl)-benzoylamino]-2-sulfo-anilin | 1-Aminonaphthalin-(6,7)-sulfonsäure | desgl. | marineblau |
| 259 | Orthanilsäure | 2-Methoxy-5-methyl-anilin | 1-[4'-(β-Chloräthyl-sulfonylmethyl)-benzoylamino]-3,6-disulfo-8-naphthol | marineblau |
| 260 | Orthanilsäure | desgl. | desgl. mit nachfolgender entalkylierender Kupferung | marineblau |

Beispiel 261

32,6 Teile der Verbindung 1-Amino-4-[p-(N-methyl-N-acetyl-amino)-phenylamino]-anthrachinon-2-sulfonsäure werden innerhalb von 1 bis 2 Stunden bei 20—30°C in 330 Teile 8%iges Oleum eingetragen. Man rührt 3 Stunden lang nach und gießt sodann den Ansatz unter Rühren in 3000 Teile Wasser. Die blaue, sulfierte Verbindung fällt aus und wird abgesaugt. Der feuchte Filterkuchen wird sodann in 250 Teilen Wasser und 40 Teilen 33%ige Salzsäure 4 Stunden lang unter Rückfluß gekocht. Nach Abkühlen des Reaktionsgemisches wird dieses mit Natronlauge neutral gestellt und die teilweise ausgefallene Verbindung durch Zusatz von Wasser wieder gelöst. Man kühlt nun auf eine Temperatur von 0—10°C ab, setzt 40 Teile kristallisiertes Natriumacetat hinzu und anschließend innerhalb 1 Stunde 52 Teile 4-(β-Chloräthylsulfonylmethyl)-benzoylchlorid, entweder in pulverisierter Form oder in einem geeigneten Lösemittel, wie beispielsweise Chloroform, gelöst, hinzu. Man rührt 10 Stunden lang nach und stellt sodann den pH-Wert des Reaktionsgemisches auf 5. Die so hergestellte erfindungsgemäße Verbindung wird mit Natriumchlorid ausgesalzen. Es wird ein natriumchloridhaltiges, blauschwarzes

Pulver erhalten, das das Natriumsalz der Verbindung der Formel

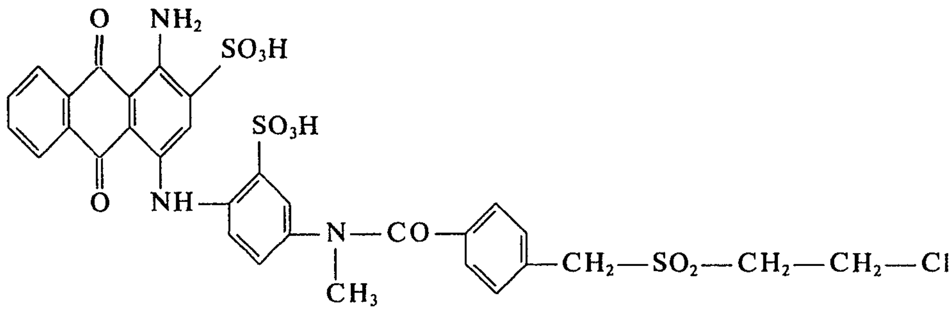

enthält. Diese eignet sich sehr gut als Farbstoff zum Färben von Polyamid- und Cellulosefasermaterialien nach den in der Technik üblichen Färbe- und Druckverfahren. Die Färbungen und Drucke zeigen eine brillante blaue Nuance und die im Beispiel 6 genannten guten Eigenschaften und Echtheiten. Färbungen und Drucke, die auf Baumwolle und Zellwolle mit diesem Farbstoff erhalten werden, zeigen gleiche Nuance und Farbtiefe. Nicht fixierte Anteile des Farbstoffes sind leicht auswaschbar.

Beispiele 262 bis 267

Weitere erfindungsgemäße Anthrachinonverbindungen entsprechend der allgemeinen Formel (I)

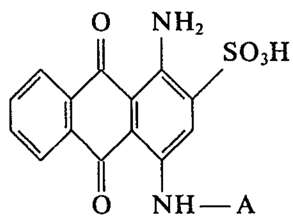

(I)

mit dem in den Tabellenbeispielen angegebenen 4-Amino-Substituenten A werden analog der im Beispiel 261 beschriebenen Verfahrensweise mit entsprechenden Ausgangsverbindungen unter gegebenenfalls nachträglicher Sulfonierung und unter anschließender Acylierung mit dem faserreaktiven erfindungsgemäßen Benzoylchlorid hergestellt. Diese erfindungsgemäßen Verbindungen haben ebenfalls sehr gute Farbstoffeigenschaften und liefern insbesondere auf Cellulosefasermaterialien kräftige Färbungen in den in den Beispielen angegebenen Nuancen mit guten Echtheitseigenschaften.

| Beispiel | Substituent A | Farbton der Färbung |
|---|---|---|
| 262 | 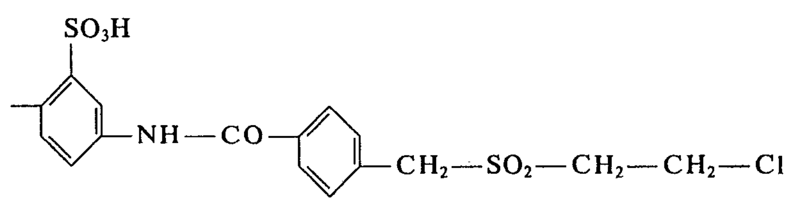 | blau |
| 263 | 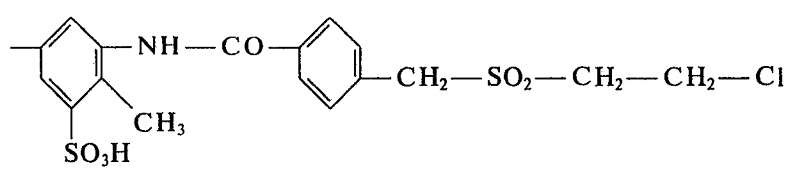 | blau |

Fortsetzung

| Beispiel | Substituent A | Farbton der Färbung |
|---|---|---|
| 264 | 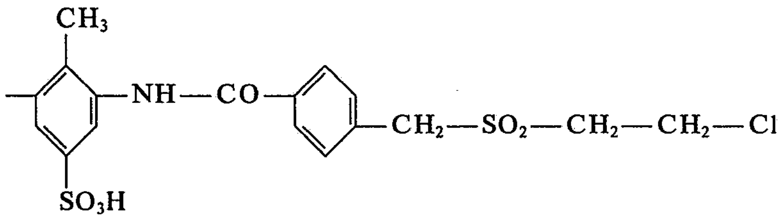 | blau |
| 265 | 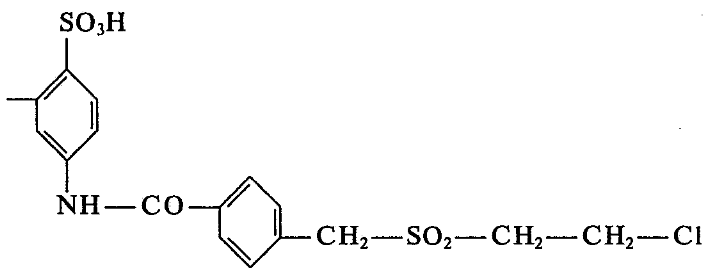 | blau |
| 266 | 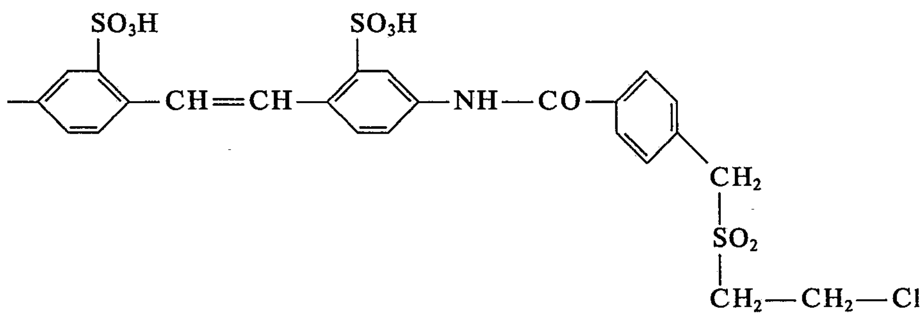 | grün |
| 267 | 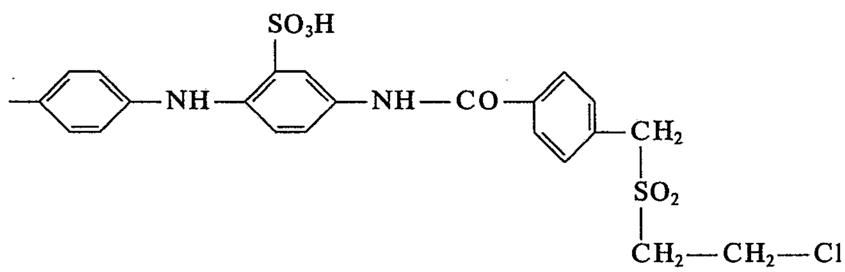 | oliv |

Beispiel 268

59,6 Teile der auf übliche Weise hergestellten Formazan-Kupferkomplexverbindung der Formel

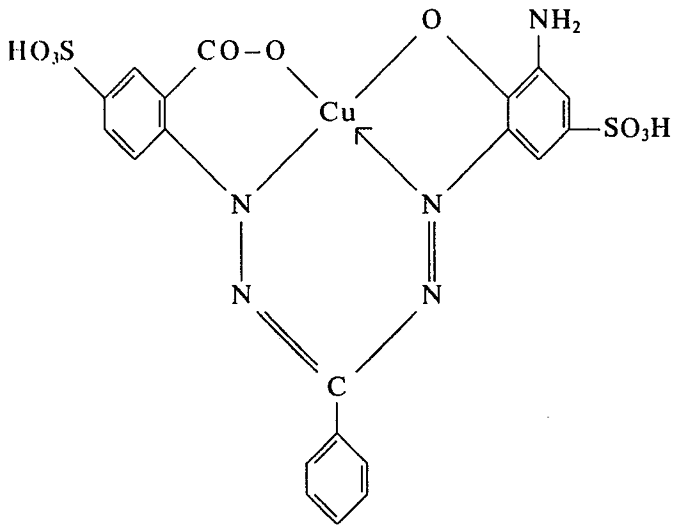

werden in 400 Teilen Wasser neutral gelöst; 30 Teile kristallisiertes Natriumacetat werden hinzugegeben, und bei einer Temperatur von 0—5 °C werden unter gutem Rühren 52 Teile 4-(β-Chloräthylsulfonylmethylen)-benzoylchlorid, in pulverisierter Form oder gelöst, zugesetzt. Nach weiterem zehnstündigen Rühren stellt man den pH-Wert des Reaktionsgemisches auf 4 bis 5 und klärt es durch Filtration. Aus dem Filtrat wird die erfindungsgemäße Formazan-Verbindung auf üblichem Wege, so durch Sprühtrocknung oder Aussalzen, isoliert. Es wird ein elektrolythaltiges, schwarzes Pulver erhalten, das das Alkalimetallsalz der Verbindung der Formel

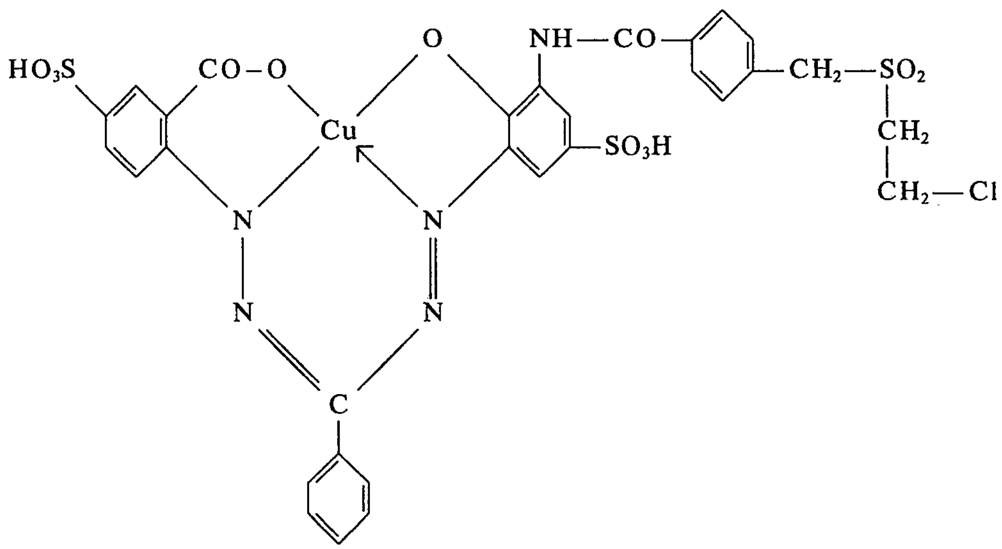

enthält. Diese eignet sich sehr gut als Farbstoff zum Färben und Bedrucken von Polyamidfasermaterialien und Cellulosefasermaterialien nach den in der Technik üblichen Färbemethoden und liefert darauf farbstarke, blaue Färbungen und Drucke mit guten Naß- und Lichtechtheiten.

Beispiele 269 bis 272

Analog der Verfahrensweise des Beispieles 268 setzt man eine der in den nachfolgenden Tabellenbeispielen angegebenen aminogruppenhaltigen Formazan-Kupferkomplexverbindungen (mit R′ gleich Wasserstoff) mit 4- oder 3-(β-Chloräthylsulfonylmethyl)-benzoylchlorid als faserreaktive Komponente um und erhält so die erfindungsgemäßen Formazan-Kupferkomplexverbindungen mit R′ gleich dem 4- oder 3-(β-Chloräthylsulfonylmethyl)-benzoyl-Rest. Diese erfindungsgemäßen Formazan-Kupferkomplexverbindungen stellen ebenfalls wertvolle Farbstoffe dar, die insbesondere Cellulosefasermaterialien mit guten Echtheiten in den angegebenen Nuancen färben.

| Beispiel | Erfindungsgemäße Verbindung (1) | Farbton der Färbung |
|---|---|---|
| 269 | 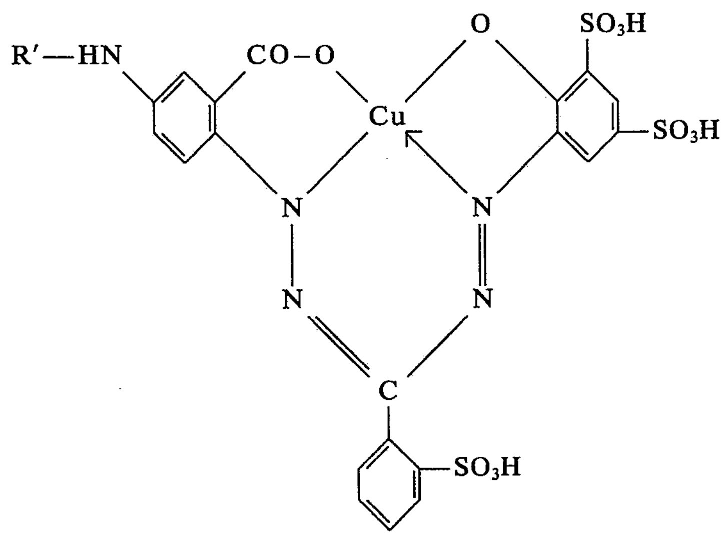 | blau |
| 270 | 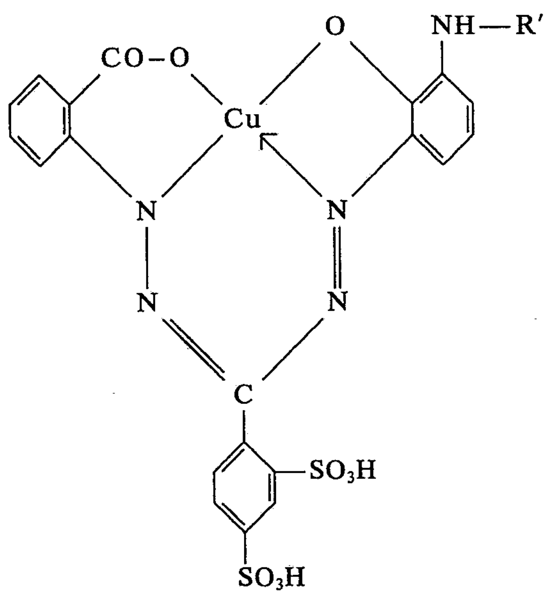 | blau |
| 271 | 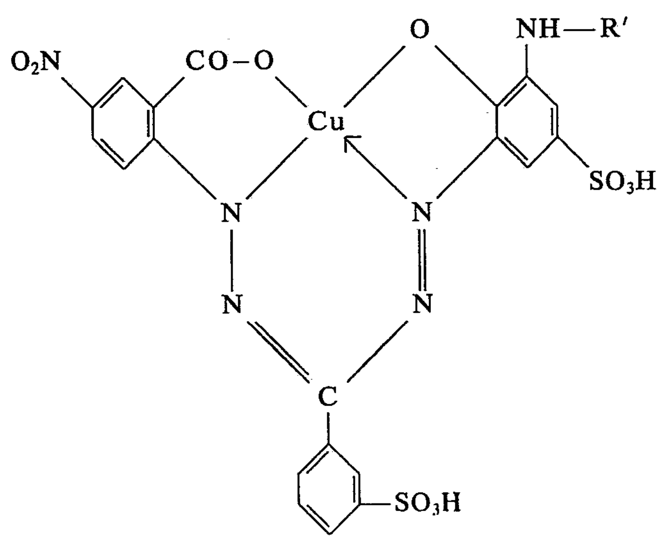 | grünstichig-blau |

Beispiel 272

Auf üblichem Wege wird bei 130–140°C aus 100 Teilen Kupferphthalocyanin und 1000 Teilen Chlorsulfonsäure dessen Sulfochlorid hergestellt; diese Sulfochloridschmelze wird sodann in üblicher Weise aufgearbeitet, indem man sie auf Wasser rührt, das Sulfochlorid abscheidet, mit Eiswasser zu einer Paste anrührt und diese Suspension neutralisiert. Diese Suspension wird sodann mit einer neutralen Lösung von 110 Teilen Benzidin-2,2'-disulfonsäure und 100 Teilen Pyridin vereinigt und mehrere Stunden bei einer Temperatur unterhalb von 10°C gerührt. Sodann macht man das Reaktionsgemisch mit Natriumcarbonat alkalisch, filtriert es und scheidet aus dem Filtrat die hergestellte erfindungsgemäße Verbindung durch Ansäuern und Aussalzen mit Natriumchlorid oder Kaliumchlorid ab. Man filtriert und wäscht den Filterkuchen benzidinfrei. Sodann stellt man mit ihm eine neutrale wäßrige Lösung her und setzt diese mit einer acetonischen Lösung von etwa 90 Teilen 4-(β-Chloräthylsulfonylmethyl)-benzoylchlorid durch langsame Zugabe dieser Lösung um, bis eine Probe des Reaktionsansatzes keinen Nitritverbrauch mehr anzeigt; diese Umsetzung erfolgt bei einem pH-Wert von 5 bis 7, den man mit Natriumbicarbonat oder Natriumacetat einstellt, und bei einer Temperatur von 0–10°C. Anschließend wird die Reaktionslösung erneut geklärt und die hergestellte erfindungsgemäße Kupferphthalocyanin-Verbindung bei einem pH-Wert von 4 bis 5 mittels Natriumchlorid ausgesalzen oder durch Sprühtrocknung isoliert. Es wird ein elektrolythaltiges, schwarzes Pulver erhalten, das das Alkalimetallsalz (Natrium- oder Kaliumsalz) der Verbindung der Formel

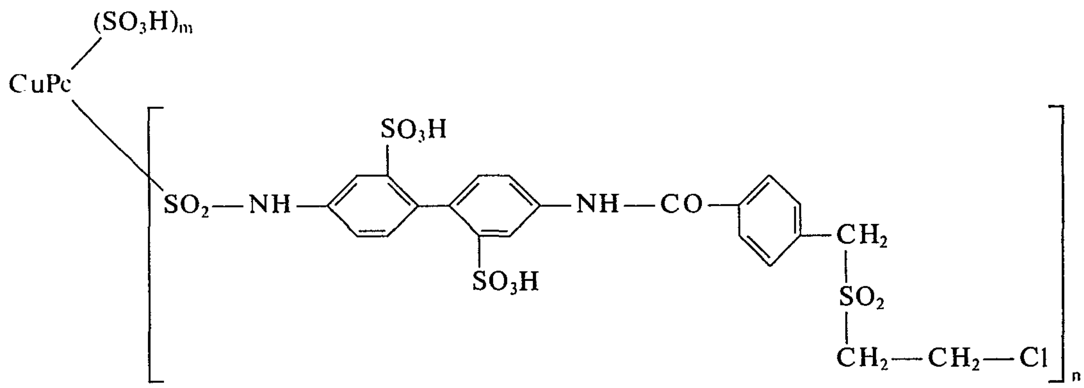

in welcher m einen durchschnittlichen Wert von etwa 2,5 und n einen durchschnittlichen Wert von etwa 1 besitzt. Diese Verbindung zeigt sehr gute Farbstoffeigenschaften und färbt nach üblichen Applikations- und Fixiermethoden für faserreaktive Farbstoffe Polyamidfasermaterialien und insbesondere Cellulosefasermaterialien in türkisblauen Tönen mit guten Naßechtheiten.

Beispiele 273 bis 276

Man verfährt zur Herstellung einer erfindungsgemäßen Kupfer- oder Nickelkomplexverbindung in der bei der Synthese von Metallkomplexphthalocyaninverbindungen üblichen Weise durch Umsetzung des entsprechenden Phthalocyaninsulfochlorids oder Phthalocyaninsulfonsäure-sulfochlorids mit einem entsprechenden Diamin und gegebenenfalls einer weiteren primären oder sekundären Aminoverbindung bei nachfolgender Umsetzung mit dem erfindungsgemäßen Benzoylchlorid der allgemeinen Formel (3). Bei Einsatz entsprechender Ausgangsverbindungen erhält man die erfindungsgemäßen, in den nachfolgenden Tabellenbeispielen angegebenen Metallkomplexphthalocyaninverbindungen, die sehr gute Farbstoffeigenschaften besitzen und in gleicher Weise insbesondere Cellulosefasermaterialien mit sehr guten Echtheitseigenschaften in den angegebenen Tönen färben.

| Beispiel | Verbindung entsprechend Formel (1) | Farbton der Färbung |
|---|---|---|
| 273 | 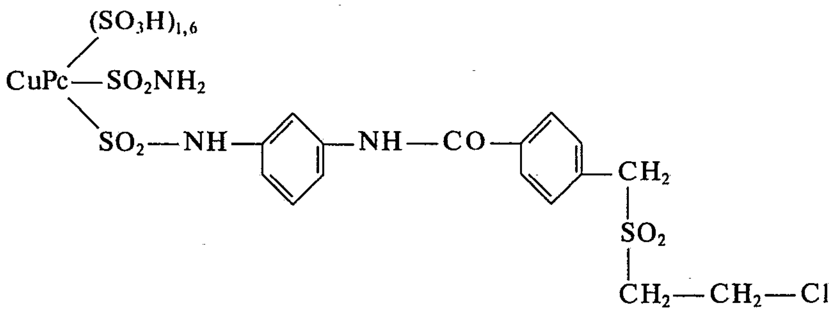 | türkis |
| 274 | 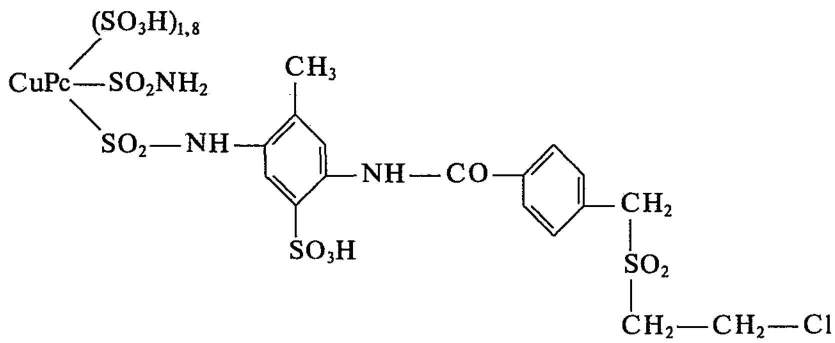 | türkis |
| 275 | 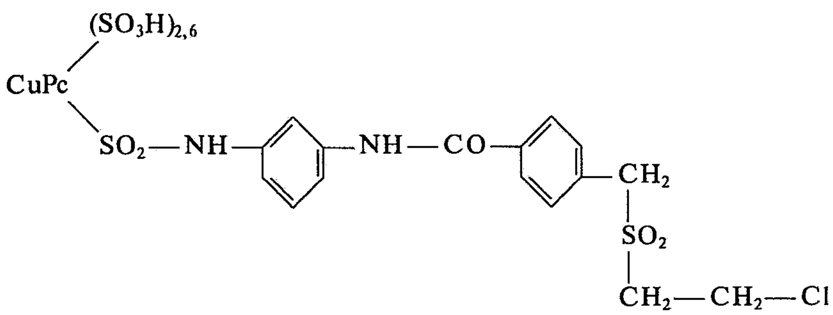 | türkis |
| 276 | 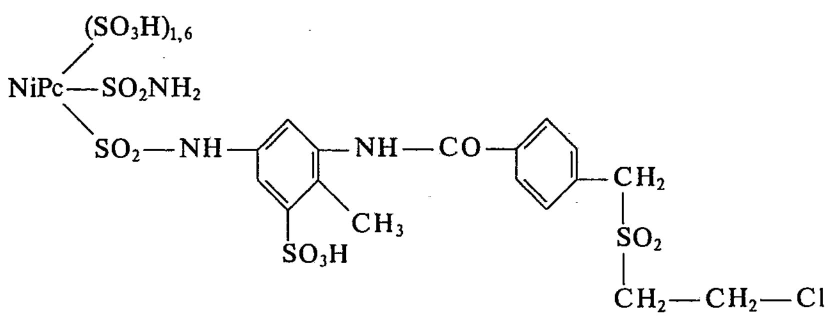 | blaustichig-grün |

Beispiel 277

72,5 Teile der Xanthenverbindung der Formel

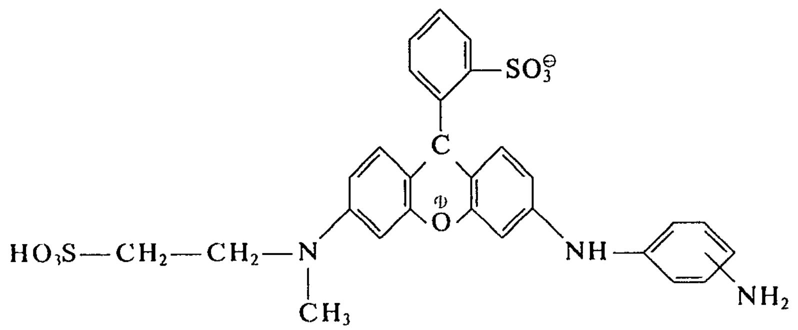

werden in warmem Wasser zu einer neutralen Lösung gelöst; 30 Teile kristallisiertes Natriumacetat werden hinzugegeben und anschließend etwa 45 Teile 4-(β-Chloräthylsulfonyl-methylen)-benzoylchlorid, bis keine freie Aminogruppe mehr nachweisbar ist. Die Umsetzung erfolgt bei einem pH-Wert zwischen 5 bis 7 und einer Temperatur zwischen 0 und 10°C. Die Reaktionslösung wird anschließend geklärt und die so hergestellte erfindungsgemäße Xanthenverbindung auf üblichem Wege isoliert. Es wird ein dunkles, elektrolythaltiges Pulver erhalten, das die Verbindung der Formel (in Form der freien Säure geschrieben)

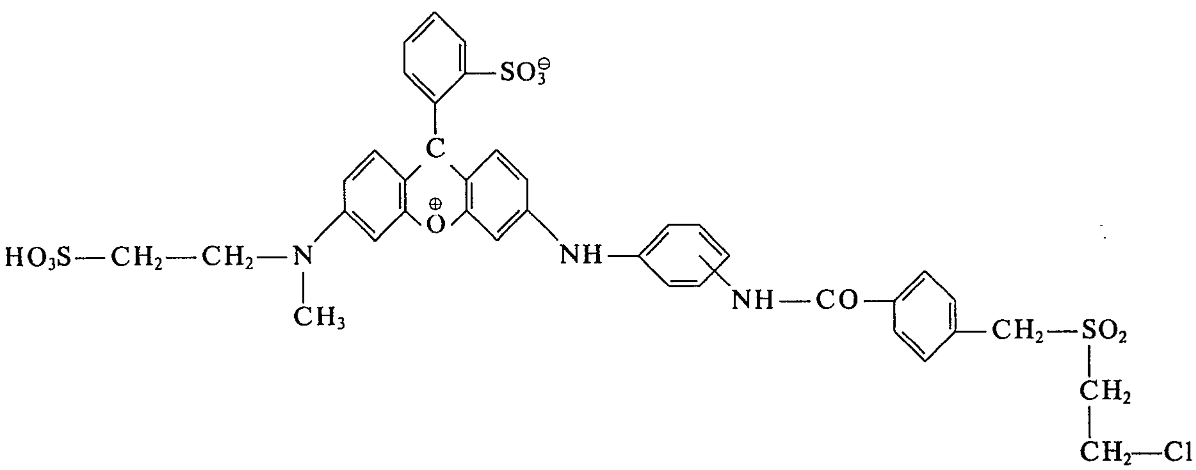

enthält. Diese zeigt gute Farbstoffeigenschaften und färbt insbesondere Cellulosefasermaterialien nach üblichen Färbe- und Druckverfahren für faserreaktive Farbstoffe in kräftigen, klaren, violetten Nuancen mit guten Naßechtheiten.

**Patentansprüche**

1. Wasserlösliche Verbindungen der allgemeinen Formel (1)

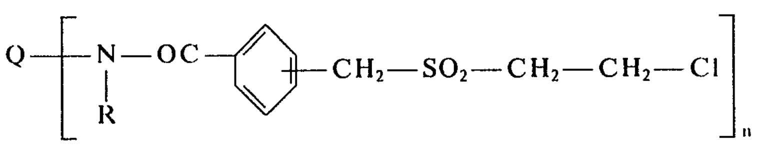

(1)

in welcher

Q der Rest einer organischen Verbindung ist, die faserveredelnde Eigenschaften besitzt, wobei Q eine oder mehrere wasserlöslichmachende Gruppen enthält,
R ein Wasserstoffatom oder eine Alkylgruppe, ist und
n für die Zahl 1 oder 2 steht.

2. Verbindungen nach Anspruch 1, in welchen Q für den Rest eines wasserlöslichen organischen Farbstoffes steht.

3. Verbindungen nach Anspruch 2 der allgemeinen Formel

R'—D—N=N—K

in welcher

D als Rest einer Diazokomponente den Benzolkern bedeutet, der durch 1, 2 oder 3 Substituenten substituiert sein kann, die der Gruppe niederes Alkyl, niederes Alkoxy, Hydroxy, Carboxy, Acetylamino, Benzoylamino, Phenylamino, Sulfobenzoylamino, Sulfophenylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, oder

D ein Naphthalinkern ist, der durch 1 oder 2 Sulfonsäuregruppen und/oder eine Hydroxy-, Carboxy-, Methyl-, Methoxy-, Äthoxy- oder Nitrogruppe oder ein Chloratom substituiert sein kann,

K als Rest einer Kupplungskomponente den 1- oder 2-Naphtholrest darstellt, der durch 1, 2 oder 3 Sulfonsäuregruppen und/oder eine Amino-, Methylamino-, Phenylamino-, Acetylamino-, Benzoylamino- oder N-Methyl-N-acetylamino-Gruppe substituiert sein kann, oder

K als Rest einer Kupplungskomponente den 1- oder 2-Aminonaphthalin-Rest bedeutet, der durch 1, 2 oder 3 Sulfonsäuregruppen und/oder eine Hydroxy- oder Acetylaminogruppe substituiert sein kann, oder

K als Rest einer Kupplungskomponente den 5-Pyrazolon-Rest bedeutet, der in 3-Stellung durch Methyl, Carboxy, Carbamoyl, niederes Carbalkoxy oder Phenyl substituiert ist und in 1-Stellung den Phenylkern oder Naphthylkern gebunden enthält, wobei der Phenylrest durch 1 oder 2 Sulfonsäuregruppen und/oder 1 oder 2 Substituenten aus der Gruppe niederes Alkyl, niederes Alkoxy, Chlor, Brom, Nitro, Acetylamino und Carboxy und der Naphthylkern durch 1, 2 oder 3 Sulfogruppen und/oder einen Substituenten aus der Gruppe niederes Alkyl, niederes Alkoxy, Nitro, Acetylamino und Carboxy substituiert sein können,
wobei die Azogruppe an K ortho-ständig zu der die Kupplung dirigierenden Hydroxygruppe steht, und

R' den Rest der allgemeinen Formel (4)

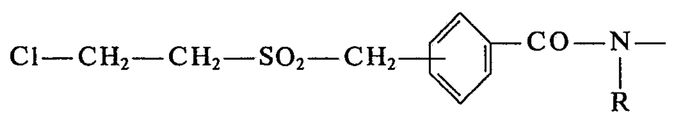 (4)

bedeutet, der an einem der aromatischen Kerne von D oder an einem von dessen niederen Alkylsubstituenten gebunden ist und in welchem R die in Anspruch 1 genannte Bedeutung besitzt.

4. Verbindungen nach Anspruch 2 der allgemeinen Formel

D—N=N—K—R'

in welcher

D als Rest einer Diazokomponente den Benzolkern bedeutet, der durch 1, 2 oder 3 Substituenten substituiert sein kann, die der Gruppe niederes Alkyl, niederes Alkoxy, Hydroxy, Carboxy, Acetylamino, Benzoylamino, Phenylamino, Sulfobenzoylamino, Sulfophenylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, oder

D ein Naphthalinkern ist, der durch 1, 2 oder 3 Sulfonsäuregruppen und/oder eine Hydroxy-, Carboxy-, Methyl-, Methoxy-, Äthoxy-, Nitro- oder Acetylaminogruppe oder ein Chloratom substituiert sein kann,

K den Rest des 1- oder 2-Naphthols darstellt, der durch 1, 2 oder 3 Sulfonsäuregruppen substituiert sein kann, oder

K den Rest des 1- oder 2-Amino-naphthalins oder des Naphthylens bedeutet, der durch 1, 2 oder 3 Sulfonsäuregruppen und/oder eine Hydroxygruppe substituiert sein kann, oder

K den Rest des 5-Pyrazolon-4-yls bedeutet, der in 3-Stellung durch Methyl, Carboxy, Carbamoyl, niederes Carbalkoxy oder Phenyl substituiert ist und in 1-Stellung den Phenylkern oder Naphthylkern gebunden enthält, wobei der Phenylrest durch 1 oder 2 Substituenten aus der Gruppe niederes Alkyl, niederes Alkoxy, Chlor, Brom, Nitro, Acetylamino und Carboxy und der Naphthylkern durch 1, 2 oder 3 Sulfogruppen und/oder einen Substituenten aus der Gruppe niederes Alkyl, niederes Alkoxy, Nitro, Acetylamino und Carboxy substituiert sein können, und

R' für den Rest der allgemeinen Formel (4)

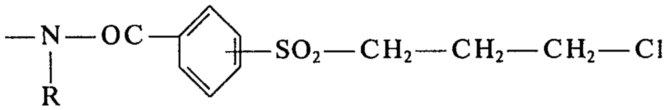 (4)

steht, der an einem der aromatischen Kerne von K oder an einem von dessen niederen Alkylsubstituenten gebunden ist und in welchem R die in Anspruch 1 genannte Bedeutung hat.

5. Verbindungen nach Anspruch 2 der allgemeinen Formel

$$(R')_{m'}-D-N=N-K_1-N=N-D-(R')_{m''}$$

in welcher

R' für den in Anspruch 3 oder 4 genannten und definierten faserreaktiven Rest der allgemeinen Formel (4) steht,
m' und m'' gleich oder verschieden voneinander sind und jedes für die Zahl 0 oder 1 steht, wobei die Summe (m' + m'') die Zahl 1 oder 2 ist,
D die in Anspruch 3 oder 4 angegebene Bedeutung hat, je nachdem, ob D den Rest R' gebunden enthält, und
$K_1$ als Rest einer bifunktionellen Kupplungskomponente für den Amino-hydroxy-naphthylen-Rest steht, der durch eine oder zwei Sulfogruppen substituiert sein kann.

6. Verbindungen nach Anspruch 2 der allgemeinen Formel

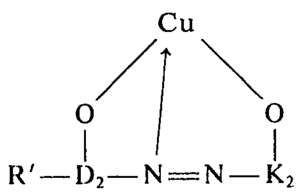

in welcher bedeuten:

$D_2$ den Benzolkern, der durch 1 oder 2 Substituenten substituiert sein kann, die der Gruppe niederes Alkyl, niederes Alkoxy, Carboxy, Phenylamino, Sulfobenzoylamino, Sulfophenylamino, Carbamoyl, durch niederes Alkyl und/oder Phenyl mono- oder disubstituiertes Carbamoyl, Sulfamoyl, durch niederes Alkyl und/oder Phenyl mono- oder disubstituiertes Sulfamoyl, Cyan, Nitro, Chlor, Brom, Trifluormethyl und Sulfo angehören, oder
den Naphthalinkern, der durch 1, 2 oder 3 Sulfonsäuregruppen und/oder eine Carboxy-, Methyl-, Methoxy-, Äthoxy-, Nitro- oder Acetylaminogruppe oder ein Chloratom substituiert sein kann, wobei in $D_2$ das komplexbildende Sauerstoffatom ortho-ständig zur Azogruppe gebunden ist;
$K_2$ den Naphthylenrest, der durch 1, 2 oder 3 Sulfonsäuregruppen und/oder eine Amino-, Methylamino-, Phenylamino-, Acetylamino-, Benzoylamino- oder N-Methyl-N-acetylamino-Gruppe substituiert sein kann,
wobei in $K_2$ das komplexbildende Sauerstoffatom ortho-ständig zur Azogruppe gebunden ist;
R' den Rest der in Anspruch 3 genannten und definierten allgemeinen Formel (4), der an einem der aromatischen Kerne von $D_2$ oder an einem von dessen niederen Alkylsubstituenten gebunden ist.

7. Verbindungen nach Anspruch 3 der allgemeinen Formel

$$R'-D-N=N-K$$

in welcher R'–D– einen Rest der allgemeinen Formel

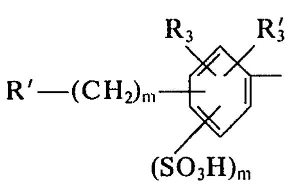

bedeutet, in welcher

R' den in Anspruch 3 genannten und definierten Rest der allgemeinen Formel (4) bedeutet,

m für die Zahl Null, 1 oder 2 steht, wobei die Indices m gleich oder verschieden voneinander sein können,

$R_3$ ein Wasserstoffatom, eine niedere Alkylgruppe, eine niedere Alkoxygruppe, ein Chlor- oder Bromatom ist, und

$R_3'$ ein Wasserstoffatom, eine niedere Alkylgruppe, eine niedere Alkoxygruppe, ein Chlor- oder Bromatom oder eine Hydroxygruppe ist, wobei $R_3$ und $R_3'$ gleich oder verschieden voneinander sein können,

und in welcher

K einen Rest der allgemeinen Formel

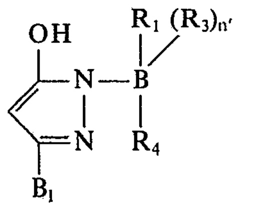

oder

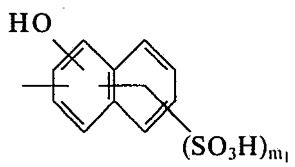

oder

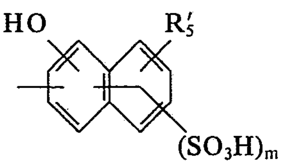

bedeutet, in welchen

$R_3$ die obengenannte Bedeutung besitzt,

$R_1$ ein Wasserstoffatom, eine niedere Alkylgruppe, eine niedere Alkoxygruppe, ein Chlor- oder Bromatom, eine niedere Alkanoylaminogruppe oder eine Sulfonsäuregruppe ist,

$R_4$ ein Wasserstoffatom, eine niedere Alkylgruppe, eine niedere Alkoxygruppe oder die Sulfonsäuregruppe ist, wobei $R_1$, $B_1$, $R_3$ und $R_4$ gleich oder verschieden voneinander sein können,

n' die Zahl 1 oder 2 bedeutet,

B ist ein Benzol- oder Naphthalinkern,

$B_1$ eine niedere Alkylgruppe, eine Carboxygruppe, eine Carbomethoxy- oder Carbäthoxygruppe oder der Phenylrest ist,

m die Zahl Null, 1 oder 2 bedeutet,

$m_1$ für die Zahl Null, 1, 2 oder 3 steht und

$R_5'$ die Phenylureido-, eine niedere Alkanoylamino-, eine niedere Alkenoylamino- oder eine Benzoylaminogruppe, die durch Chlor, Methyl, Methoxy, Nitro, Sulfo und/oder Carboxy substituiert sein kann, bedeutet.

8. Verbindungen nach Anspruch 4 der allgemeinen Formel

$$D—N=N—K—R'$$

in welcher

D einen Rest der allgemeinen Formel

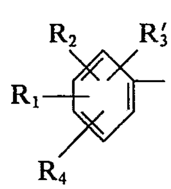

oder

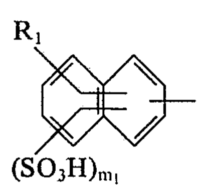

bedeutet, in welchen

$R_1$ ein Wasserstoffatom, eine niedere Alkylgruppe, eine niedere Alkoxygruppe, ein Chlor- oder Bromatom, eine niedere Alkanoylaminogruppe oder eine Sulfonsäuregruppe ist,

$R_2$ ein Wasserstoffatom, eine niedere Alkylgruppe, eine niedere Alkoxygruppe, ein Chlor- oder Bromatom oder eine Sulfonsäuregruppe ist,

$R'_3$ ein Wasserstoffatom, eine niedere Alkylgruppe, eine niedere Alkoxygruppe, ein Chlor- oder Bromatom oder eine Hydroxygruppe ist,
$R_4$ ein Wasserstoffatom, eine niedere Alkylgruppe, eine niedere Alkoxygruppe oder die Sulfonsäuregruppe ist,
wobei $R_1$, $R_2$, $R'_3$ und $R_4$ gleich oder verschieden voneinander sein können, und
$m_1$ für die Zahl Null, 1, 2 oder 3 steht,

und in welcher der Formelrest —K—R′ einen Rest der allgemeinen Formel

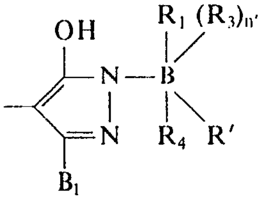

oder

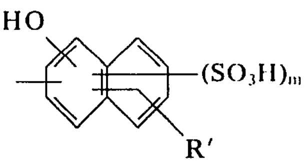

bedeutet, in welchen

$R_1$ und $R_4$ die obengenannten Bedeutungen haben,
$R_3$ einen Wasserstoffatom, eine niedere Alkylgruppe, eine niedere Alkoxygruppe, ein Chlor- oder Bromatom ist,
B ist ein Benzol- oder Naphthalinkern,
$B_1$ eine niedere Alkylgruppe, eine Carboxygruppe, eine Carbmethoxy- oder Carbäthoxygruppe oder der Phenylrest ist,
wobei $R_1$, $R_3$, $R_4$ und $B_1$ zueinander gleich oder voneinander verschieden sein können,
n′ für die Zahl 1 oder 2 steht,
m die Zahl Null, 1 oder 2 ist und
R′ den in Anspruch 4 genannten und definierten Rest der allgemeinen Formel (4) bedeutet.

9. Verbindungen nach Anspruch 3 oder 7, dadurch gekennzeichnet, daß K als Rest einer Kupplungskomponente den 3,6-Disulfo- oder 4,6-Disulfo-1-acetylamino-8-naphthol- oder den 3,6-Disulfo- oder 4,6-Disulfo-1-benzoylamino-8-naphthol-Rest bedeutet.

10. Verbindung nach Anspruch 2 der Formel

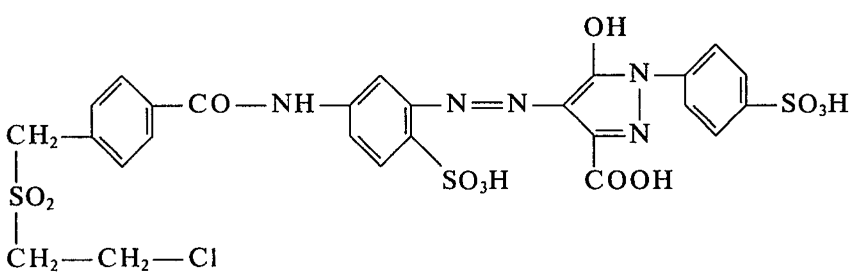

und deren Alkalimetallsalze.

11. Verbindung nach Anspruch 2 der Formel

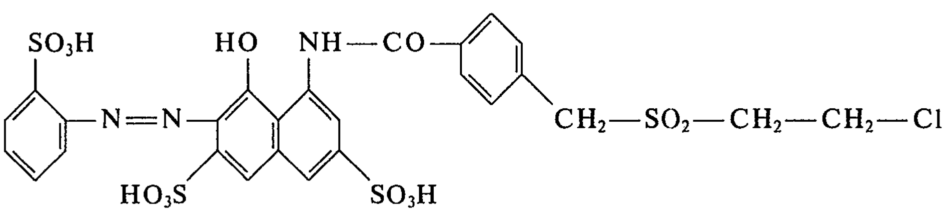

und deren Alkalimetallsalze.

12. Verbindung nach Anspruch 2 der Formel

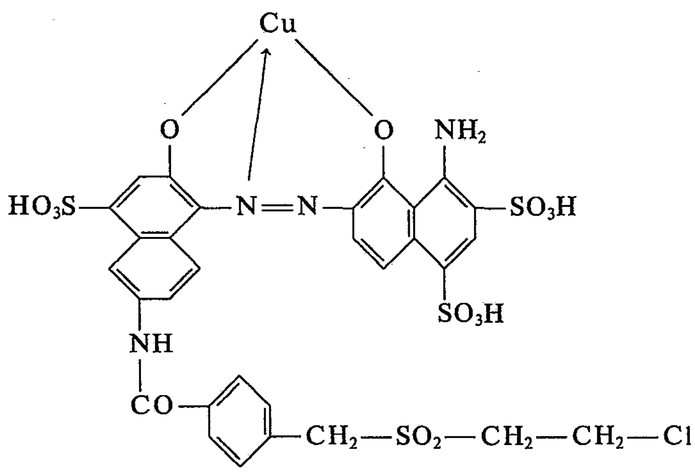

und deren Alkalimetallsalze.

13. Verbindung nach Anspruch 2 der Formel

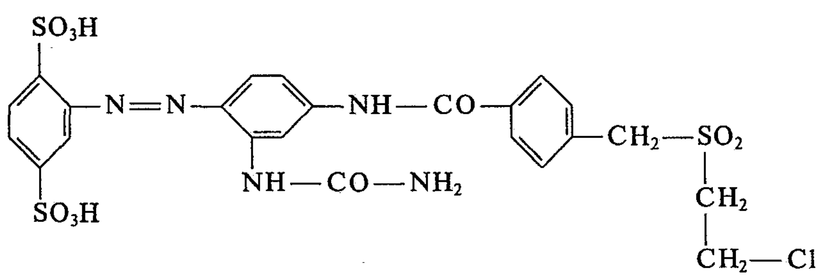

und deren Alkalimetallsalze.

14. Verbindung nach Anspruch 2 der Formel

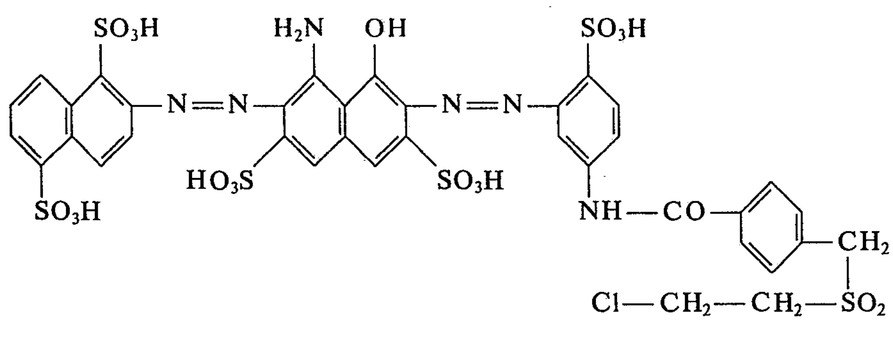

und deren Alkalimetallsalze.

15. Verfahren zur Herstellung der Verbindungen der allgemeinen Formel (1), dadurch gekennzeichnet, daß man eine organische Verbindung der allgemeinen Formel (2)

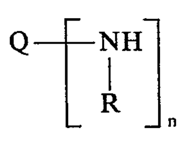

(2)

in welcher Q, R und n die in Anspruch 1 genannten Bedeutungen haben, mit einer Verbindung der allgemeinen Formel (3)

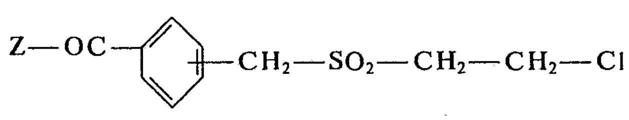

(3)

in welcher Z für ein Halogenatom steht, umsetzt, oder indem man organische Vorprodukte für die Synthese des Molekülrestes der Formel Q in üblicher und hierfür geeigneter Weise miteinander umsetzt,

wobei diese Vorprodukte so ausgewählt sind, daß mindestens eines davon eine oder mehrere wasserlöslich machende Gruppen und mindestens eine Gruppe der Formel (4)

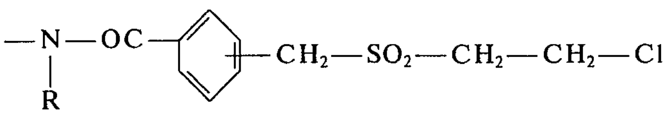

(4)

mit R der in Anspruch 1 genannten Bedeutung enthält und daß man dabei wiederum diese Vorprodukte so auswählt, daß eine Verbindung der Formel (1) erhalten wird, in welcher n für die Zahl 1 oder 2 steht.

16. Verwendung der Verbindungen der allgemeinen Formel (1) gemäß Anspruch 1 zur Faserveredlung von Materialien aus natürlichen, regenerierten oder synthetischen stickstoffhaltigen Fasern oder aus natürlichen, regenerierten oder synthetischen hydroxygruppenhaltigen Fasern oder Leder.

17. Verwendung der Verbindungen gemäß Anspruch 2 als Farbstoffe zum Färben und Bedrucken von Materialien aus natürlichen, regenerierten oder synthetischen stickstoffhaltigen Fasern oder aus natürlichen, regenerierten oder synthetischen hydroxygruppenhaltigen Fasern oder von Leder.

18. Verbindungen der allgemeinen Formel (3)

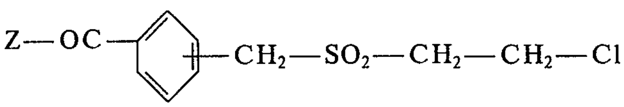

(3)

in welcher Z ein Halogenatom bedeutet.

19. Verfahren zur Herstellung der Verbindungen der allgemeinen Formel (3) gemäß Anspruch 18, dadurch gekennzeichnet, daß man eine Verbindung der allgemeinen Formel (5)

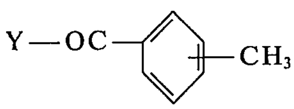

(5)

in welcher Y für ein Halogenatom, eine niedere Alkoxygruppe oder die Hydroxygruppe steht, in der Alkylgruppe zur Verbindung der allgemeinen Formel (6)

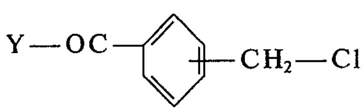

(6)

in welcher Y die obengenannte Bedeutung hat, chloriert, diese in wäßriger Lösung mit 2-Mercaptoäthanol zur Thioätherverbindung der allgemeinen Formel (7a)

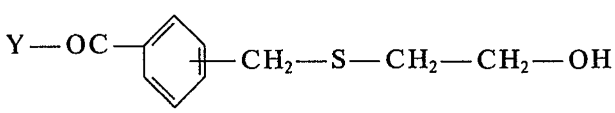

(7a)

in welcher Y die Hydroxygruppe oder eine niedere Alkoxygruppe bedeutet, umsetzt, diese sodann – im Falle jedoch, daß Y für eine niedere Alkoxygruppe steht, nach vorheriger alkalischer Verseifung zur Verbindung mit Y gleich Hydroxy – mit einem Oxidationsmittel in die Sulfonylverbindung der allgemeinen Formel (7b)

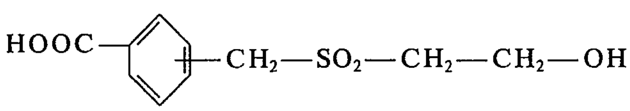

(7b)

überführt und diese mit einem Chlorierungsmittel zur Verbindung der allgemeinen Formel (3) umsetzt.

20. Verwendung der Verbindungen der allgemeinen Formel (3) von Anspruch 18 als faserreaktive Anker in Verbindungen mit faserveredelnden Eigenschaften.

21. Verwendung der Verbindungen der allgemeinen Formel (3) von Anspruch 18 zur Herstellung von in Anspruch 1 genannten und definierten Verbindungen der allgemeinen Formel (1) oder zur Herstellung von Verbindungen der allgemeinen Formel

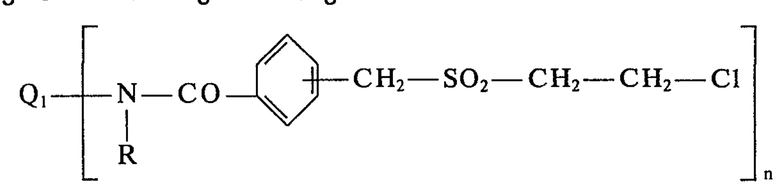

(9)

in welcher

$Q_1$ für einen Benzol- oder Naphthalinrest steht, der durch eine primäre Aminogruppe substituiert ist und gegebenenfalls durch 1, 2 oder 3 Sulfonsäuregruppen und/oder 1, 2 oder 3 weitere Substituenten substituiert ist, die der Gruppe niederes Alkyl, niederes Alkoxy, Carboxy, Hydroxy, Acetylamino, Benzoylamino, Phenylamino, durch Substituenten aus der Gruppe niederes Alkyl, niederes Alkoxy, Sulfo, Carboxy, Acetylamino, Benzoylamino und Halogen substituiertes Phenylamino, Carbonsäureamid, durch niederes Alkyl und/oder Phenyl mono- oder disubstituiertes Carbonsäureamid (wobei der Phenylrest noch durch Substituenten aus der Gruppe niederes Alkyl, niederes Alkoxy, Sulfo, Carboxy, Chlor und Amino substituiert sein kann), Sulfonsäureamid, durch niederes Alkyl und/oder Phenyl mono- oder disubstituiertes Sulfonsäureamid (wobei der Phenylrest noch durch Substituenten aus der Gruppe niederes Alkyl, niederes Alkoxy, Sulfo, Carboxy, Chlor und Amino substituiert sein kann), Cyan, Nitro, Halogen und Trifluormethyl angehören,
oder $Q_1$ für den Rest des Naphthols steht, der durch 1, 2 oder 3 Sulfogruppen und durch eine weitere Aminogruppe, Phenylamino oder niedere Alkylaminogruppe substituiert sein kann,
oder in welcher $Q_1$ für den Benzolkern steht, der durch eine Hydroxygruppe und/oder eine Aminogruppe oder eine Phenylamino- oder niedere Alkylaminogruppe substituiert ist und durch eine niedere Alkyl- oder niedere Alkoxygruppe oder ein Chloratom substituiert sein kann,
oder in welcher $Q_1$ für den Naphthalinkern steht, der durch eine Aminogruppe substituiert ist und durch 1, 2 oder 3 Sulfogruppen substituiert sein kann, oder für den Rest des Pyrazol-5-ons oder Pyrazol-3-ons oder des 5-Amino-pyrazols oder 3-Aminopyrazols steht, wobei diese Pyrazolreste jeweils in 3- bzw. 5-Stellung durch niederes Alkyl, Phenyl, Chlorphenyl, Methylphenyl, Carboxy oder niederes Carbalkoxy und jeweils in 1-Stellung durch einen Phenyl- oder Naphthylrest substituiert sind, wobei diese Phenyl- und Naphthylreste die faserreaktive(n) Gruppe(n) gebunden enthalten und weiterhin durch 1, 2 oder 3 Substituenten aus der Gruppe niederes Alkyl, niederes Alkoxy, Chlor, Brom, Trifluormethyl, Sulfo, Carboxy, Acetylamino, Benzoylamino, Amino und Cyan substituiert sein können,
oder in welcher $Q_1$ der Rest des Acetoacetyl-anilid- oder -naphthylamids steht, in welchen die aromatischen Kerne die faserreaktive(n) Gruppe(n) der Formel (4) gebunden enthalten und diese aromatischen Kerne noch durch 1, 2 oder 3 Substituenten substituiert sein können, die der Gruppe niederes Alkyl, niederes Alkoxy, Chlor, Brom, Sulfo, Carboxy, Acetylamino, Benzoylamino, Nitro und Cyan angehören,

R ein Wasserstoffatom oder eine Alkylgruppe bedeutet und

n für die Zahl 1 oder 2 steht.

## Claims

1. Water-soluble compounds of the general formula (1)

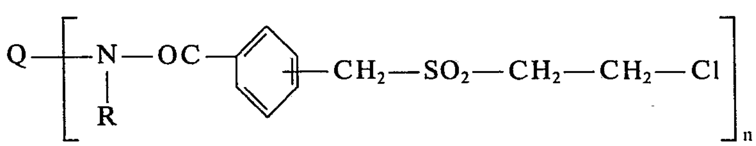

(1)

in which

Q is the radical of an organic compound which has fibre-finishing properties, containing one or more groups which render it water-soluble,

R is a hydrogen atom or an alkyl group and

n represents the number 1 or 2.

2. Compounds according to claim 1, in which Q represents the radical of a water-soluble organic dyestuff.

3. Compounds according to claim 2 of the general formula

$$R'-D-N=N-K$$

in which

D denotes, as the radical of a diazo component, the benzene nucleus which can be substituted by 1, 2 or 3 substituents belonging to the group comprising lower alkyl, lower alkoxy, hydroxy, carboxy, acetylamino, benzoylamino, phenylamino, sulfobenzoylamino, sulfophenylamino, carbamoyl, carbamoyl mono- or disubstituted by lower alkyl and/or phenyl, sulfamoyl, sulfamoyl mono- or

disubstituted by lower alkyl and/or phenyl, cyano, nitro, chlorine, bromine, trifluoromethyl and sulfo, or

D is a naphthalene nucleus which can be substituted by 1 or 2 sulfonic acid groups and/or one hydroxy, carboxy, methyl, methoxy, ethoxy or nitro group or one chlorine atom,

K represents, as the radical of a coupling component, the 1- or 2-naphthol radical which can be substituted by 1, 2 or 3 sulfonic acid groups and/or one amino, methylamino, phenylamino, acetylamino, benzoylamino or N-methyl-N-acetylamino group, or

K denotes, as the radical of a coupling component, the 1- or 2-aminonaphthalene radical which can be substituted by 1, 2 or 3 sulfonic acid groups and/or one hydroxy or acetylamino group, or

K denotes, as the radical of a coupling component, the 5-pyrazolone radical which is substituted by methyl, carboxy, carbamoyl, lower carbalkoxy or phenyl in the 3-position and contains bonded, in 1-position, the phenyl nucleus or naphthyl nucleus, this phenyl radical may be substituted by 1 or 2 sulfonic acid goups and/or 1 or 2 substituents from the group comprising lower alkyl, lower alkoxy, chlorine, bromine, nitro, acetylamino and carboxy, and this naphthyl nucleus can be substituted by 1, 2 or 3 sulfo groups and/or one substituent from the group comprising lower alkyl, lower alkoxy, nitro, acetylamino and carboxy,

and the azogroup is linked to K in the ortho-position relative to the hydroxy group controlling the coupling reaction, and

R' denotes the radical of the general formula (4)

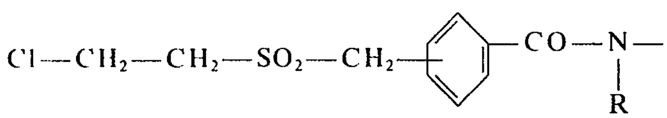

(4)

which is bonded to one of the aromatic nuclei of D or to one of its lower alkyl substituents and in which R has the meaning mentioned in claim 1.

4. Compounds according to claim 2 of the general formula

$$D—N=N—K—R'$$

in which

D denotes, as the radical of a diazo component, the benzene nucleus which can be substituted by 1, 2 or 3 substituents belonging to the group comprising lower alkyl, lower alkoxy, hydroxy, carboxy, acetylamino, benzoylamino, phenylamino, sulfobenzoylamino, sulfophenylamino, carbamoyl, carbamoyl mono- or disubstituted by lower alkyl and/or phenyl, sulfamoyl, sulfamoyl mono- or disubstited by lower alkyl and/or phenyl, cyano, nitro, chlorine, bromine, trifluoromethyl and sulfo, or

D is a naphthalene nucleus which can be substituted by 1, 2 or 3 sulfonic acid groups and/or one hydroxy, carboxy, methyl, methoxy, ethoxy, nitro or acetylamino group or one chlorine atom,

K represents the radical of 1- or 2-naphthol which can be substituted by 1, 2 or 3 sulfonic acid groups, or

K denotes the radical of the 1- or 2-amino-naphthalene or of naphthylene, which can be substituted by 1, 2 or 3 sulfonic acid groups and/or one hydroxy group, or

K denotes the radical of the 5-pyrazolone-4-yl which is substituted by methyl, carboxy, carbamoyl, lower carbalkoxy or phenyl in the 3-position and contains bonded, in the 1-position, the phenyl nucleus or naphthyl nucleus, and this phenyl radical can be substituted by 1 or 2 substituents from the group comprising lower alkyl, lower alkoxy, chlorine, bromine, nitro, acetylamino and carboxy, and this naphthyl nucleus can be substituted by 1, 2 or 3 sulfo groups and/or one substituent from the group comprising lower alkyl, lower alkoxy, nitro, acetylamino and carboxy, and

R' represents the radical of the general formula (4)

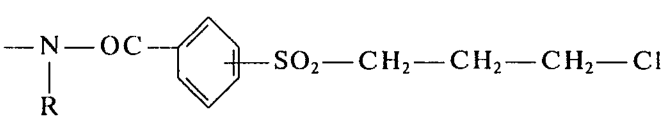

(4)

which is linked to one of the aromatic nuclei of K or to one of its lower alkyl substituents and in which R has the meaning mentioned in claim 1.

5. Compounds according to claim 2 of the general formula

$$(R')_{m'}—D—N=N—K_1—N=N—D—(R')_{m''}$$

in which

$R'$ represents the fiber-reactive radical of the general formula (4) mentioned and defined in claim 3 or 4,

m' and m" are identical to or different from one another and each represents the number 0 or 1, and the sum of (m' + m") is the number 1 or 2,

D has the meaning as mentioned in claim 3 or 4, depending on whether D contains the radical R', and

$K_1$ represents, as the radical of a bi-functional coupling component, the amino-hydroxy-naphthylene radical which can be substituted by one or two sulfo groups.

6. Compounds according to claim 2 of the general formula

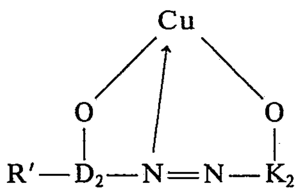

in which

$D_2$ denotes the benzene nucleus which can be substituted by 1 or 2 substituents which belong to the group comprising lower alkyl, lower alkoxy, carboxy, phenylaminosulfobenzoylamino, sulfophenylamino, carbamoyl, carbamoyl mono- or disubstituted by lower alkyl and/or phenyl, sulfamoyl, sulfamoyl mono- or disubstituted by lower alkyl and/or phenyl, cyano, nitro, chlorine, bromine, trifluoromethyl and sulfo, or
denotes the naphthalene nucleus which can be substituted by 1, 2 or 3 sulfonic acid groups and/or one carboxy, methyl, methoxy, ethoxy, nitro or acetylamino group or one chlorine atom,
and the complex-forming oxygen atom in $D_2$ is bonded in ortho-position relative to the azogroup;

$K_2$ denotes the naphthylene radical which can be substituted by 1, 2 or 3 sulfonic acid groups and/or one amino, methylamino, phenylamino, acetylamino, benzoylamino or N-methyl-N-acetylamino group,
and the complex-forming oxygen atom in $K_2$ is bonded in ortho-position relative to the azogroup;

$R'$ denotes the radical of the general formula (4) mentioned and defined in claim 3 which is bonded to one of the aromatic nuclei of $D_2$ or to one of its lower alkyl substituents.

7. Compounds according to claim 3 of the general formula

$$R'—D—N=N—K$$

in which R'–D– denotes a radical of the general formula

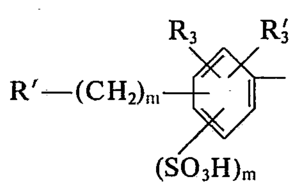

in which

$R'$ denotes the radical of the general formula (4) mentioned and defined in claim 3,

m represents the number zero, 1 or 2, and these indices m can be identical to or different from one another,

$R_3$ is a hydrogen atom, a lower alkyl group, a lower alkoxy group, a chlorine of bromine atom, and

$R_3'$ is a hydrogen atom, a lower alkyl group, a lower alkoxy group, a chlorine or bromine atom or a hydroxy group,
and $R_3$ and $R_3'$ can be identical to or different from one another,

and in which

K denotes a radical of the general formula

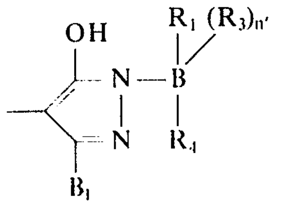

or

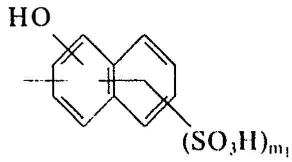

or

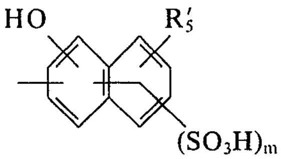

in which

- $R_3$ has the meaning mentioned above,
- $R_1$ is a hydrogen atom, a lower alkyl group, a lower alkoxy group, a chlorine or bromine atom, a lower alkanoylamino group or a sulfonic acid group,
- $R_4$ is a hydrogen atom, a lower alkyl group, a lower alkoxy group or the sulfonic acid group, and the radicals $R_1$, $B_1$, $R_3$ and $R_4$ can be identical to or different from one another,
- n′ denotes the number 1 or 2,
- B is a benzene or naphthalene nucleus,
- $B_1$ is a lower alkyl group, a carboxy group, a carbomethoxy or carbethoxy group or the phenyl radical,
- m denotes the numbers zero, 1 or 2,
- $m_1$ represents the numbers zero, 1, 2 or 3 and
- $R_5'$ denotes the phenylureido, a lower alkanoylamino, a lower alkenoylamino or a benzoylamino group which can be substituted by chlorine, methyl, methoxy, nitro, sulfo and/or carboxy.

8. Compounds according to claim 4 of the general formula

$$D—N{=}N—K—R'$$

in which

D denotes a radical of the general formula

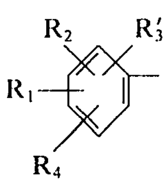

or

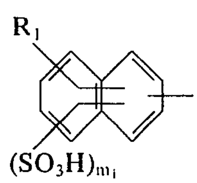

in which

- $R_1$ is a hydrogen atom, a lower alkyl group, a lower alkoxy group, a chlorine or bromine atom, a lower alkanoylamino group or a sulfonic acid group,
- $R_2$ is a hydrogen atom, a lower alkyl group, a lower alkoxy group, a chlorine or bromine atom or a sulfonic acid group,
- $R_3'$ is a hydrogen atom, a lower alkyl group, a lower alkoxy group, a chlorine or bromine atom or a hydroxy group,
- $R_4$ is a hydrogen atom, a lower alkyl group, a lower alkoxy group or the sulfonic acid group, and these radicals $R_1$, $R_2$, $R_3'$ and $R_4$ can be identical to or different from one another, and
- $m_1$ represents the number zero, 1, 2 or 3,

and in which the formula radical —K—R′ denotes a radical of the general formula

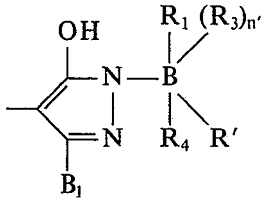

or

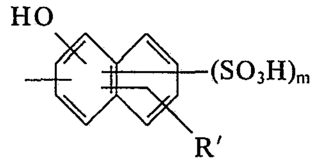

in which

| | |
|---|---|
| $R_1$ and $R_4$ | have the above-mentioned meanings, |
| $R_3$ | is a hydrogen atom, a lower alkyl group, a lower alkoxy group, a chlorine or bromine atom, |
| B | is a benzene or naphthalene nucleus, |
| $B_1$ | is a lower alkyl group, a carboxy group, a carbomethoxy or carbethoxy group or the phenyl radical, |
| | and these radicals $R_1$, $R_3$, $R_4$ and $B_1$ can be identical to or different from one another, |
| n' | represents the number 1 or 2, |
| m | is the number zero, 1 or 2 and |
| R' | denotes the radical of the general formula (4) mentioned and defined in claim 4. |

9. Compounds according to claim 3 or 7, characterized in that K denotes the radical of a coupling component of the 3,6-disulfo- or 4,6-disulfo-1-acetylamino-8-naphthol or the 3,6-disulfo- or 4,6-disulfo-1-benzoylamino-8-naphthol radical.

10. A compound according to claim 2 of the formula

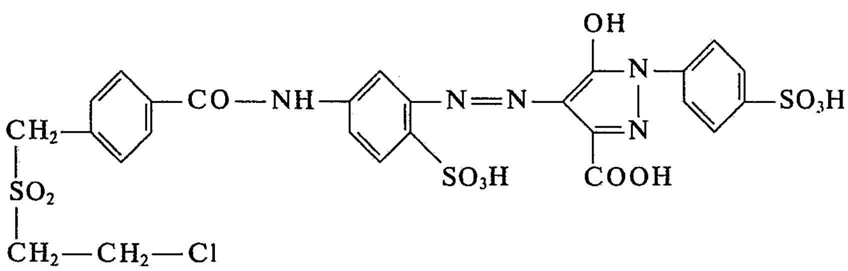

and its alkali metal salts.

11. A compound according to claim 2 of the formula

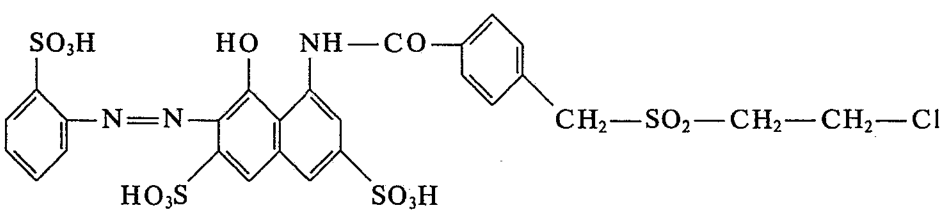

and its alkali metal salts.

12. A compound according to claim 2 of the formula

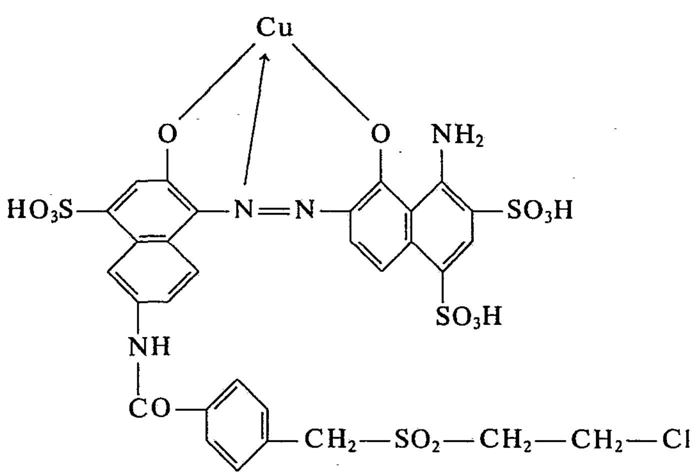

and its alkali metal salts.

13. A compound according to claim 2 of the formula

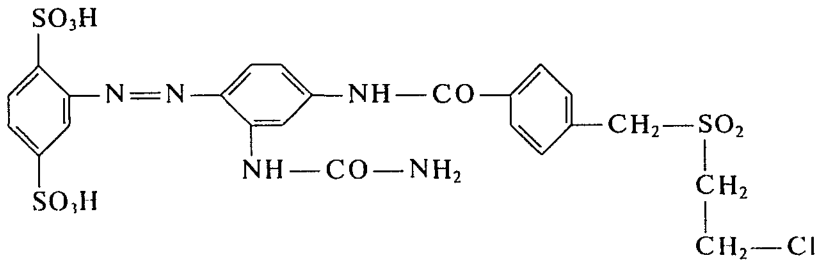

and its alkali metal salts.

14. A compound according to claim 2 of the formula

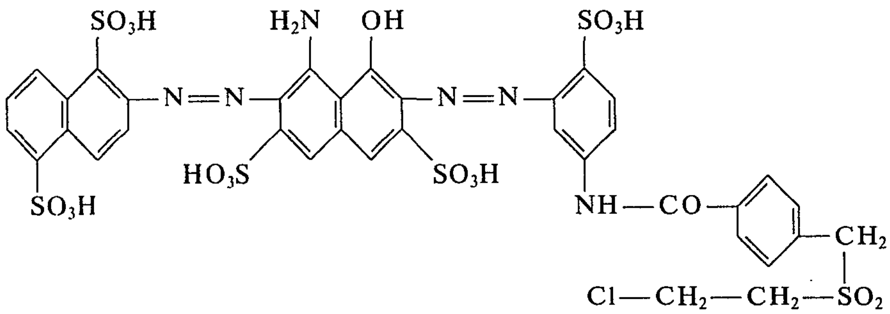

and its alkali metal salts.

15. A process for the preparation of compounds of the general formula (1), characterized by that an organic compound of the general formula (2)

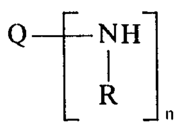

(2)

in which Q, R and n have the meanings given in claim 1, is reacted with a compound of the general formula (3)

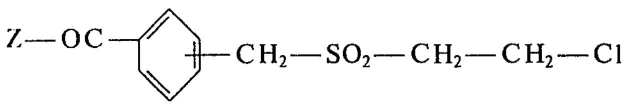

(3)

in which Z represents a halogen atom, or organic precursors for the synthesis of the molecular radical of the formula Q are reacted with one another in the customary manner suitable for this reaction, these precursors being chosen such that at least one of them contains one or more water-solubilizing groups and at least one group of the formula (4)

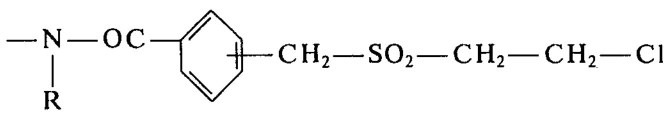

(4)

in which R has the meaning given in claim 1, and also being chosen such that a compound of the formula (1) in which n represents the number 1 or 2 is obtained.

16. Use of the compounds of the general formula (1) according to claim 1 for fibre-finishing materials from natural, regenerated or synthetic nitrogen-containing fibres or from natural, regenerated or synthetic hydroxy groups-containing fibres or leather.

17. Use of the compounds of claim 2 as dyestuffs for dyeing and printing materials from natural, regenerated or synthetic nitrogen-containing fibres or from natural, regenerated or synthetic hydroxy groups-containing fibres, or leather.

18. Compounds of the general formula (3)

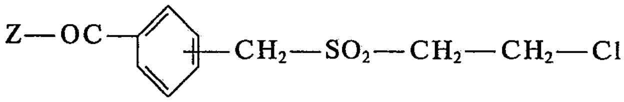 (3)

in which Z denotes a halogen atom.

19. A process for the preparation of compounds of the general formula (3) according to claim 18, characterized by that the alkyl group in a compound of the general formula (5)

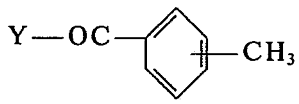 (5)

in which Y represents a halogen atom, a lower alkoxy group or the hydroxy group, is chlorinated to give a compound of the general formula (6)

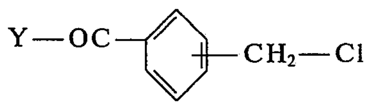 (6)

in which Y has the abovementioned meaning, that this compound is reacted with 2-mercapto-ethanol in aqueous solution to give the thioether compound of the general formula (7a)

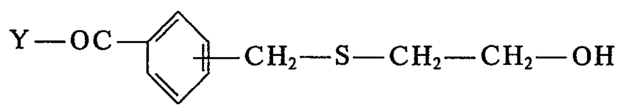 (7a)

in which Y denotes the hydroxy group or a lower alkoxy group, and that this compound is then converted — however, in the case where Y represents a lower alkoxy group, first after prior alkaline hydrolysis to give the compound (7a) in which Y is hydroxy, — into the sulfonyl compound of the general formula (7b)

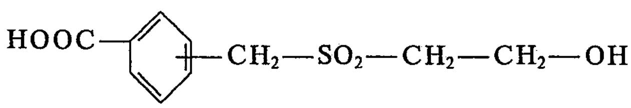 (7b)

by means of an oxidizing agent, and this sulfonyl compound is reacted with a chlorinating agent to give the compound of the general formula (3).

20. Use the compounds of the general formula (3) of claim 18 as a fibre-reactive anchor in compounds having fibre-finishing properties.

21. Use the compounds of the general formula (3) of claim 18 for the preparation of compounds of the general formula (1) mentioned and defined in claim 1, or for the preparation of compounds of the general formula

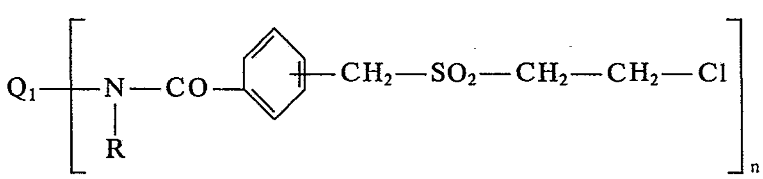 (9)

in which

$Q_1$ represents a benzene or naphthalene radical which is substituted by a primary amino group and is optionally substituted by 1, 2 or 3 sulfonic acid groups and/or 1, 2 or 3 other substituents belonging to the group comprising lower alkyl, lower alkoxy, carboxy, hydroxy, acetylamino, benzoylamino, phenylamino, phenylamino substituted by substituents from the group comprising lower alkyl, lower alkoxy, sulfo, carboxy, acetylamino, benzoylamino and halogen, carboxylic acid amide, carboxylic acid amide mono- or disubstituted by lower alkyl and/or phenyl (it being possible for the phenyl radical to be further substituted by substituents from the group comprising lower alkyl, lower alkoxy, sulfo, carboxy, chlorine and amino), sulfonic acid amide, sulfonic acid amide mono- or disubstituted by lower alkyl and/or phenyl (it being possible for the phenyl radical to be further substituted by substituents from the group comprising lower alkyl, lower alkoxy, sulfo, carboxy, chlorine and amino), cyano, nitro, halogen and trifluoromethyl,

or $Q_1$ represents the radical of naphthol which can be substituted by 1, 2 or 3 sulfo groups and by a further amino group, phenylamino or a lower alkylamino group,
or in which $Q_1$ represents the benzene nucleus which is substituted by a hydroxy group and/or an amino group or a phenylamino or lower alkylamino group and can be substituted by a lower alkyl or lower alkoxy group or a chlorine atom,
or in which $Q_1$ represents the naphthalene nucleus which is substituted by an amino group and can be substituted by 1, 2 or 3 sulfo groups, or represents the radical of pyrazol-5-one or pyrazol-3-one or of 5-amino-pyrazole or 3-amino-pyrazole, these pyrazole radicals being substituted, in each case, in the 3- or 5-position by lower alkyl, phenyl, chlorophenyl, methylphenyl, carboxy or lower carbalkoxy, and, in each case, in the 1-position by a phenyl or naphthyl radical, these phenyl and naphthyl radicals contain bonded the fibre-reactive group(s) and can be further substituted by 1, 2 or 3 substituents from the group comprising lower alkyl, lower alkoxy, chlorine, bromine, trifluoromethyl, sulfo, carboxy, acetylamino, benzoylamino, amino and cyano,
or in which $Q_1$ represents the radical of acetoacetylanilide or -naphthylamide, in which the aromatic nuclei contain bonded the fibre-reactive group(s) of the formula (4) and can be further substituted by 1, 2 or 3 substituents belonging to the group comprising lower alkyl, lower alkoxy, chlorine, bromine, sulfo, carboxy, acetylamino, benzoylamino, nitro and cyano,

R denotes a hydrogen atom or an alkyl group and
n represents the number 1 or 2.

## Revendications

1. Composés solubles dans l'eau qui répondent à la formule générale 1

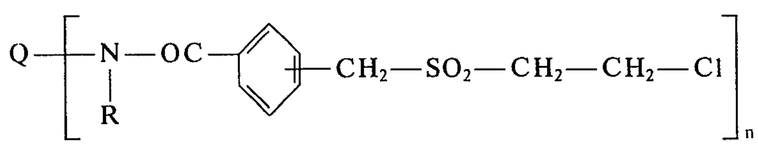

(1)

dans laquelle

Q représente le radical d'un composé organique qui a des propriétés ennoblissantes à l'égard de fibres, ce radical Q portant un ou plusieurs radicaux hydrosolubilisants,
R représente un atome d'hydrogène ou un radical alkyle et
n représente le nombre 1 ou le nombre 2.

2. Composés selon la revendication 1 dans lesquels Q représente le radical d'un colorant organique soluble dans l'eau.

3. Composés selon la revendication 2 qui répondent à la formule générale

$$R'—D—N{=}N—K$$

dans laquelle

D en tant que radical d'une composante de diazotation, représente un noyau benzénique qui peut porter 1, 2 ou 3 substituants pris dans l'ensemble constitué par les alkyles inférieurs, les alcoxy inférieurs, l'hydroxy, le carboxy, l'acétylamino, le benzoylamino, le phénylamino, les sulfobenzoylamino, les sulfophénylamino, le carbamoyle, les carbamoyles mono- ou di-substitués (les substituants sont alors pris dans l'ensemble constitué par les alkyles inférieurs et le phényle), le sulfamoyle, les sulfamoyles mono- ou di-substitués (les substituants sont alors pris dans l'ensemble constitué par les alkyles inférieurs et le phényle), le cyano, le nitro, le chlore, le brome, le trifluoro-méthyle et le sulfo, ou
D représente un noyau naphtalénique qui peut porter 1 ou 2 radicaux sulfo et/ou un radical hydroxy, carboxy, méthyle, méthoxy, éthoxy ou nitro ou un atome de chlore,
K en tant que radical d'un copulant, représente un radical hydroxy-1 ou -2 naphtalène qui peut porter 1, 2 ou 3 radicaux sulfo et/ou un radical amino, méthylamino, phénylamino, acétylamino, benzoylamino ou N-méthyl-N-acétylamino, ou
K en tant qu'un radical d'un copulant, représente un radical d'amino-1 ou -2 naphtalène qui peut porter 1, 2 ou 3 radicaux sulfo et/ou un radical hydroxy ou acétylamino, ou
K en tant que radical d'un copulant, représente un radical de pyrazolone-5 qui porte, en position 3, un méthyle, un carboxy, un carbamoyle, un alcoxycarbonyle inférieur ou un phényle et, en position 1, un noyau phényle ou un noyau naphtyle, le radical phényle pouvant porter 1 ou 2 radicaux sulfo et/ou 1 ou 2 substituants pris dans l'ensemble constitué par les alkyles inférieurs, les alcoxy inférieurs,

le chlore, le brome, le nitro, l'acétylamino et le carboxy, et le noyau naphtyle pouvant porter 1, 2 ou 3 radicaux sulfo et/ou un substituant pris dans l'ensemble constitué par les alkyles inférieurs, les alcoxy inférieurs, le nitro, l'acétylamino et le carboxy,
le radical azo étant, sur K, en position ortho par rapport au radical hydroxy orientant la copulation, et

R' représente un radical de formule générale 4

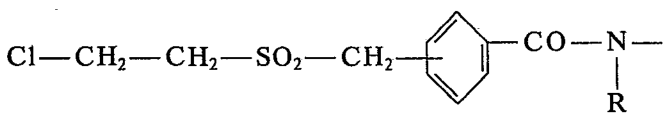

(4)

qui est relié à l'un des noyaux aromatiques de D ou à l'un de ses substituants alkyliques inférieurs et dans lequel R a la signification donnée à la revendication 1.

4. Composés selon la revendication 2 qui répondent à la formule générale

$$D—N=N—K—R'$$

dans laquelle

D en tant que radical d'une composante de diazotation, représente un noyau benzénique qui peut porter 1, 2 ou 3 substituants pris dans l'ensemble constitué par alkyles inférieurs, les alcoxy inférieurs, l'hydroxy, le carboxy, l'acétylamino, le benzoylamino, le phénylamino, les sulfobenzoylamino, les sulfophénylamino, le carbamoyle, les carbamoyles mono- ou di-substitués (les substituants sont alors pris dans l'ensemble constitué par les alkyles inférieurs et le phényle), le sulfamoyle, les sulfamoyles mono- ou di-substitués (les substituants sont alors pris dans l'ensemble constitué par les alkyles inférieurs et le phényle), le cyano, le nitro, le chlore, le brome, le trifluoro-méthyle et le sulfo, ou

D représente un noyau naphtalénique qui peut porter 1, 2 ou 3 radicaux sulfo et/ou un radical hydroxy, carboxy, méthyle, méthoxy, éthoxy, nitro ou acétylamino ou un atome de chlore,

K représente un radical hydroxy-1 ou -2 naphtalène qui peut porter 1, 2 ou 3 radicaux sulfo, ou

K représente un radical d'amino-1 ou -2 naphtalène ou de naphtylène qui peut porter 1, 2 ou 3 radicaux sulfo et/ou un radical hydroxy, ou

K représente un radical oxo-5 pyrazolyle-4 qui porte, en position 3, un méthyle, un carboxy, un carbamoyle, un alcoxycarbonyle inférieur ou un phényle et, en position 1, un noyau phényle ou un noyau naphtyle, le noyau phényle pouvant porter 1 ou 2 substituants pris dans l'ensemble constitué par les alkyles inférieurs, les alcoxy inférieurs, le chlore, le brome, le nitro, l'acétylamino et le carboxy, et le noyau naphtyle pouvant porter 1, 2 ou 3 radicaux sulfo et/ou un substituant pris dans l'ensemble constitué par les alkyles inférieurs, les alcoxy inférieurs, le nitro, l'acétylamino et le carboxy, et

R' représente un radical de formule générale 4

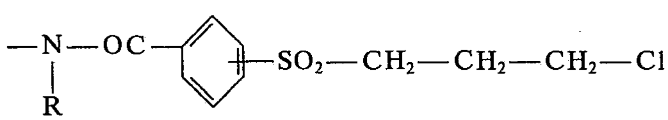

(4)

qui est porté par l'un des noyaux aromatiques de K ou par l'un de ses substituants alkyliques inférieurs et dans lequel R a la signification donnée à la revendication 1.

5. Composés selon la revendication 2 qui répondent à la formule générale

$$(R')_{m'}—D—N=N—K_1—N=N—D—(R')_{m''}$$

dans laquelle

| | |
|---|---|
| R' | représente le radical réactif à l'égard de fibres qui répond à la formule générale 4 représentée et définie à l'une des revendications 3 et 4, |
| m' et m'', | qui peuvent être identiques ou différents, représentent chacun le nombre 0 ou le nombre 1, la somme (m' + m'') étant égale à 1 ou à 2, |
| D | a la signification qui a été donnée à la revendication 3 ou à la revendication 4 suivant que D porte ou non le radical R', et |
| $K_1$, | en tant que radical d'un copulant difonctionnel, représente un radical amino-hydroxy-naphtylène éventuellement porteur d'un ou deux radicaux sulfo. |

6. Composés selon la revendication 2 qui répondent à la formule générale

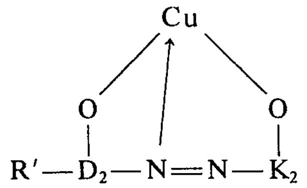

dans laquelle

$D_2$ représente un noyau benzénique qui peut porter 1 ou 2 substituants pris dans l'ensemble constitué par les alkyles inférieurs, les alcoxy inférieurs, le carboxy, le phénylamino, les sulfobenzoylamino, les sulfophénylamino, le carbamoyle, les carbamoyles mono- ou di-substitués (les substituants sont pris dans l'ensemble constitué par les alkyles inférieurs et le phényle), le sulfamoyle, les sulfamoyles mono- ou di-substitués (les substituants sont pris dans l'ensemble constitué par les alkyles inférieurs et le phényle), le cyano, le nitro, le chlore, le brome, le trifluoro-méthyle et le sulfo, ou représente un noyau naphtalénique qui peut porter 1, 2 ou 3 radicaux sulfo et/ou un radical carboxy, méthyle, méthoxy, éthoxy, nitro ou acétylamino ou un atome de chlore, l'atome d'oxygène complexant étant fixé, sur $D_2$, en une position ortho relativement au radical azo,

$K_2$ représente un radical naphtalène qui peut porter 1, 2 ou 3 radicaux sulfo et/ou un radical amino, méthylamino, phénylamino, acétylamino, benzoylamino ou N-méthyl-N-acétylamino, l'atome d'oxygène complexant étant relié à $K_2$ en ortho par rapport au radical azo, et

R' représente un radical répondant à la formule générale 4 qui a été représentée et définie à la revendication 3, radical qui est relié à l'un des noyaux aromatiques de $D_2$ ou à l'un de ses substituants alkyliques inférieurs.

7. Composés selon la revendication 3 qui répondent à la formule générale

$$R'—D—N=N—K$$

dans laquelle R'—D— représente un radical répondant à la formule générale

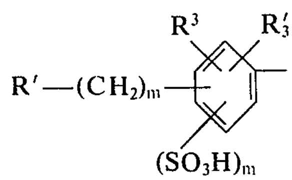

dans laquelle

R' représente un radical répondant à la formule générale 4 qui a été représentée et définie à la revendication 3,

m représente un nombre égal à 0, à 1 ou à 2, les indices m pouvant être identiques l'un à l'autre ou différents l'un de l'autre,

$R_3$ représente un atome d'hydrogène, un radical alkyle inférieur, un radical alcoxy inférieur ou un atome de chlore ou de brome, et

$R_3'$ représente un atome d'hydrogène, un radical alkyle inférieur, un radical alcoxy inférieur, un atome de chlore ou de brome ou un radical hydroxy,
$R_3$ et $R_3'$ pouvant être identiques l'un à l'autre ou différents l'un de l'autre, et

K représente un radical répondant à l'une des formules générales

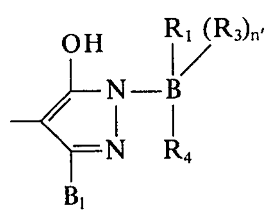

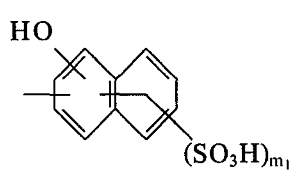

et 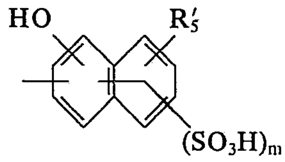

dans lesquelles

$R_3$ a la signification indiquée ci-dessus,
$R_1$ représente un atome d'hydrogène, un alkyle inférieur, un alcoxy inférieur, un atome de chlore ou de brome, un alcanoylamino inférieur ou un radical sulfo,
$R_4$ représente un atome d'hydrogène, un alkyle inférieur, un alcoxy inférieur ou un radical sulfo, $R_1$, $B_1$, $R_3$ et $R_4$ pouvant être identiques ou différents les uns par rapport aux autres,
n' représente le nombre 1 ou le nombre 2,
B représente un noyau benzénique ou naphtalénique,
$B_1$ représente un alkyle inférieur, un carboxy, un méthoxy-carbonyle, un éthoxy-carbonyle ou un phényle,
m représente un nombre égal à 0, à 1 ou à 2,
$m_1$ représente un nombre égal à 0, à 1, à 2 ou à 3 et
$R'_5$ représente un radical phényluréido, un alcanoylamino inférieur, un alcénoylamino inférieur ou un benzoylamino éventuellement porteur d'un atome de chlore, d'un radical méthyle, méthoxy, nitro, sulfo et/ou carboxy.

8. Composés selon la revendication 4 qui répondent à la formule générale

$$D—N{=}N—K—R'$$

dans laquelle

D représente un radical répondant à l'une des formules générales suivantes

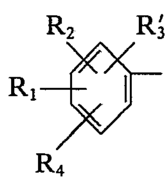 et 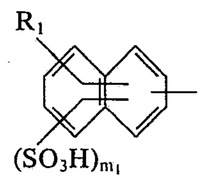

dans lesquelles

$R_1$ représente un atome d'hydrogène, un alkyle inférieur, un alcoxy inférieur, un atome de chlore ou de brome, un alcanoylamino inférieur ou un radical sulfo,
$R_2$ représente un atome d'hydrogène, un alkyle inférieur, un alcoxy inférieur, un atome de chlore ou de brome ou un radical sulfo,
$R'_3$ représente un atome d'hydrogène, un alkyle inférieur, un alcoxy inférieur, un atome de chlore ou de brome ou un radical hydroxy,
$R_4$ représente un atome d'hydrogène, un alkyle inférieur, un alcoxy inférieur ou un radical sulfo, les radicaux $R_1$, $R_2$, $R'_3$ et $R_4$ pouvant être identiques ou différents les uns par rapport aux autres, et
$m_1$ représente un nombre égal à 0, à 1, à 2 ou à 3,

et —K—R' représente un radical répondant à l'une des formule générales suivantes

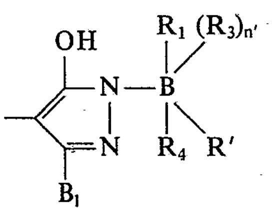 et 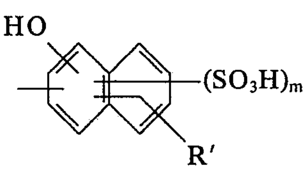

dans lesquelles

$R_1$ et $R_4$ ont les significations précédemment données,
$R_3$ représente un atome d'hydrogène, un alkyle inférieur, un alcoxy inférieur ou un atome de

chlore ou de brome,

B représente un noyau benzénique ou naphtalénique,

$B_1$ représente un alkyle inférieur ou un radical carboxy, méthoxycarbonyle, éthoxycarbonyle ou phényle,

les radicaux $R_1$, $R_3$, $R_4$ et $B_1$ pouvant être identiques ou différents les uns par rapport aux autres,

n' représente le nombre 1 ou le nombre 2,

m représente un nombre égal à 0, à 1 ou à 2 et

R' représente un radical répondant à la formule générale 4 qui a été représentée et définie à la revendication 4.

9. Composés selon l'une des revendications 3 et 7, caractérisés en ce que K, en tant que radical d'un copulant, représente un radical de disulfo-3,6 ou -4,6 acétylamino-1 naphtol-8 ou un radical de disulfo-3,6 ou -4,6 benzoylamino-1 naphtol-8.

10. Composé selon la revendication 2 qui répond à la formule suivante

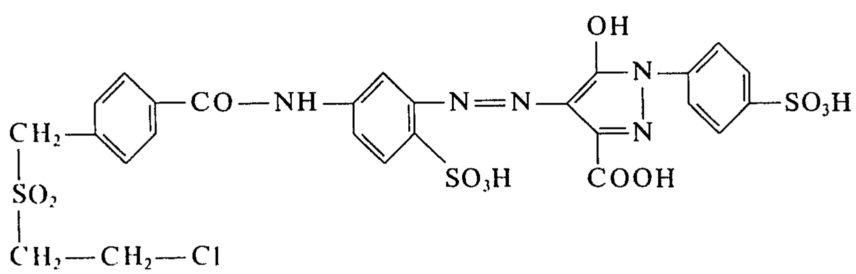

ainsi que ses sels de métaux alcalins.

11. Composé selon la revendication 2 qui répond à la formule suivante

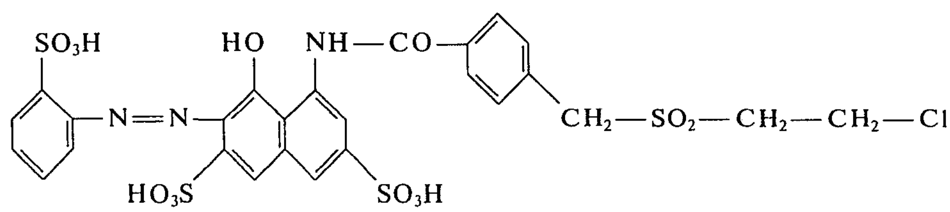

et ses sels de métaux alcalins.

12. Composé selon la revendication 2 qui répond à la formule suivante

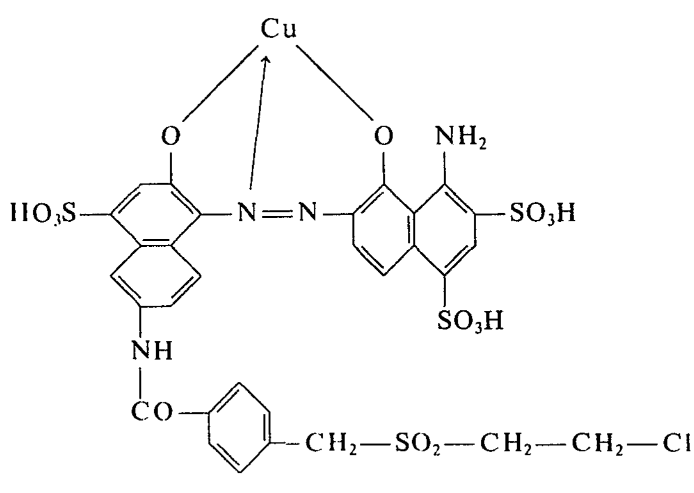

et ses sels de métaux alcalins.

13. Composé selon la revendication 2 qui répond à la formule suivante

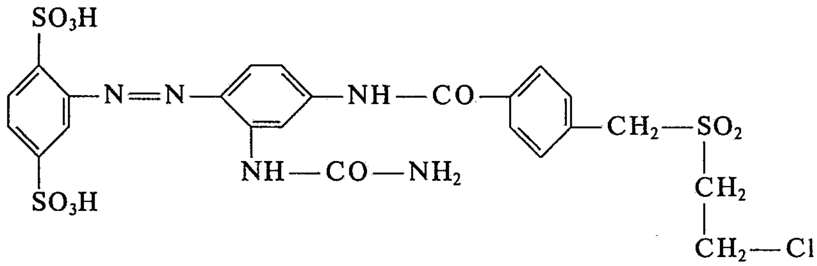

et ses sels de métaux alcalins.

14. Composé selon la revendication 2 qui répond à la formule suivante

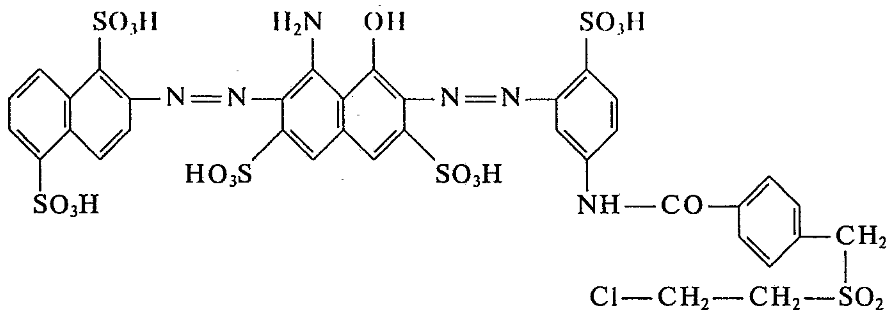

et ses sels de métaux alcalins.

15. Procédé de préparation de composés de formule générale 1, procédé caractérisé en ce qu'on fait réagir un composé organique répondant à la formule générale 2

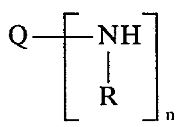 (2)

dans laquelle Q, R et n ont les significations données à la revendication 1, avec un composé répondant à la formule générale 3

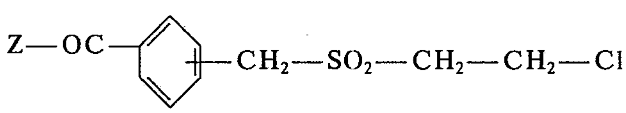 (3)

dans laquelle Z représente un atome d'halogène, ou encore on fait réagir entre eux, d'une manière usuelle et appropriée à cette fin, des précurseurs organiques pour la synthèse du radical de formule Q, ces précurseurs étant choisis de telle façon qu'au moins l'un d'entre eux contienne un ou plusieurs radicaux hydro-solubilisants et au moins un radical répondant à la formule 4

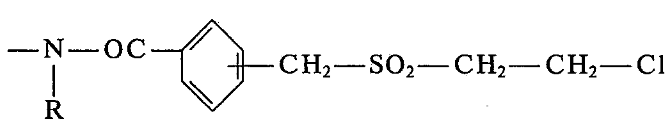 (4)

dans laquelle R a la signification indiquée à la revendication 1, et on choisit alors à nouveaux ces précurseurs de manière à obtenir un composé de formule 1 dans lequel n représente le nombre 1 ou le nombre 2.

16. Application des composés de formule générale 1 selon la revendication 1 pour l'ennoblissement de matières constituées de fibres azotées naturelles, régénérées ou synthétiques ou de fibres hydroxylées naturelles, régénérées ou synthétiques, ou encore du cuir.

17. Application des composés selon la revendication 2 comme colorants pour la teinture et l'impression de matières constituées de fibres azotées naturelles, régénérées ou synthétiques ou de fibres hydroxylées naturelles, régénérées ou synthétiques, ou encore du cuir.

18. Composés répondant à la formule générale 3

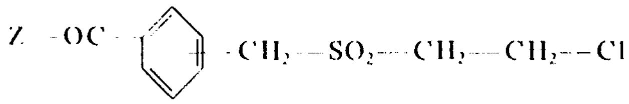

(3)

dans laquelle Z représente un atome d'halogène.

19. Procédé de préparation des composés de formule générale 3 selon la revendication 18, procédé caractérisé en ce qu'on chlore dans son radical alkyle un composé répondant à la formule générale 5

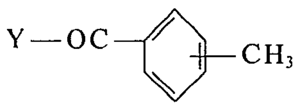

(5)

dans laquelle Y représente un atome d'halogène, un radical alcoxy inférieur ou un radical hydroxy, de manière à obtenir un composé répondant à la formule générale 6

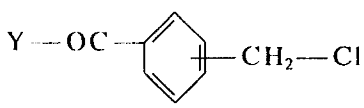

(6)

dans laquelle Y a la signification prédédemment donnée, on fait réagir ce composé chloré, en solution aqueuse, avec le mercapto-2 éthanol pour obtenir le thio-éther répondant à la formule générale 7a

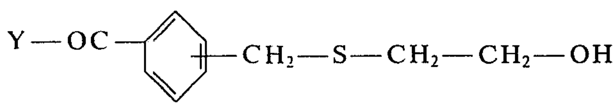

(7a)

dans laquelle Y représente un radical hydroxy ou un radical alcoxy inférieur, après quoi on transforme ce thio-éther — dans le cas où Y représente un alcoxy inférieur on effectue toutefois un saponification alcaline préalable afin d'obtenir le composé dans lequel Y représente un radical hydroxy — au moyen d'un agent d'oxydation en le composé sulfonylique de formule générale 7b

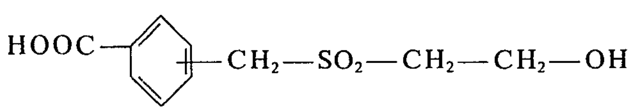

(7b)

et on fait réagir celui-ci avec un agent de chloration pour le convertir en le composé de formule générale 3.

20. Application des composés de formule générale 3 selon la revendication 18 comme moyens de fixation réactifs à l'égard de fibres dans des composés doués de propriétés ennoblissantes à l'égard de fibres.

21. Application des composés de formule générale 3 selon la revendication 18 à la préparation de composés répondant à la formule générale 1 qui a été représentée et définie à la revendication 1, ou à la préparation de composés répondant à la formule générale 9

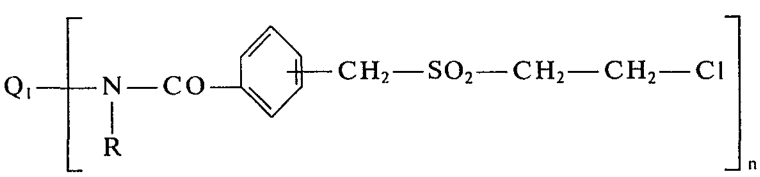

(9)

dans laquelle

$Q_1$ représente un radical benzénique ou naphtalénique qui porte un radical amino primaire et, éventuellement, 1, 2 ou 3 radicaux sulfo et/ou 1, 2 ou 3 substituants supplémentaires pris dans l'ensemble constitué par les alkyles inférieurs, les alcoxy inférieurs, le carboxy, l'hydroxy, l'acétylamino, le benzoylamino, le phénylamino, les phénylamino substitués (les substituants sont alors pris dans l'ensemble constitué par les alkyles inférieurs, les alcoxy inférieurs, le sulfo, le carboxy, l'acétylamino, le benzoylamino et les halogènes), le carbamoyle, les carbamoyles mono- ou di-substitués (les substituants sont alors pris dans l'ensemble constitué par les alkyles inférieurs et le phényle, le phényle pouvant lui-même porter des substituants pris dans l'ensemble constitué par les alkyles inférieurs, les alcoxy inférieurs, le sulfo, le carboxy, le chlore et l'amino), le sulfamoyle, les sulfamoyles mono- ou di-substitués (les substituants sont alors pris dans l'ensemble constitué par les alkyles inférieurs et le phényle, le phényle pouvant lui-même porter des substituants pris

dans l'ensemble constitué par les alkyles inférieurs, les alcoxy inférieurs, le sulfo, le carboxy, le chlore et l'amino), le cyano, le nitro, les halogènes et le trifluorométhyle,

ou $Q_1$ représente le radical d'un naphtol qui peut porter 1, 2 ou 3 radicaux sulfo et, en plus, un radical amino, un radical phénylamino ou un radical alkylamino inférieur,

ou $Q_1$ représente un noyau benzénique qui porte un radical hydroxy et/ou un radical amino ou un radical phénylamino ou un radical alkylamino inférieur et qui peut porter un radical alkyle inférieur ou alcoxy inférieur ou un atome de chlore,

ou $Q_1$ représente un noyau naphtalénique qui porte un radical amino et qui porter 1, 2 ou 3 radicaux sulfo, ou représente un radical oxo-5 pyrazolyle, un radical oxo-3 pyrazolyle, un radical amino-5 pyrazolyle ou un radical amino-3 pyrazolyle, ces radicaux pyrazolyles portant chacun, en position 3 ou en position 5, un alkyle inférieur, un phényle, un chlorophényle, un méthylphényle, un carboxy ou un alcoxycarbonyle inférieur et, en position 1, un radical phényle ou un radical naphtyle, ces radicaux phényle et naphtyle étant liés au radical ou aux radicaux réactif(s) à l'égard des fibres et pouvant porter 1, 2 ou 3 substituants pris dans l'ensemble constitué par les alkyles inférieurs, les alcoxy inférieurs, le chlore, le brome, le trifluorométhyle, le sulfo, le carboxy, l'acétylamino, le benzoylamino, l'amino et le cyano,

ou $Q_1$ représente un radical de N-acéto-acétyl-aniline ou de N-acéto-acétyl-naphtylamine dont les noyaux aromatiques portent le radical ou les radicaux réactif(s) (à l'égard des fibres) de formule 4 et peuvent en outre porter 1, 2 ou 3 substituants pris dans l'ensemble constitué par les alkyles inférieurs, les alcoxy inférieurs, le chlore, le brome, le sulfo, le carboxy, l'acétylamino, le benzoylamino, le nitro et le cyano,

R représente un atome d'hydrogène ou un radical alkyle et

n désigne le nombre 1 ou le nombre 2.